# EUROPEAN PATENT APPLICATION

(11) **EP 4 778 715 A1**
(43) Date of publication of application: **22.07.2026**
(21) Application number: 24865568.0
(22) Date of filing: 13.09.2024
(51) Int. Cl.: B32B 3/30, B32B 3/00, B32B 27/00, B32B 33/00, B32B 38/06, C09D 11/00, C09D 11/037, E04F 13/07, E04F 13/18, E04F 15/10

(54) **METHOD FOR PRODUCING DECORATIVE SHEET, DECORATIVE SHEET, DECORATIVE MEMBER, AND INK FOR FORMING PATTERN PORTION FOR GLOSS MAT EXPRESSION**

(30) Priority: 13.09.2023 JP 2023148673; 06.11.2023 JP 2023189248; 07.11.2023 JP 2023190005; 09.02.2024 JP 2024018247
(71) Applicant: Toppan Holdings Inc., Tokyo 110-0016 (JP)
(72) Inventor: AKASHI Aya, Tokyo 110-0016 (JP); NOGUCHI Shota, Tokyo 110-0016 (JP); OGATA Yumeto, Tokyo 110-0016 (JP); TOGASAKI Hiromasa, Tokyo 110-0016 (JP)
(74) Representative: Hasegawa, Kan
(86) International application number: PCT/JP2024/032931
(87) International publication number: WO 2025/058069

(57) **Abstract**

There is provided a method for producing a decorative sheet having a texture close to the genuine material, expressing a favorable color tone close to the genuine material, and having excellent post-processing resistance for post-processing such as V-groove bending. As the method, a picture pattern layer (5) having a picture pattern, a transparent thermoplastic resin layer (6) containing a nano-sized nucleating agent, and a surface protective layer (7) are deposited on one surface of a colored thermoplastic resin layer (2) in this order; a pattern layer (8a) is formed using a colorless or light-colored ink and a material having light absorptivity with respect to light having a predetermined wavelength, which is higher than light absorptivity of the colored thermoplastic resin layer (2), by disposing, on the other surface of the colored thermoplastic resin layer, a gloss matte-expressing pattern part (3) as a region having light absorptivity in a state of being in register with the picture pattern; performing irradiation with irradiation light in which a power of light having the predetermined wavelength is larger than a power of light having other wavelengths; and pressing the surface protective layer (7) with an embossing plate for forming an embossed shape to form an embossed part (7a).

## Description

### Technical Field

The present disclosure relates to a method for producing a decorative sheet, a decorative sheet, a decorative member, and an ink for forming a gloss matte-expressing pattern part, and particularly to a method for producing a decorative sheet, a decorative sheet, and a decorative member.

### Background Art

A decorative sheet has been developed and improved in the process of development of housing construction as an industry. Originally, in housing, materials suitable for characteristics of a region, such as wood and stone, have been used, but with the development of the housing industry, industrialization has progressed, and there has been a transition from natural materials to artificial materials. In addition, in recent years, the concern that excessive use of high-grade wood or stone may lead to deforestation and environmental problems has also been a major factor in expanding the demand for the decorative sheet. For example, a decorative member in which a decorative sheet is bonded to a wooden substrate such as plywood, medium density fiberboard (MDF), and particleboard, a resin substrate, an inorganic non-combustible substrate, a metal substrate, or the like is widely used (for example, see PTL 1).

In addition, as a design of the decorative sheet, a surface of wood, stone, or the like is often imitated.

### Citation List

### Patent Literature

PTL 1: JP 5045180 B

### Summary of Invention

### Technical Problem

Meanwhile, in the decorative sheet, texture of the surface is likely to be flat as compared with real wood, stone, or the like. In real wood or stone, there is a difference in unevenness and a difference in texture depending on the location due to a difference in material, structure, and the like of the surface. In a portion where the texture is different, color tone also often differs, but such differences are not expressed in the decorative sheet, and the more expensive genuine material is markedly superior in terms of design.

In addition, application of a decorative plate using the decorative sheet is expanding, and improvement of post-processing resistance for bending processing such as V-groove bending is also required.

A first disclosure of the present invention has been made in view of the above-described points, and an object thereof is to provide a method for producing a decorative sheet, a decorative sheet, and a decorative member, in which texture close to the genuine material is exhibited, a favorable color tone close to the genuine material is expressed, and post-processing resistance for post-processing such as V-groove bending is excellent.

### Solution to Problem

In order to achieve the above-described object, one aspect of the first disclosure provides a method for producing a decorative sheet having an embossed shape in register with a picture pattern, the method including: depositing, on one surface of a colored resin layer, a picture pattern layer having the picture pattern, a transparent resin layer containing a nano-sized nucleating agent, and a surface protective layer in this order; forming a pattern layer using a colorless or light-colored ink and a material having light absorptivity with respect to light having a predetermined wavelength, which is higher than light absorptivity of the colored resin layer, by disposing, on the other surface of the colored resin layer, a region having light absorptivity in a state of being in register with the picture pattern; performing irradiation with irradiation light in which a power of light having the predetermined wavelength is larger than a power of light having other wavelengths, after forming the pattern layer; and pressing the surface protective layer with an embossing plate for forming the embossed shape, after performing the irradiation with the irradiation light.

In addition, another aspect of the first disclosure provides a decorative sheet including a colored resin layer, a picture pattern layer, a transparent resin layer, a surface protective layer, and a pattern layer, in which the picture pattern layer, the transparent resin layer, and the surface protective layer are deposited on one surface of the colored resin layer in this order, the pattern layer is deposited on the other surface of the colored resin layer, and is disposed to have a region having light absorptivity with respect to light having a predetermined wavelength, which is higher than light absorptivity of the colored resin layer, in a state of being in register with a picture pattern of the picture pattern layer, the transparent resin layer contains a nano-sized nucleating agent, the region having light absorptivity is formed from a material that contains a colorless or light-colored ink and a material having light absorptivity, and an embossed part is formed in the surface protective layer at a position overlapping the region having light absorptivity in a plan view.

Furthermore, still another aspect of the first disclosure provides a decorative member including a substrate and the decorative sheet according to the above-described aspect, which is provided on at least one surface side of the substrate, in which the substrate is any one of a wooden substrate, a resin substrate, a non-combustible substrate, or a metal substrate.

### Advantageous Effects of Invention

According to the aspect of the first disclosure, it is possible to provide a method for producing a decorative sheet, a decorative sheet, and a decorative member, in which texture close to the genuine material is exhibited, a favorable color tone close to the genuine material is expressed, and post-processing resistance for post-processing such as V-groove bending is excellent.

### Brief Description of Drawings

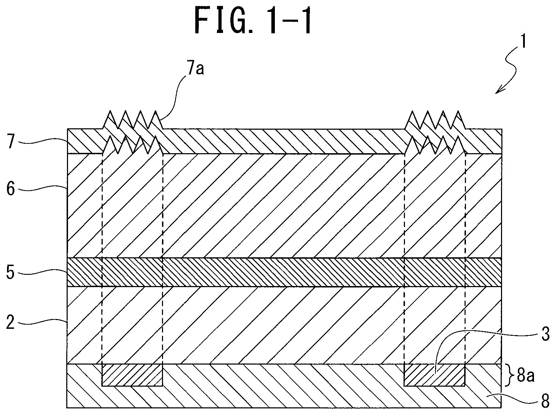

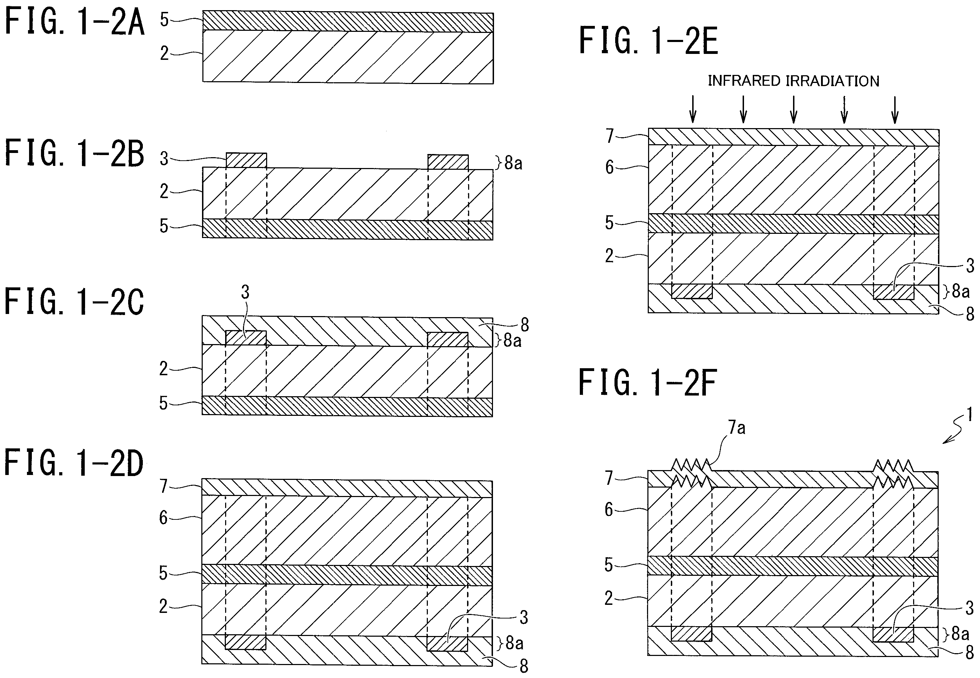

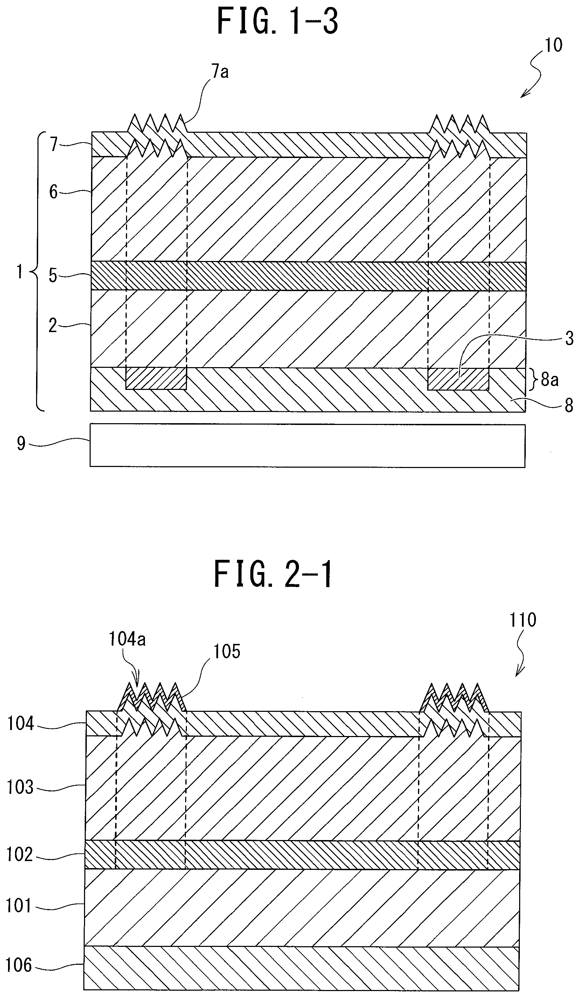

FIG. 1-1 is a cross-sectional view schematically illustrating an example of a decorative sheet according to an embodiment of the first disclosure;
FIG. 1-2 is a process diagram schematically illustrating an example of a production procedure of the decorative sheet according to the embodiment of the first disclosure; and
FIG. 1-3 is a cross-sectional view schematically illustrating an example of a decorative member according to another embodiment of the first disclosure.
FIG. 2-1 is a cross-sectional view schematically illustrating an example of a decorative sheet according to an embodiment of a second disclosure;
FIG. 2-2 is a process diagram schematically illustrating an example of a production procedure of the decorative sheet according to the embodiment of the second disclosure; and

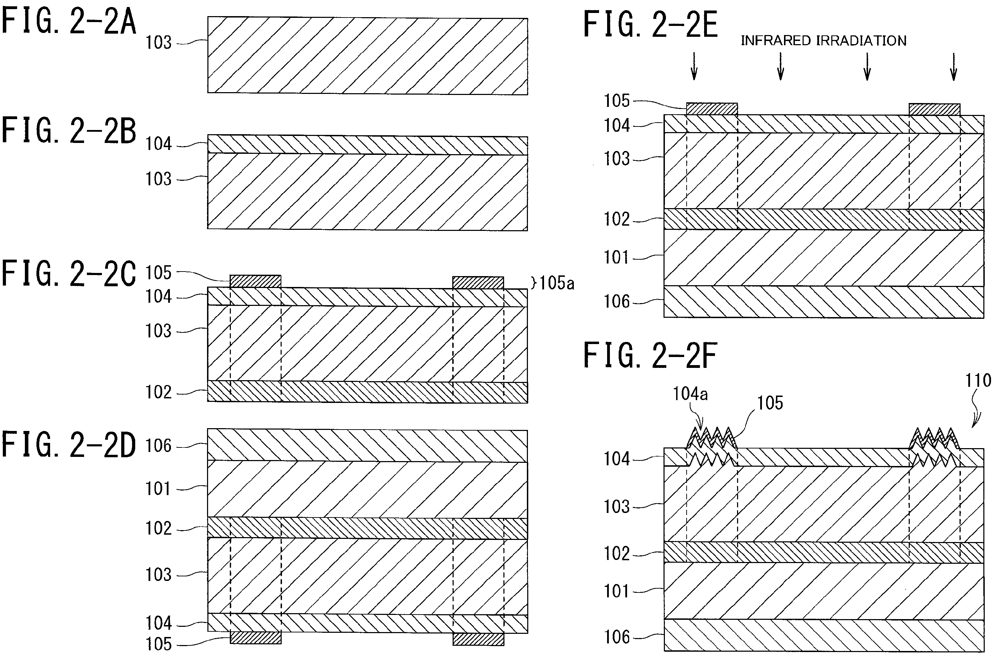

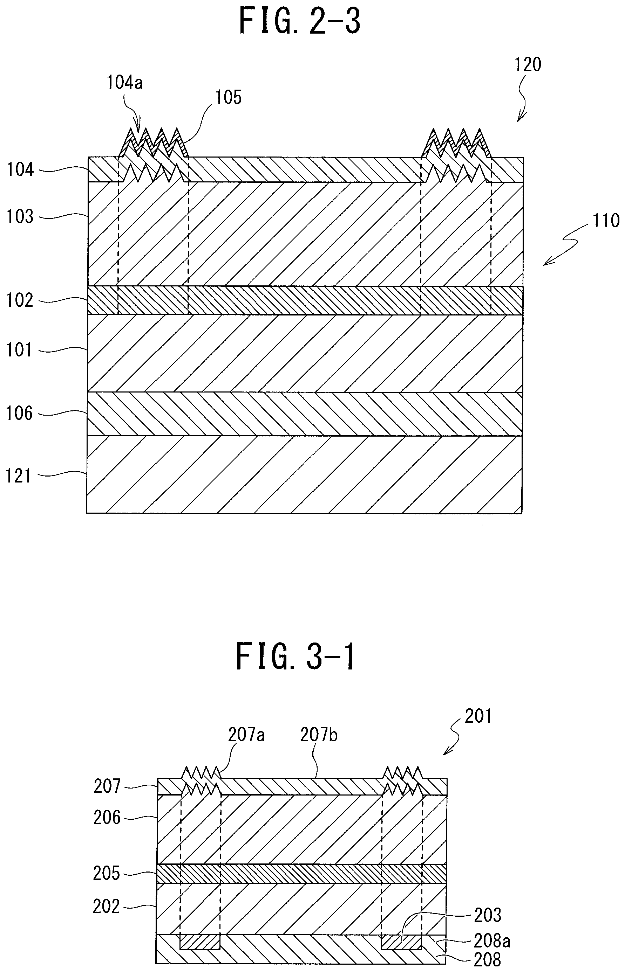

FIG. 2-3 is a cross-sectional view schematically illustrating an example of a decorative member to which the decorative sheet according to the embodiment of the second disclosure is applied.
FIG. 3-1 is a cross-sectional view schematically illustrating an example of a decorative sheet according to an embodiment of a third disclosure; and

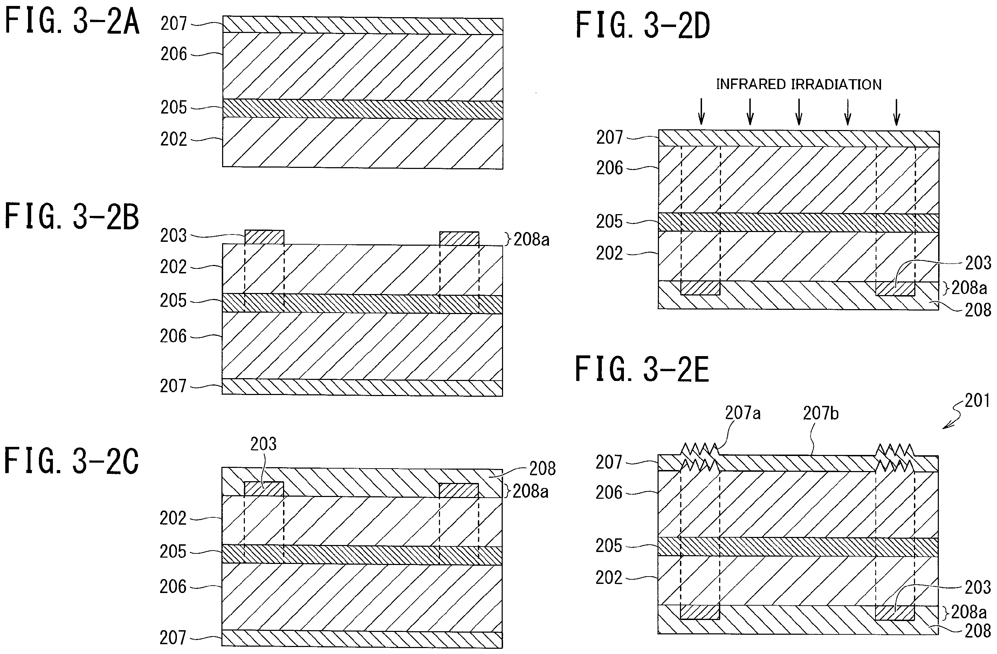

FIG. 3-2 is a process diagram schematically illustrating an example of a production procedure of the decorative sheet according to the embodiment of the third disclosure.

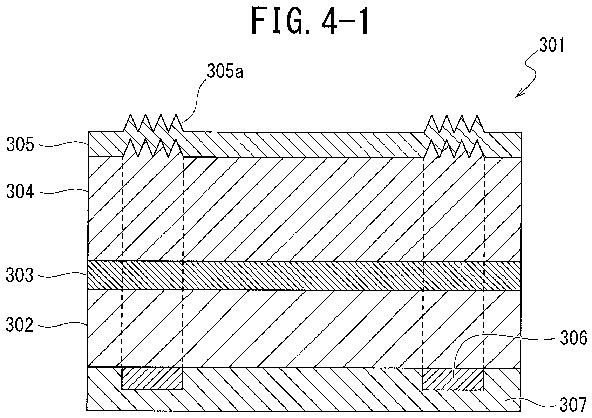

FIG. 4-1 is a cross-sectional view schematically illustrating an example of a decorative sheet according to an embodiment of a fourth disclosure;

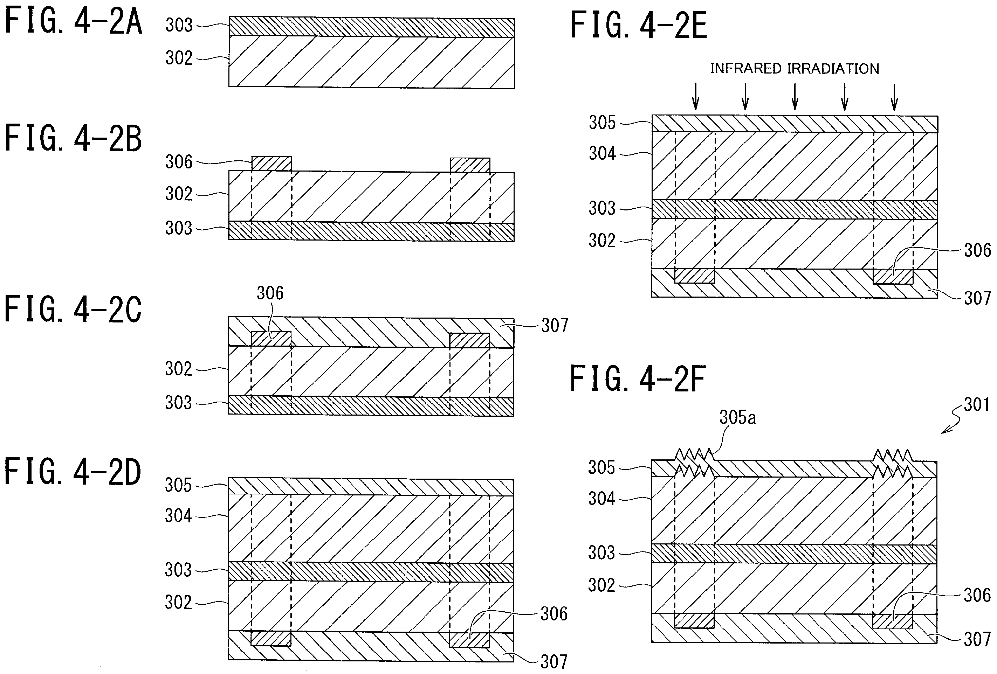

FIG. 4-2 is a process diagram illustrating an example of a production process of the decorative sheet according to the embodiment of the fourth disclosure; and

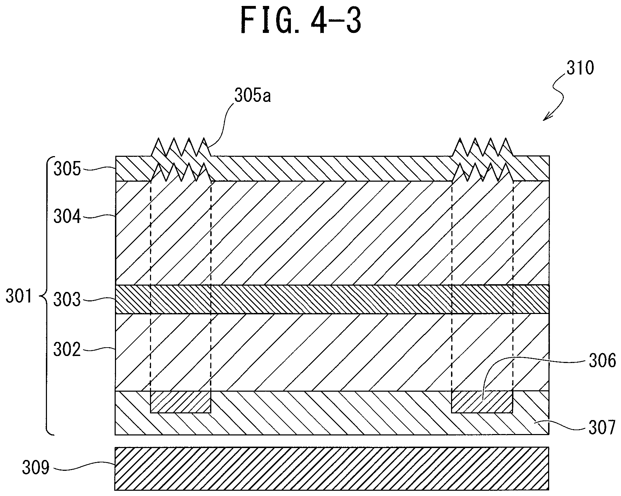

FIG. 4-3 is a cross-sectional view schematically illustrating an example of a decorative member according to the embodiment of the fourth disclosure.

### Description of Embodiments

Hereinafter, embodiments of the present technology will be described with reference to the drawings.

### <First disclosure>

The first disclosure of the present invention relates to a method for producing a decorative sheet, a decorative sheet, and a decorative member. In the embodiment of the first disclosure, a decorative sheet and a decorative member, which are used for floors or for fittings, will be described as examples, but the decorative sheet may be used for other parts.

Here, the drawings are schematic, and a relationship between a thickness and a planar dimension, a ratio of a thickness of each layer, and the like are different from actual ones. In addition, the embodiments shown below exemplify configurations for implementing the technical idea of the first disclosure, and the technical idea of the first disclosure is not intended to limit materials, shapes, structures, and the like of constituent components to the following embodiments. The technical idea of the first disclosure can be variously modified within the technical scope defined by the claims described in CLAIMS.

A method for producing a decorative sheet according to an embodiment of the first disclosure is a method for producing a decorative sheet having an embossed shape in register with a picture pattern, the method including: depositing, on one surface of a colored resin layer, a picture pattern layer having the picture pattern, a transparent resin layer containing a nano-sized nucleating agent, and a surface protective layer in this order; forming a pattern layer using a colorless or light-colored ink and a material having light absorptivity with respect to light having a predetermined wavelength, which is higher than light absorptivity of the colored resin layer, by disposing, on the other surface of the colored resin layer, a region having light absorptivity in a state of being in register with the picture pattern; performing irradiation with irradiation light in which a power of light having the predetermined wavelength is larger than a power of light having other wavelengths, after forming the pattern layer; and pressing the surface protective layer with an embossing plate for forming the embossed shape, after performing the irradiation with the irradiation light.

In addition, a decorative sheet according to another embodiment of the first disclosure is a decorative sheet including a colored resin layer, a picture pattern layer, a transparent resin layer, a surface protective layer, and a pattern layer, in which the picture pattern layer, the transparent resin layer, and the surface protective layer are deposited on one surface of the colored resin layer in this order, the pattern layer is deposited on the other surface of the colored resin layer, and is disposed to have a region having light absorptivity with respect to light having a predetermined wavelength, which is higher than light absorptivity of the colored resin layer, in a state of being in register with a picture pattern of the picture pattern layer, the transparent resin layer contains a nano-sized nucleating agent, the region having light absorptivity is formed from a material that contains a colorless or light-colored ink and a material having light absorptivity, and an embossed part is formed in the surface protective layer at a position overlapping the region having light absorptivity in a plan view.

Furthermore, a decorative member according to still another aspect of the first disclosure is a decorative member including a substrate and the decorative sheet according to the above-described aspect, which is provided on at least one surface side of the substrate, in which the substrate is any one of a wooden substrate, a resin substrate, a non-combustible substrate, or a metal substrate.

For example, as illustrated in FIG. 1-1, a decorative sheet 1 produced by the method for producing a decorative sheet according to the embodiment of the first disclosure is formed by depositing a colored thermoplastic resin layer (colored resin layer) 2, a picture pattern layer 5, a transparent thermoplastic resin layer (transparent resin layer) 6, and a surface protective layer 7 in this order, in which an embossed part (embossed shape) 7a is formed in the surface protective layer 7. In addition, on a surface of the colored thermoplastic resin layer 2 opposite to the picture pattern layer 5, a pattern layer 8a including a gloss matte-expressing pattern part 3, and a primer layer 8 are formed. As will be described in detail later, the gloss matte-expressing pattern part 3 is a region containing a predetermined material having light absorptivity with respect to light having a predetermined wavelength.

### [Colored thermoplastic resin layer]

Examples of the colored thermoplastic resin layer 2 serving as a substrate include polyvinyl chloride, polyethylene terephthalate, polybutylene terephthalate, polyamide, polyethylene, polypropylene, polycarbonate, polyethylene naphthalate, an ethylene-vinyl acetate copolymer, an ethylene-acrylic acid copolymer, an ethylene-acrylic acid ester copolymer, an ionomer, an acrylic acid ester, and a methacrylic acid ester. Among the above, a polyolefin-based resin can be preferably used from the viewpoint of environmental compatibility, processability, and cost. The grade or formulation of the resin can be selected in consideration of the ease of sheeting, printability, and suitability for bending.

As the colored thermoplastic resin layer 2, a hue can be appropriately selected as a base color of the picture pattern layer 5. The colored thermoplastic resin layer 2 can be colored, for example, by mixing and kneading a coloring agent such as a pigment when sheeting a thermoplastic resin. Alternatively, a colored layer can be provided as a solid ink layer before providing the gloss matte-expressing pattern part 3 by a coating technique or a printing technique.

### [Picture pattern layer]

The picture pattern layer 5 is a printed layer in which a picture pattern design is printed to impart design properties to the decorative sheet 1. As a method of forming the picture pattern layer 5, a known printing technique can be adopted. The printing technique is not particularly limited, but from the viewpoint of productivity and quality of a picture pattern, a gravure printing technique is preferable. In addition, for example, when the colored thermoplastic resin layer 2 can be prepared in a rolled state, printing for forming the picture pattern layer 5 can be performed by using a roll-to-roll printing device. In addition to the above, examples of the printing technique include an offset printing technique, a screen printing technique, a flexographic printing technique, an electrostatic printing technique, an ink jet printing technique, and a transfer printing technique from a transfer sheet. When such a printing technique is adopted, the picture pattern design of the picture pattern layer 5 can be formed by multicolor printing using ordinary process colors of yellow, red, blue, and black, and can also be formed by multicolor printing or the like using spot colors, which is carried out by preparing individual color plates constituting the picture pattern design.

In addition, the picture pattern design of the picture pattern layer 5 may be any picture pattern design in consideration of design properties for flooring materials or fittings. For example, in order to evoke the image of a stone floor such as marble, the picture pattern design can be a marble grain or the like. In addition, for example, as a wood-based picture pattern, various wood-grain picture patterns and cork picture patterns can be used as the picture pattern design. Furthermore, for example, in addition to picture pattern designs of natural materials, an artificial picture pattern design using these as a motif and an artificial picture pattern design such as a geometric pattern can also be used. In addition to the above, examples of the picture pattern design include a wood grain pattern composed of springwood regions and latewood regions and vessel portions in an annual ring cross section, a leather (leather grain) pattern, stone grain patterns and sand grain patterns on surfaces of stone materials such as marble, granite, and sandstone, tile patterns, brick patterns, fabric patterns, geometric figures, letters, symbols, abstract patterns, flower and plant patterns, landscapes, and characters.

A printing ink is a mixture of a solvent and solid contents such as a coloring agent and a binder resin.

Examples of the solvent include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, n-propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; and inorganic solvents such as water. The solvent may be used alone or in combination of two or more kinds thereof.

In addition, examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocotton), and a cellulose acetate resin. Examples of the chlorine-based resin include polyvinyl chloride-based resins such as polyvinyl chloride, chlorinated polyethylene, polyvinylidene chloride, ethylene-vinyl chloride copolymer, vinyl chloride-vinyl acetate copolymer, and vinyl chloride-vinyl acetate-(meth)acrylic copolymer; and polychloropropylene and chlorinated polypropylene. Here, (meth)acrylic refers to acrylic or methacrylic. The binder resin may be used alone or in combination of two or more kinds thereof.

In addition, examples of the coloring agent include inorganic pigments such as carbon black, iron black, titanium white (titanium oxide), antimony white, chrome yellow, titanium yellow, iron oxide red, cadmium red, ultramarine, and cobalt blue; and organic pigments such as quinacridone red, isoindolinone yellow, and phthalocyanine blue. The coloring agent may be used alone or in combination of two or more kinds thereof.

Here, the solvent contained in the printing ink eventually volatilizes. Therefore, the picture pattern layer 5 is mainly formed of solid contents such as the coloring agent and the binder resin.

In addition, the printing ink may contain a stabilizer, a plasticizer, a catalyst, a curing agent, and the like as other components. As the printing ink, an ink suitable for the printing technique may be adopted. In particular, it is preferable to select the printing ink in consideration of adhesiveness to the colored thermoplastic resin layer 2, printability, and weather resistance as flooring materials or fittings. A thickness of the picture pattern layer 5 can be appropriately adjusted in consideration of decorative properties required for the picture pattern layer 5, three-dimensional formability of the decorative sheet 1, and the like. The thickness of the picture pattern layer 5 is usually 1 µm or more and 1 mm or less, preferably 2 µm or more and 0.1 mm or less, and more preferably 2 µm or more and 50 µm or less.

In order to improve adhesiveness between the picture pattern layer 5 and the transparent thermoplastic resin layer 6, an adhesive layer (not illustrated) may be provided on a surface of the picture pattern layer 5 in contact with the transparent thermoplastic resin layer 6. By firmly adhering these layers, bending processability of following a curved surface or a right-angle surface can be imparted to the decorative sheet 1. A resin used in the adhesive layer (not illustrated) is not particularly limited. For example, a two-component curable urethane-based resin can be adopted. In addition, the transparent thermoplastic resin layer 6 may be adhered to the picture pattern layer 5 by using a urethane-based adhesive as an adhesive resin. For example, a coating device or a gravure printing device can be adopted for applying the resin used in the adhesive layer (not illustrated).

In addition, in order to suitably impart a design effect such as a sense of depth and brightness in the decorative sheet 1, a lustrous layer (not illustrated) may be provided between the picture pattern layer 5 and the transparent thermoplastic resin layer 6. The lustrous layer (not illustrated) preferably contains a lustrous pigment and a binder resin. Examples of the lustrous pigment include a pearl pigment and a metal pigment. In particular, the pearl pigment is preferable because the lustrous layer can suppress a decrease in light transmittance and thus does not impair visibility of the picture pattern layer 5.

The pearl pigment is a pigment capable of imparting a pearlescent luster. Examples thereof include a pigment in which a surface of a base particle is coated with a metal oxide. The base particle is preferably a flake-like particle such as mica. Examples of the metal oxide include oxides of metals such as titanium, iron, zirconium, silicon, aluminum, and cerium. The metal oxide may be used alone or in combination of two or more kinds thereof. Specific examples thereof include titanium mica, iron oxide-coated mica, iron oxide-coated titanium mica, Prussian blue-coated titanium mica, Prussian blue-iron oxide-coated titanium mica, chromium oxide-coated titanium mica, carmine-coated titanium mica, organic pigment-coated titanium mica, titanium oxide-coated mica, and titanium oxide-coated synthetic mica as oxide-coated mica; glass powder coated with titanium oxide, glass powder coated with iron oxide, and the like as oxide-coated glass powder; aluminum powder coated with titanium oxide and the like as oxide-coated metal particles; scale-like foil pieces of basic lead carbonate, lead hydrogen arsenate, bismuth oxychloride, and the like; and fish scale powder, shell pieces, and pearl pieces.

In addition, examples of the metal pigment include pigments composed of metals such as aluminum, brass, stainless steel, tin, zinc, copper, nickel, gold powder, and silver, and alloys of these metals. The metal pigment may be used alone or in combination of two or more kinds thereof.

From the viewpoint of imparting an excellent design effect, for example, when the lustrous layer is formed by gravure printing, an average particle diameter of the lustrous pigment is preferably 40 µm or less, and more preferably 30 µm or less. From the same viewpoint, a ratio of [average particle diameter of lustrous pigment/thickness of lustrous layer] is preferably 0.01 or more and 15 or less, and more preferably 0.5 or more and 10 or less. In the present specification, the "average particle diameter" is a value that can be obtained as a mass average value D50 in particle size distribution measurement by a laser light diffraction method.

In addition, examples of the binder resin include a thermoplastic resin and a cured substance of a curable resin composition, and from the viewpoint of durability, a cured substance of a curable resin composition is preferable. Examples of the cured substance of the curable resin composition include a cured substance of a thermosetting resin composition and a cured substance of an ionizing radiation-curable resin composition. From the viewpoint of interlayer adhesiveness, a cured substance of a thermosetting resin composition is preferable.

Examples of the thermosetting resin composition used in the lustrous layer include a polyester resin composition, an epoxy resin composition, a polyurethane resin composition, an amino alkyd resin composition, a melamine resin composition, a guanamine resin composition, a urea resin composition, and a thermosetting acrylic resin composition. Each of these thermosetting resin compositions contains monomers and/or prepolymers constituting each resin, a curing agent to be added as necessary, and the like. As the ionizing radiation-curable resin composition used in the lustrous layer, the same composition as an ionizing radiation-curable resin composition of the surface protective layer 7, which will be described later, can be used.

A contained amount of the lustrous pigment in the lustrous layer is preferably 10 parts by mass or more and 90 parts by mass or less, and more preferably 50 parts by mass or more and 80 parts by mass or less with respect to 100 parts by mass of the binder resin. By setting the contained amount of the lustrous pigment to 10 parts by mass or more, luster can be sufficiently imparted; and by setting the contained amount of the lustrous pigment to 90 parts by mass or less, it is possible to suppress impairment of the visibility of the picture pattern layer, which will be described later. From the same viewpoint, a thickness of the lustrous layer is preferably 1 µm or more and 30 µm or less, and more preferably 5 µm or more and 20 µm or less.

The lustrous layer can form any pattern depending on the design to be imparted. Examples thereof include wood grain patterns, leather patterns, stone grain patterns, sand grain patterns, tile-laying patterns, brick-laying patterns, fabric patterns, geometric figures, letter patterns, symbols, abstract patterns, flower-and-plant patterns, landscapes, and character figures. In addition, the pattern is preferably gradated in order to further enhance the design effect. The gradation may be formed from a size of halftone dots or a thickness of halftone dots, but it is preferable to form the gradation from sparseness and denseness of halftone dots (that is, to form the gradation from a density of halftone dots with halftone dots having a uniform size).

The lustrous layer can be formed by a general printing means such as gravure printing using a coating liquid containing the lustrous pigment and the binder resin. When the gradation of the lustrous layer is formed by the sparseness and denseness of the halftone dots, halftone dots of a printing plate may be formed by a frequency modulation (FM) screen.

### [Transparent thermoplastic resin layer]

The transparent thermoplastic resin layer 6 is a resin layer that protects the picture pattern layer 5 and imparts favorable surface properties so that, in terms of design, the decorative sheet 1 has a sense of thickness and depth and has improved weather resistance and abrasion resistance.

The transparent thermoplastic resin layer 6 is, for example, a resin layer containing a crystalline polypropylene resin 90% to 100% by weight as a main component, and a nucleating agent as a nano-sized additive. It is more preferable to contain the nano-sized additive in a vesicle state (nucleating agent-encapsulating vesicle), and in this case, the nucleating agent-encapsulating vesicle preferably has an average particle diameter of 1/2 or less of a wavelength of visible light. Specifically, since a wavelength range of visible light is 400 nm to 750 nm, the nucleating agent-encapsulating vesicle preferably has an average particle diameter of 375 nm or less. In addition, it is preferable that the nucleating agent-encapsulating vesicle has an outer membrane of a monolayer film. In the transparent thermoplastic resin layer 6, it is important that a haze value is 15% or less, preferably 10% or less, a tensile elastic modulus is 800 MPa or more and 2,000 MPa or less, and a tensile elongation at break is 200% or more by adjusting cooling conditions during film formation.

In addition, the crystalline polypropylene resin can be appropriately designed by selecting as appropriate from isotactic polypropylene and syndiotactic polypropylene having different pentad fractions, random polypropylene, block polypropylene, and mixtures thereof. More preferably, it is important that the crystalline polypropylene resin is a high-crystallinity polypropylene resin that is a propylene homopolymer (a homopolymer of propylene) having an isotactic pentad fraction (mmmm fraction) of 95% or more, more preferably 96% or more. A resin constituting the transparent thermoplastic resin layer 6, other than the crystalline polypropylene, can be appropriately selected depending on the purpose of the formulation as long as it does not significantly adversely affect the physical properties of the crystalline polypropylene. However, in order to maintain V-groove bending processability, a resin having favorable compatibility with the crystalline polypropylene resin constituting the transparent thermoplastic resin layer 6 is preferable.

A thickness of the transparent thermoplastic resin layer is preferably 20 µm or more and 250 µm or less.

The nano-sized nucleating agent refers to a nucleating agent that has been made into a nano-sized particle by a technique (nano-sizing treatment) for nano-sizing the nucleating agent. Since a particle diameter of the nano-sized nucleating agent is nano-sized and thus extremely small, the number of nucleating agents present per unit volume and a surface area thereof increase in inverse proportion to the cube of the particle diameter. As a result, a distance between nucleating agent particles is reduced. Therefore, when the nucleating agent is added to the polypropylene resin and crystal growth occurs from the surface of one nucleating agent particle, an end portion of the crystal that is growing immediately comes into contact with an end portion of the crystal that is growing from the surface of another nucleating agent particle adjacent to the nucleating agent particle, so that the end portions of the crystals hinder each other from growing, thereby stopping the growth of each crystal. As a result, an average particle diameter of spherulites in a crystalline region of the crystalline polypropylene resin can be made extremely small.

Accordingly, by containing the nano-sized nucleating agent in the transparent thermoplastic resin layer, it is possible to generate finer and more numerous crystal nuclei in the resin than when using the nucleating agent in the related art. As a result, a distance between the crystal nuclei in the crystalline region is shortened, the growth of individual crystals is suppressed, and the average particle diameter of the spherulites is successfully made extremely small. In the crystalline polypropylene resin, a haze value of 15% or less is achieved, which is excellent in high transparency.

Furthermore, by containing the nano-sized nucleating agent in a vesicle state, that is, as the nucleating agent-encapsulating vesicle, the nucleating agents are prevented from aggregating, thereby achieving high dispersibility in the resin material. In a resin composition, the outer membrane of the nucleating agent-encapsulating vesicle partially disintegrates to expose the nucleating agent, and in a crystallization process of the resin material, the spherulites are formed with the nano-sized nucleating agent particles serving as crystal nuclei.

In particular, since the nucleating agent-encapsulating vesicle obtained by a supercritical reverse phase evaporation method has an extremely small size, the average particle diameter of the spherulites in the crystalline region of the crystalline polypropylene resin can be made extremely small, and a degree of crystallinity of the crystalline region can be dramatically improved.

In the decorative sheet 1 according to the present embodiment, by containing the nano-sized nucleating agent, more preferably containing the nucleating agent-encapsulating vesicle in the transparent thermoplastic resin layer 6, the average particle diameter of the spherulites in the crystalline region of the crystalline polypropylene resin is made extremely small, thereby achieving excellent scratch resistance. In particular, by containing the nucleating agent-encapsulating vesicle, the nucleating agent is uniformly dispersed in the crystalline polypropylene resin, the degree of crystallinity of the crystalline polypropylene is controlled, and the hardness and toughness of the transparent thermoplastic resin layer are adjusted to be optimal, thereby achieving excellent scratch resistance and post-processing resistance with the tensile elastic modulus of 800 MPa or more and 2,000 MPa or less and the tensile elongation at break of 200% or more.

As the nano-sizing treatment, for example, a solid-phase method of mainly performing mechanical pulverization on an additive to obtain a nano-sized particle, a liquid-phase method of performing synthesis or crystallization of the nano-sized particle in an additive itself or in a solution in which the additive is dissolved, a gas-phase method of performing synthesis or crystallization of the nano-sized particle from a gas or vapor of an additive or formed from the additive, or the like can be used. Examples of a specific means for performing the solid-phase method include a ball mill, a bead mill, a rod mill, a colloid mill, a conical mill, a disc mill, a hammer mill, and a jet mill. Examples of the liquid-phase method include a crystallization method, a coprecipitation method, a sol-gel method, a liquid-phase reduction method, and a hydrothermal synthesis method. Examples of the gas-phase method include an electric furnace method, a chemical flame method, a laser method, and a thermal plasma method.

More specific methods of the nano-sizing treatment will be described. As a specific example of the solid-phase method, for example, a mixture of 100 g of isopropyl alcohol and 50 g of sodium 2,2'-methylenebis(4,6-di-tert-butylphenyl)phosphonate can be pulverized in a bead mill for 60 minutes using 30 µm stabilized zirconia beads to obtain nano-sized nucleating agent particles having an average particle diameter of approximately 100 nm to 150 nm. In addition, as a specific example of the crystallization method, for example, 50 g of sodium 2,2'-methylenebis(4,6-di-tert-butylphenyl)phosphonate can be dissolved in a mixed solvent consisting of 96 g of xylene, 72 g of isopropyl alcohol, and 24 g of water, and this solution can be brought into contact with a poor solvent such as ethanol in a microreactor to precipitate nano-sized nucleating agent particles having an average particle diameter of 1 nm to 150 nm.

In addition, the additive-encapsulating vesicle refers to a vesicular capsule having a membrane structure closed in the form of a spherical shell, and in particular, a vesicle containing a liquid phase inside is referred to as an additive-encapsulating vesicle. In the present embodiment, the additive is contained in the liquid phase. The additive-encapsulating vesicle has extremely high dispersibility because the particles do not aggregate due to repulsive interaction between the outer membranes. By the action, it is possible to uniformly disperse the additive in the resin composition constituting each resin layer. Examples of a technique (vesicle-forming treatment) of obtaining the nano-sized additive as the additive-encapsulating vesicle in the nano-sizing treatment include a Bangham method, an extrusion method, a hydration method, a surfactant dialysis method, a reverse phase evaporation method, a freeze-thaw method, and a supercritical reverse phase evaporation method. As a simple description of the vesicle-forming treatment, in the Bangham method, chloroform or a chloroform/methanol mixed solvent is charged into a container such as a flask, and then a phospholipid is put into the container and dissolved. Thereafter, the solvent is removed using an evaporator to form a thin film consisting of a lipid, a dispersion liquid of the additive is added, and the thin film is hydrated and dispersed with a vortex mixer to obtain a vesicle. The extrusion method is a method of obtaining a vesicle by preparing a phospholipid solution of a thin film and passing the solution through a filter instead of the mixer used as an external perturbation in the Bangham method. The hydration method is a preparation method substantially the same as the Bangham method, but is a method of obtaining a vesicle by gently stirring and dispersing without using a mixer. The reverse phase evaporation method is a method of obtaining a vesicle by dissolving a phospholipid in diethyl ether or chloroform, adding a solution containing an additive to form a W/O emulsion, removing the organic solvent from the emulsion under reduced pressure, and then adding water. The freeze-thaw method is a method of using cooling and heating as an external perturbation, and is a method of obtaining a vesicle by repeating the cooling and heating.

In particular, examples of a method of obtaining the additive-encapsulating vesicle having an outer membrane consisting of a monolayer film include a supercritical reverse phase evaporation method. The supercritical reverse phase evaporation method is a method of producing a capsule containing a target substance using carbon dioxide in a supercritical state or under a temperature condition or a pressure condition equal to or higher than a critical point of the carbon dioxide. The carbon dioxide in a supercritical state means carbon dioxide in a supercritical state at a temperature equal to or higher than a critical temperature (30.98°C) and at a pressure equal to or higher than a critical pressure (7.3773 ± 0.0030 MPa), and the carbon dioxide under a temperature condition or a pressure condition equal to or higher than a critical point means carbon dioxide under a condition in which only the critical temperature or only the critical pressure exceeds the critical condition.

As a specific vesicle-forming treatment by the supercritical reverse phase evaporation method, an aqueous phase is injected into a mixed fluid of supercritical carbon dioxide, a phospholipid as a dispersant, and an additive as a substance to be encapsulated, and the mixed fluid is stirred to form an emulsion of supercritical carbon dioxide and the aqueous phase. Thereafter, as the pressure is reduced, carbon dioxide expands and evaporates to cause a phase transition, and a nanocapsule in which the surface of the additive particle is covered with a monolayer film of phospholipid is generated. By using the supercritical reverse phase evaporation method, a monolayer film capsule can be easily generated unlike a conventional encapsulation method in which the dispersant forms a multilayer film on the surface of the additive particles, so that a capsule having a smaller diameter can be prepared. When it is desired to obtain a multilayer film capsule, it is possible to easily produce the capsule by injecting supercritical carbon dioxide into the mixed fluid of the phospholipid, the additive, and the aqueous phase. Examples of the phospholipid used in the preparation of the additive-encapsulating vesicle include glycerophospholipids such as phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, and hydrogenated soybean lecithin; and sphingophospholipids such as sphingomyelin, ceramide phosphoethanolamine, and ceramide phosphorylglycerol. The additive-encapsulating vesicle can achieve excellent compatibility with the resin material by having an outer membrane containing the phospholipid.

In addition, the additive-encapsulating vesicle may have an outer membrane containing a dispersant. Examples of the dispersant include a polymeric surfactant, a fatty acid metal salt, a silane coupling agent, a titanate coupling agent, a silicone, a wax, and a modified resin. Examples of the polymeric surfactant include an aliphatic polyvalent polycarboxylic acid, a polycarboxylic acid alkylamine, a polyacrylic acid, a polymethacrylic acid, a polyoxyethylene alkyl ether, and a sorbitan fatty acid ester. Examples of the fatty acid metal salt include salts of stearic acid, lauric acid, 12-hydroxystearic acid, montanic acid, behenic acid, ricinoleic acid, myristic acid, or the like, which are bonded with lithium, sodium, potassium, magnesium, calcium, barium, zinc, aluminum, or the like. Examples of the silane coupling agent include 3-methacryloxypropyltriethoxysilane, 3-methacryloxypropyltrimethoxysilane, vinyltriethoxysilane, vinyltrimethoxysilane, phenyltrimethoxysilane, 3-isocyanatopropyltriethoxysilane, and 2-(3,4-epoxycyclohexyl)ethyltrimethoxysilane. Examples of the titanate coupling agent include tetrakis[2,2-bis(allyloxymethyl)butoxy]titanium (IV), di-i-propoxytitanium diisostearate, (2-n-butoxycarbonylbenzoyloxy)tributoxytitanium, isopropyl triisostearoyl titanate, di-n-butoxy-bis(triethanolaminato)titanium, tetrakis(2-ethylhexyloxy) titanium, and di-i-propoxy-bis (acetylacetonato) titanium. Examples of the silicone include dimethyl silicone oil, methylphenyl silicone oil, methylhydrogen silicone oil, cyclic dimethyl silicone oil, alkyl-modified silicone oil, long-chain alkyl-modified silicone oil, and higher fatty acid-modified silicone oil, which are obtained by polymerizing an olefin or thermally decomposing a polyolefin and then further oxidizing or modifying the resulting product with maleic acid, sulfonic acid, carboxylic acid, rosin acid, or the like. Examples of the resin include polyolefins modified with maleic acid, sulfonic acid, carboxylic acid, rosin acid, or the like.

Hereinafter, the terms used in the above description will be briefly described.

The nucleating agent is an agent that is added to promote the generation of crystal nuclei during the crystallization of the resin or to use the nucleating agent itself as a crystal nucleus. There are a melt-type nucleating agent that melts in a resin of a substrate at the time of addition, precipitates again, and generates the crystal nuclei, and a non-melt-type nucleating agent that is added to a substrate and serves as the crystal nuclei with the same particle diameter without melting. Examples of a nucleating agent for the polypropylene resin include a phosphoric acid ester metal salt, a benzoic acid metal salt, a pimelic acid metal salt, a rosin metal salt, benzylidene sorbitol, quinacridone, cyanine blue, and talc. In particular, in the present embodiment, in order to obtain the effect of the nano-sizing treatment to the maximum extent, it is preferable to use a phosphoric acid ester metal salt, a benzoic acid metal salt, a pimelic acid metal salt, or a rosin metal salt, which is non-melt-type and is expected to have favorable transparency; but when transparency can be achieved by the nano-sizing treatment, colored quinacridone, cyanine blue, talc, and the like can also be used. In addition, the non-melt-type nucleating agent may be appropriately mixed with a melt-type benzylidene sorbitol and used.

The haze value is defined as a value that is obtained by expressing, in percentage, a value obtained by dividing, by the total light transmittance, a value (diffuse transmittance) obtained by subtracting an integral value (direct transmittance) of only a straight-line component of rays emitted from the other surface from an integral value (total light transmittance) of all rays emitted from the other surface, when light incident on one surface of an object is emitted from the other surface. As the haze value is smaller, the transparency is higher. The haze value is determined by an internal haze that is determined by an internal state of the object, such as a degree of crystallinity and a spherulite size in the crystalline region, and an external haze that is determined by a surface state of the object, such as the presence or absence of unevenness on an incidence surface and an emission surface. In the present embodiment, when simply referred to as a haze value, it means a value determined by the internal haze and the external haze.

The tensile elongation at break is a value representing an elongation at the time of breaking when a sample is pulled at a predetermined speed, and is a value obtained by expressing, in percentage, a value obtained by dividing, by a length (L0) of the sample before the test, a value obtained by subtracting the length (L0) of the sample before the test from a length (L) of the sample at the time of breaking. When the tensile elongation at break is smaller, the elongation is inferior, and cracks or whitening tend to occur during post-processing such as V-groove bending, so that the post-processing resistance is deteriorated. When the tensile elongation at break is larger, the elongation is favorable, and the post-processing can be easily performed, so that the post-processing resistance is excellent.

The isotactic pentad fraction (mmmm fraction) is a value calculated from a numerical value (electromagnetic wave absorption rate) obtained by causing the resin material constituting the above-described transparent thermoplastic resin layer 6 to resonate at a predetermined resonance frequency by a 13C-NMR measurement method (nuclear magnetic resonance measurement method) using carbon C (nuclide) having a mass number of 13, and defines an atomic arrangement, an electronic structure, and a molecular microstructure in the resin material. The isotactic pentad fraction of the polypropylene resin is a proportion of propylene units that form sequences of five successive units as determined by 13C-NMR, and is used as a measure of the degree of crystallinity or stereoregularity. Such an isotactic pentad fraction is one of important factors that primarily determine the scratch resistance of the surface, and in general, as the isotactic pentad fraction is higher, the degree of crystallinity of the sheet is higher, so that the scratch resistance is improved.

As a method of forming the transparent thermoplastic resin layer 6, a laminating technique can be adopted. In addition, for example, when the transparent thermoplastic resin layer 6 and the adhesive layer (not illustrated) are formed at the same time, a method of simultaneously extruding both layers by coextrusion can be adopted.

As described above, since the transparent thermoplastic resin layer 6 is formed by containing a nucleating agent vesicle in which a vesicle having an outer membrane of a monolayer film encapsulates the nano-sized nucleating agent, the scratch resistance and the abrasion resistance of the decorative sheet 1 can be improved.

### [Surface protective layer]

The surface protective layer 7 is a layer for imparting surface properties such as abrasion resistance to the decorative sheet 1. In addition, the surface protective layer 7 is also a layer for adjusting gloss of the surface of the decorative sheet 1. The surface protective layer 7 may be a single layer or a multilayer. For example, as the surface protective layer 7, two layers of a first surface protective layer (not illustrated) and a second surface protective layer (not illustrated) may be provided on the transparent thermoplastic resin layer 6 in this order. When the surface protective layer 7 consisting of the first surface protective layer (not illustrated) and the second surface protective layer (not illustrated) is provided, each layer may be coated and the resulting coating film may be cured, according to the type of a curable resin, using a known coating device, a thermal drying device, or an ionizing radiation irradiation device.

The surface protective layer 7 contains a curable resin as a main component. That is, it is preferable that the resin component of the surface protective layer 7 is substantially composed of a curable resin. The term "substantially" refers to, for example, 80 parts by mass or more when the entire resin is set to 100 parts by mass. The surface protective layer 7 may contain a weathering agent, a plasticizer, a stabilizer, a filler, a dispersant, a dye, a coloring agent such as a pigment, a solvent, or the like as necessary.

As a material for the surface protective layer 7, for example, an ionizing radiation-curable resin or a two-component curable urethane-based resin can be adopted. The ionizing radiation-curable resin is not particularly limited. For example, a transparent resin containing, as a main component, a prepolymer (including an oligomer) and/or a monomer that contains, in a molecule, a radically polymerizable double bond capable of polymerization and crosslinking reaction by irradiation with ionizing radiation, such as irradiation with infrared rays, ultraviolet rays, or electron beams, can be adopted. These prepolymers or monomers can be used alone or in combination of two or more thereof. Specific examples of the prepolymer or monomer include a compound having, in a molecule, a radically polymerizable unsaturated group such as a (meth)acryloyl group and a (meth)acryloyloxy group, or a cationically polymerizable functional group such as an epoxy group. In addition, a polyene/thiol-based prepolymer using a combination of a polyene and a polythiol is also preferable. Here, the (meth)acryloyl group refers to an acryloyl group or a methacryloyl group.

Examples of the prepolymer having a radically polymerizable unsaturated group include polyester (meth)acrylate, urethane (meth)acrylate, epoxy (meth)acrylate, melamine (meth)acrylate, triazine (meth)acrylate, and silicone (meth)acrylate. A molecular weight of these compounds is preferably approximately 250 to 100,000.

In addition, examples of the monomer having a radically polymerizable unsaturated group include, as a monofunctional monomer, methyl (meth)acrylate, 2-ethylhexyl (meth)acrylate, and phenoxyethyl (meth)acrylate. In addition, examples thereof include, as a polyfunctional monomer, diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth) acrylate.

In addition, examples of the prepolymer having a cationically polymerizable functional group include a prepolymer of an epoxy-based resin such as a bisphenol-type epoxy resin and a novolac-type epoxy compound, and a prepolymer of a vinyl ether-based resin such as a fatty acid-based vinyl ether and an aromatic-based vinyl ether.

In addition, examples of the polyene-based prepolymer include prepolymers in which allyl alcohol is added to both ends of a polyurethane formed from a diol and a diisocyanate. In addition, examples of the thiol-based prepolymer include polythiols such as trimethylolpropane trithioglycolate and pentaerythritol tetrathioglycolate.

As the ionizing radiation, for example, electromagnetic waves or charged particles having energy capable of causing a molecule in the ionizing radiation-curable resin (composition) to undergo a curing reaction can be adopted. Examples of the curing reaction include a crosslinking curing reaction. In addition, as an ultraviolet light source, for example, a light source such as an ultra-high pressure mercury lamp, a high pressure mercury lamp, a low pressure mercury lamp, a carbon arc lamp, a black light, and a metal halide lamp can be adopted. A wavelength of the ultraviolet rays is, for example, preferably 190 nm or more and 380 nm or less. In addition, as an electron beam source, for example, an electron beam accelerator such as a Cockcroft-Walton type, a Van de Graaff type, a resonant transformer type, an insulated core transformer type, a linear type, a dynamitron type, and a high-frequency type can be adopted. In particular, it is preferable that an electron having an energy of 100 keV or more and 1,000 keV or less (more preferably an electron having an energy of 100 keV or more and 300 keV or less) can be emitted.

The two-component curable urethane-based resin is not particularly limited. For example, a two-component curable urethane-based resin containing a polyol component having an OH group as a main agent and an isocyanate component as a curing agent component can be adopted. Examples of the polyol component having an OH group include acrylic polyol, polyester polyol, polyether polyol, and epoxy polyol. In addition, examples of the isocyanate component include tolylene diisocyanate, hexamethylene diisocyanate, and metaxylylene diisocyanate.

### [Embossed part]

An embossed part 7a having an uneven design is formed on the surface of the surface protective layer 7 in order to impart intended design properties. Examples of the uneven design include vessel grooves of a wood-grain board, surface irregularities of a stone slab (for example, a cleaved surface of granite), a cloth surface texture, a pear-skin finish, a sand-grain pattern, a hairline finish, and a pattern of numerous linear grooves. The embossed part 7a is provided such that the uneven design is in register with the picture pattern of the picture pattern layer 5. As a result, a favorable texture close to the genuine material of real wood or stone can be imparted to the decorative sheet 1.

As a method of forming the uneven design, for example, an embossing process can be adopted. A method of the embossing process is not particularly limited. For example, a known single sheet embossing machine or a rotary embossing machine can be adopted.

### [Gloss matte-expressing pattern part]

The gloss matte-expressing pattern part 3 is formed from a material having light absorptivity with respect to light having a predetermined wavelength, and is formed from, for example, a material having infrared-absorbing property. The gloss matte-expressing pattern part 3 is provided for easily forming the embossed part 7a at a desired position (a position in register with the picture pattern of the picture pattern layer 5), which will be described in detail below. That is, the gloss matte-expressing pattern part 3 is provided for easily imparting a texture close to the real wood or stone to the decorative sheet 1.

In the present embodiment, the gloss matte-expressing pattern part 3 is formed by using, for example, an ink containing a material having infrared-absorbing property, which is either a colorless transparent ink or an ink of a pale color that is relatively close to transparent (light-colored). Therefore, visibility of the gloss matte-expressing pattern part 3 as viewed from the surface protective layer 7 side is significantly reduced, and influence on the color tone of the picture pattern layer 5 (picture pattern design) and the colored thermoplastic resin layer 2 (base color) as viewed from the surface protective layer 7 side can be extremely reduced. As the colorless transparent or light-colored ink used in the gloss matte-expressing pattern part 3, for example, a urethane-based printing ink can be used.

Here, for example, when a dark color ink such as a black ink containing carbon black is used in the gloss matte-expressing pattern part, a color tone of the dark color ink may be slightly visible through the colored thermoplastic resin layer 2 and the picture pattern layer 5 as viewed from the surface protective layer 7 side. For example, when the base color that is the color tone of the colored thermoplastic resin layer 2 and the picture pattern design of the picture pattern layer 5 are close to a light color (for example, white), the dark color ink may be visible through the colored thermoplastic resin layer 2 and the picture pattern layer 5, and thus the gloss matte-expressing pattern part may be visible with a color tone different from the original color tone as viewed from the surface protective layer 7 side. Therefore, especially, it is difficult to express the base color and the picture pattern design with the light color as intended, and it may not be possible to sufficiently express a favorable color tone close to the genuine material of real wood or stone.

On the other hand, in the decorative sheet 1 according to the present embodiment, the gloss matte-expressing pattern part 3 that is a region containing the material having infrared-absorbing property is formed by using a colorless transparent or light-colored ink. That is, the gloss matte-expressing pattern part 3 does not contain a dark-colored ink. As a result, even when a light-colored base color or picture pattern design close to white, the gloss matte-expressing pattern part 3 can be visible with the original color tone, and thus the intended color tone can be suitably expressed. Therefore, the decorative sheet 1 according to the present embodiment can express a favorable color tone close to the genuine material of real wood or stone.

As the material having infrared-absorbing property in the gloss matte-expressing pattern part 3, at least one inorganic material such as tin-doped indium oxide (ITO), antimony-doped tin oxide (ATO), lanthanum hexaboride (LaB6), and cesium-doped tungsten oxide can be used. In addition, an organic material such as a near-infrared absorption material, an infrared absorption material, and a phthalocyanine-based material, or an existing material having infrared-absorbing property can be used.

The gloss matte-expressing pattern part 3 is disposed at a position in register with the picture pattern of the picture pattern layer 5. For example, when the picture pattern layer 5 has a wood grain pattern, the gloss matte-expressing pattern part 3 is formed at a position overlapping the wood-grain board vessel groove of the picture pattern layer 5 in a plan view. The term "in register with" as used herein means that the gloss matte-expressing pattern part 3 and the picture pattern of the picture pattern layer 5 are formed at a position overlapping each other in a plan view.

A thickness of the gloss matte-expressing pattern part 3 may be a thickness at which the transparent thermoplastic resin layer 6 and the surface protective layer 7 can be softened to a degree that an uneven shape can be sufficiently formed in the surface protective layer 7 during the embossing process described later.

As described above, the gloss matte-expressing pattern part 3 is formed from a material having light absorptivity with respect to light having a predetermined wavelength. Examples of the light having a predetermined wavelength include ultraviolet rays, visible rays, electron beams, X-rays, and ion beams, in addition to the above-described infrared rays.

### [Pattern layer]

The pattern layer 8a is formed on a surface of the colored thermoplastic resin layer 2 opposite to the picture pattern layer 5. The pattern layer 8a is composed of, for example, only the gloss matte-expressing pattern part 3 formed from the material having light absorptivity with respect to infrared rays.

### [Primer layer]

The primer layer 8 is a layer serving as a base layer, and is a layer for improving adhesiveness and corrosion resistance with a substrate (not illustrated) to which the decorative sheet 1 is attached. The primer layer 8 is provided on the surface of the colored thermoplastic resin layer 2 opposite to the picture pattern layer 5 to cover the surface of the gloss matte-expressing pattern part 3 constituting the pattern layer 8a, and the primer layer 8 is configured to include the gloss matte-expressing pattern part 3.

The primer layer 8 is formed by using, for example, a polyester-based resin, an organic additive, a pigment, and the like. A rust preventive pigment may be blended in the primer layer 8 for the purpose of improving the corrosion resistance. A thickness of the primer layer 8 is, for example, in a range of 1 µm or more and 10 µm or less.

### [Method for producing decorative sheet]

Next, an example of the method for producing the decorative sheet according to the present embodiment will be described with reference to FIG. 1-2.

First, the colored thermoplastic resin layer 2 is formed. For example, the colored thermoplastic resin layer 2 is formed using a polybutylene terephthalate (PBT) resin at a thickness of 50 µm (FIG. 1-2A).

Next, the picture pattern layer 5 is printed on one surface of the colored thermoplastic resin layer 2 using, for example, a urethane-based printing ink.

Next, the gloss matte-expressing pattern part 3 that is a region containing the material having light absorptivity with respect to light having a predetermined wavelength is formed on the surface of the colored thermoplastic resin layer 2 opposite to the picture pattern layer 5 to form the pattern layer 8a. That is, a step of disposing the gloss matte-expressing pattern part 3 that is a region containing the material having an infrared-absorbing property is performed in a state of being in register with the picture pattern of the picture pattern layer 5 to form the pattern layer 8a. For example, the gloss matte-expressing pattern part 3 is formed at a predetermined position in register with the picture pattern of the picture pattern layer 5 using the colorless transparent or light-colored ink containing the material having infrared-absorbing property (FIG. 1-2B).

Next, the primer layer 8 containing, for example, a polyester-based resin is deposited on the colored thermoplastic resin layer 2 including the gloss matte-expressing pattern part 3 to fill a gap between the gloss matte-expressing pattern parts 3, thereby covering an upper surface thereof (FIG. 1-2C).

Next, a polypropylene (PP) resin having a thickness of 38 µm is deposited as the transparent thermoplastic resin layer 6 on the surface of the picture pattern layer 5 opposite to the colored thermoplastic resin layer 2. The PP resin contains, as the nano-sized nucleating agent, a nucleating agent-encapsulating vesicle having an outer membrane that contains a phospholipid encapsulating a phosphoric acid ester metal salt-based nucleating agent.

Next, the surface protective layer 7 is deposited on the transparent thermoplastic resin layer 6. As a result, the picture pattern layer 5, the transparent thermoplastic resin layer 6, and the surface protective layer 7 are deposited in this order on one surface of the colored thermoplastic resin layer 2.

Subsequently, the entire deposited body illustrated in FIG. 1-2D, in which these layers have been deposited, is irradiated with infrared rays (irradiation light) (FIG. 1-2E), and an embossing plate such as an embossing roll is pressed against the surface of the surface protective layer 7 immediately after the infrared irradiation (FIG. 1-2F). As a result, the embossed part 7a is formed, and the decorative sheet 1 is formed. That is, a step of performing irradiation with irradiation light (for example, infrared rays) in which a power of the light having the predetermined wavelength is larger than a power of light having other wavelengths, and then a step of pressing the surface protective layer 7 with an embossing plate for forming an embossed shape are performed.

Here, the gloss matte-expressing pattern part 3 is formed from the colorless transparent or light-colored ink having an infrared-absorbing characteristic. Therefore, when the deposited body in which the primer layer 8, the colored thermoplastic resin layer 2, the picture pattern layer 5, the transparent thermoplastic resin layer 6, and the surface protective layer 7 are deposited in this order is irradiated with infrared rays, in a portion of the surface protective layer 7 overlapping the gloss matte-expressing pattern part 3 in a plan view, the transparent thermoplastic resin layer 6 and the surface protective layer 7 are more likely to be softened than in a portion that does not overlap with the gloss matte-expressing pattern part 3. That is, in the transparent thermoplastic resin layer 6 and the surface protective layer 7 after the infrared irradiation, there are a portion that is likely to be softened and a portion that is difficult to be softened. Therefore, when the transparent thermoplastic resin layer 6 and the surface protective layer 7 are pressed with the embossing plate in this state, the softened portion is likely to form an unevenness, and the portion that is difficult to be softened is unlikely to form an unevenness. Accordingly, the unevenness is likely to be formed in the softened portion of the transparent thermoplastic resin layer 6 and the surface protective layer 7, that is, a portion overlapping the gloss matte-expressing pattern part 3 in a plan view. As a result, the embossed part 7a having an uneven shape in register with the gloss matte-expressing pattern part 3 is likely to be formed only at a position where the transparent thermoplastic resin layer 6 and the surface protective layer 7 overlap the gloss matte-expressing pattern part 3 in a plan view. Furthermore, by using the colorless transparent or light-colored ink in the gloss matte-expressing pattern part 3, the influence on the picture pattern design of the picture pattern layer 5 and the color tone of the base color of the colored thermoplastic resin layer 2 is extremely small.

In this manner, the embossed part 7a can be formed at a position in register with the picture pattern layer 5, that is, the embossed part 7a in register with the picture pattern layer 5 can be easily formed without performing a high-accuracy positioning operation. Therefore, it is possible to provide a decorative sheet 1 having a texture close to the genuine material, expressing a favorable color tone close to the genuine material, and having excellent design properties.

A timing at which the transparent thermoplastic resin layer 6 and the surface protective layer 7 are pressed with the embossing plate after the infrared irradiation is not limited to immediately after the infrared irradiation, and may be any timing at which the surfaces of the transparent thermoplastic resin layer 6 and the surface protective layer 7 are pressed with the embossing plate to selectively form an uneven shape in a portion softened by the infrared irradiation.

In addition, other steps may be included between the step of forming the surface protective layer 7 and the step of performing the infrared irradiation; and the infrared irradiation need only be performed in a state in which the transparent thermoplastic resin layer 6 and the surface protective layer 7 are formed.

As described above, according to the method for producing the decorative sheet 1 according to the present embodiment, the embossing plate is pressed against the deposited body in which the layers have been deposited, after the infrared irradiation, so that the portion overlapping the gloss matte-expressing pattern part 3 in a plan view can be strongly subjected to the embossing process. That is, the embossed part 7a can be easily formed at a desired position without performing high-accuracy positioning or the like of the region to be pressed with the embossing plate. As a result, it is possible to easily obtain a decorative sheet having excellent design properties.

In addition, since the gloss matte-expressing pattern part 3 is provided in a lower layer of the colored thermoplastic resin layer 2, the visibility of the gloss matte-expressing pattern part 3 is low when the decorative sheet 1 is viewed from the surface protective layer 7 side. As a result, although the colorless transparent or light-colored ink having an infrared-absorbing characteristic is used in the gloss matte-expressing pattern part 3, the visibility of the gloss matte-expressing pattern part 3 can be further suppressed when the decorative sheet 1 is viewed from the surface protective layer 7 side. Therefore, even when a dark-colored pattern is not used as the picture pattern layer 5, the visibility of the gloss matte-expressing pattern part 3 can be significantly suppressed; and as a result, it is possible to adopt a light-colored pattern as the picture pattern layer 5, and it is possible to significantly suppress the restriction on the pattern expression by the picture pattern layer 5 caused by providing the gloss matte-expressing pattern part 3.

In addition, the colored thermoplastic resin layer 2 and the picture pattern layer 5, and further, the transparent thermoplastic resin layer 6 and the surface protective layer 7 are deposited on the pattern layer 8a including the gloss matte-expressing pattern part 3 that is formed by using the colorless transparent or light-colored ink containing the material having an infrared-absorbing characteristic, and the embossed part 7a is formed at a position overlapping the gloss matte-expressing pattern part 3 in a plan view of the surface protective layer 7. Therefore, the visibility of the gloss matte-expressing pattern part 3 can be further reduced, and the influence on the appearance of the decorative sheet 1 of the gloss matte-expressing pattern part 3 that is useful in the production process of the decorative sheet 1 can be suppressed to a very great extent, so that a decorative sheet 1 having high design properties, in which the picture pattern of the picture pattern layer 5 and the embossed part 7a are in register with each other, can be obtained.

Furthermore, since the gloss matte-expressing pattern part 3 is provided in register with the picture pattern of the picture pattern layer 5, an uneven portion in register with the picture pattern of the picture pattern layer 5 can be formed, that is, a gloss matte effect in register with the picture pattern can be easily exhibited.

In addition, since the gloss matte expression is performed by providing the unevenness, it is possible to suppress occurrence of gloss matte pattern peeling or the like. Therefore, for example, a gloss matte expression in register can be achieved in flooring materials and the like.

### [Effects of embodiments of first disclosure]

(1) The method for producing a decorative sheet according to the present embodiment includes: a step of depositing, on one surface of the colored thermoplastic resin layer 2, the picture pattern layer 5 having a picture pattern, the transparent thermoplastic resin layer 6 containing the nano-sized nucleating agent, and the surface protective layer 7 in this order; a step of forming the pattern layer 8a using the colorless or light-colored ink and the material having light absorptivity with respect to light having a predetermined wavelength, which is higher than light absorptivity of the colored thermoplastic resin layer 2, by disposing, on the other surface of the colored thermoplastic resin layer 2, a region having light absorptivity with respect to the light having a predetermined wavelength, which is higher than the light absorptivity of the colored thermoplastic resin layer 2, in a state of being in register with the picture pattern; a step of performing irradiation with irradiation light in which a power of the light having the predetermined wavelength is larger than a power of light having other wavelengths, after the step of forming the pattern layer 8a; and pressing the surface protective layer 7 with the embossing plate for forming an embossed shape, after the step of performing the irradiation with the irradiation light.

In this manner, the embossed part 7a can be provided at a position in the decorative sheet 1 in register with the picture pattern layer 5, and the color tone of the colored thermoplastic resin layer 2 and the picture pattern layer 5 (the base color and the color tone of the picture pattern) is hardly affected by the color tone of the gloss matte-expressing pattern part 3. As a result, it is possible to obtain a decorative sheet 1 having a texture closer to the genuine material, expressing a more favorable color tone close to the genuine material, and having excellent design properties.

In addition, since the transparent thermoplastic resin layer 6 is formed by containing the nucleating agent, the transparent thermoplastic resin layer 6 having a high tensile elongation at break and a high degree of crystallinity can be obtained. As a result, it is possible to obtain the decorative sheet 1 having excellent post-processing resistance in which cracks, whitening, or the like are suppressed in post-processing such as V-groove bending, and it is possible to obtain the decorative sheet 1 having excellent scratch resistance by improving the degree of crystallinity of the decorative sheet 1.

(2) As the material having light absorptivity with respect to infrared rays, which is contained in the gloss matte-expressing pattern part 3, at least one inorganic material of tin-doped indium oxide, antimony-doped tin oxide, lanthanum hexaboride, and cesium-doped tungsten oxide is used. Therefore, in the portion overlapping the gloss matte-expressing pattern part 3, the transparent thermoplastic resin layer 6 and the surface protective layer 7 can be easily softened by the infrared irradiation, and the portion overlapping the gloss matte-expressing pattern part 3 can be easily subjected to the embossing process.

(3) In addition, the decorative sheet according to the present embodiment includes the colored thermoplastic resin layer 2, the picture pattern layer 5, the transparent thermoplastic resin layer 6, the surface protective layer 7, and the pattern layer 8a, in which the picture pattern layer 5, the transparent thermoplastic resin layer 6, and the surface protective layer 7 are deposited on one surface of the colored thermoplastic resin layer 2 in this order, the pattern layer 8a is deposited on the other surface of the colored thermoplastic resin layer 2, and is disposed to have the gloss matte-expressing pattern part 3 that is a region having light absorptivity with respect to light having a predetermined wavelength, which is higher than light absorptivity of the colored thermoplastic resin layer 2, in a state of being in register with a picture pattern of the picture pattern layer 5, the transparent thermoplastic resin layer 6 contains the nano-sized nucleating agent, the region having light absorptivity is formed from a material that contains the colorless or light-colored ink and the material having light absorptivity, and the embossed part 7a is formed in the surface protective layer 7 at a position overlapping the region having light absorptivity in a plan view.

In this manner, the embossed part 7a can be provided at a position in the decorative sheet 1 in register with the picture pattern layer 5, and the color tone of the colored thermoplastic resin layer 2 and the picture pattern layer 5 (the base color and the color tone of the picture pattern) is hardly affected by the color tone of the gloss matte-expressing pattern part 3 formed by using the colorless or light-colored ink. As a result, it is possible to obtain a decorative sheet having a texture closer to the genuine material, expressing a more favorable color tone close to the genuine material, and having excellent design properties.

### [Modification example of first disclosure]

(1) In the above-described embodiment of the first disclosure, a case has been described in which the material having an infrared-absorbing characteristic is used in the gloss matte-expressing pattern part 3, and the transparent thermoplastic resin layer 6 and the surface protective layer 7 are partially softened by performing the infrared irradiation, but the first disclosure is not limited thereto. As the material for the gloss matte-expressing pattern part 3, a material containing a component having light absorptivity with respect to light having a predetermined wavelength, other than infrared rays, and containing a colorless or light-colored ink may be used, and a light source for emitting the light having the predetermined wavelength may be used for partially softening the transparent thermoplastic resin layer 6 and the surface protective layer 7.
(2) In addition, in the above-described embodiment of the first disclosure, the pattern layer 8a and the primer layer 8 are formed on the other surface of the colored thermoplastic resin layer 2 after the picture pattern layer 5 is deposited on one surface of the colored thermoplastic resin layer 2, and then the transparent thermoplastic resin layer 6 and the surface protective layer 7 are formed on the surface of the picture pattern layer 5 opposite to the colored thermoplastic resin layer 2, but the first disclosure is not limited thereto. For example, a step of continuously forming the picture pattern layer 5, the transparent thermoplastic resin layer 6, and the surface protective layer 7 on one surface of the colored thermoplastic resin layer 2 may be performed.
(3) In addition, as illustrated in FIG. 1-3, the decorative sheet 1 according to the above-described embodiment of the first disclosure may be bonded to a substrate 9 that is a substrate for a decorative member to form a decorative member 10. In the decorative member 10, the decorative sheet 1 may be provided on at least one surface side of the substrate 9, or may be provided on both surfaces thereof.

### [Substrate]

As the substrate 9, a wooden substrate or a metal substrate can be used. As the wooden substrate, for example, wood veneer, plywood, laminated wood, particleboard, medium-density fiberboard, or hardboard can be adopted. In addition, as the metal substrate, a steel plate or an aluminum plate can be adopted. In addition, the substrate 9 may be a resin such as a plastic resin or a composite material thereof. That is, the substrate 9 may be a resin substrate. In addition, the substrate 9 may be, for example, a non-combustible steel plate or a non-combustible substrate formed of a non-combustible material prescribed in Notification No. 1400 of the Ministry of Construction.

As described above, the decorative member 10 includes the substrate 9 and the decorative sheet 1 provided on at least one surface side of the substrate 9. In addition, as the substrate 9, any one of the wooden substrate, the resin substrate, the non-combustible substrate, or the metal substrate can be used.

### Examples

The first disclosure will be described in more detail with Examples and Comparative Examples. The first disclosure is not limited to the following examples.

### (Example 1)

A picture pattern layer 5 containing a urethane-based printing ink, a transparent thermoplastic resin layer 6 containing a petrochemical polypropylene (PP) layer having a thickness of 80 µm, and a surface protective layer 7 formed of a resin composition containing an acrylic UV curable resin as a main component were deposited in this order on one surface of a colored thermoplastic resin layer 2 including a polyethylene (PE) layer having a thickness of 55 µm. An adhesive layer (not illustrated) formed of an adhesive resin containing a urethane-based adhesive was provided between the picture pattern layer 5 and the transparent thermoplastic resin layer 6 to adhere the picture pattern layer 5 and the transparent thermoplastic resin layer 6.

In addition, a transparent ink including a urethane-based printing ink containing an infrared absorption material was printed in a patterned manner on the other surface of the colored thermoplastic resin layer 2 (surface opposite to the picture pattern layer 5) to form a gloss matte-expressing pattern part 3, thereby forming a pattern layer 8a including the gloss matte-expressing pattern part 3. Furthermore, a primer layer 8 was formed on the colored thermoplastic resin layer 2 including the pattern layer 8a to obtain a deposited body. As a result, the gloss matte-expressing pattern part 3 containing the infrared absorption material, and a non-gloss matte-expressing pattern part not containing the infrared absorption material including the primer layer 8 were equivalent to being formed on the surface of the colored thermoplastic resin layer 2 opposite to the picture pattern layer 5.

Next, a transparent thermoplastic resin layer 6 was produced by the following procedure.

A resin obtained by adding 500 ppm of a hindered phenol-based antioxidant (IRGANOX 1010, manufactured by BASF Japan Ltd.), 2000 ppm of a benzotriazole-based ultraviolet absorber (TINUVIN 328, manufactured by BASF Japan Ltd.), 2000 ppm of a hindered amine-based light stabilizer (KIMASORB 944, manufactured by BASF Japan Ltd.), and 1000 ppm of sodium 2,2'-methylenebis(4,6-di-tert-butylphenyl)phosphonate subjected to a solid-phase method for nanosizing to a high-crystalline homopolypropylene resin having an isotactic pentad fraction of 97.8%, a melt flow rate (MFR) of 15 g/10 min (230°C), and a molecular weight distribution MWD (Mw/Mn) of 2.3 was extruded using a melt extruder to form a transparent resin sheet made of a high-crystalline polypropylene having a thickness of 100 µm and used as the transparent thermoplastic resin layer 6, and then a corona treatment was carried out on both surfaces of the formed transparent resin sheet to set a surface wetting tension to 40 dyn/cm or more. A haze value of the crystalline polypropylene resin of the transparent resin sheet formed by extrusion molding was 8.5% by controlling the cooling conditions during the extrusion molding.

The transparent resin sheet was laminated on the picture pattern layer 5 to form the transparent thermoplastic resin layer 6.

After forming the primer layer 8, the deposited body was heated with an infrared heater, and then an embossing roll was pressed against the surface protective layer 7 to form the embossed part 7a, thereby obtaining the decorative sheet illustrated in FIG. 1-1.

### (Comparative Example 1)

A decorative sheet was produced by the same procedure as in Example 1, except that the transparent thermoplastic resin layer was produced without adding the nucleating agent in the decorative sheet of Example 1.

### (Comparative Example 2)

A decorative sheet was produced by the same procedure as in Comparative Example 1, except that in the decorative sheet of Comparative Example 1, a step of carrying out gloss matte printing in register with the picture pattern of the picture pattern layer on the surface protective layer and heating with an infrared heater was not performed.

### (Reference Example 1)

A decorative sheet was produced by the same procedure as in Comparative Example 2, except that in the decorative sheet of Comparative Example 2, the surface protective layer contained a thermosetting resin and the gloss matte printing was not carried out.

### [Evaluation]

The decorative sheets of Examples 1, Comparative Examples 1 and 2, and Reference Example 1 were evaluated for design properties, pencil hardness, Hoffman scratch test, sliding property, and V-groove bending processability, respectively. The evaluation standards are as follows.

### (Design properties (register with gloss matte))

For each decorative sheet, it was visually observed whether or not the embossed part or the gloss matte printing portion was in register with the picture pattern. A case where both were matched is indicated as "∘"; and a case where both were not matched is indicated as "×".

### (Pencil hardness)

The decorative member in which the decorative sheet was bonded to medium density fiberboard (MDF) was subjected to a pencil hardness test using pencils having different hardnesses, and a damage (chipping) generated on the surface (surface protective layer) was checked to evaluate a surface hardness. A case where the damage was generated on the surface after the pencil hardness test was performed using a pencil having a hardness of 4B or more is indicated as "⊚"; a case where the damage was generated on the surface after the pencil hardness test was performed using a pencil having a hardness of 5B or more is indicated as "∘"; and a case where the damage was generated on the surface after the pencil hardness test was performed using a pencil having a hardness of 6B or less is indicated as "×".

As the pencil hardness test, a pencil scratching test was performed. The pencil scratching test was performed in accordance with former JIS K 5400.

### (Hoffman scratch test)

The surface of the decorative sheet was subjected to a scratch test using a Hoffman scratch hardness tester (manufactured by GARDCO), a scratch blade (cylindrical blade of Φ7) was set to be in contact at an angle of 45 degrees, and the test machine was moved on the decorative sheet to check for scratches.

The sample surface was scratched by gradually increasing a load (weight) in increments of 200 g within a range of 200 g load to 2000 g load, and the load (g) at which the scratch was generated was evaluated. A case where the scratch was generated at a load of 800 g is indicated in the table as a load-bearing capacity of "600 g". A case where the load-bearing capacity was "200 g" was determined as unqualified.

### (Sliding property)

Felt sliding property was checked using a crockmeter. Rubbing was carried out under a condition of a load of 500 g/cm², and the sliding property was checked by gradually increasing the number of times in increments of 500 times within 500 to 2000 times. A case where there was no difference in gloss matte design at 2000 times is indicated as "∘" (qualified). A case where there was no difference in gloss matte design at 100 to 1500 times is indicated as "△"; and a case where there was a difference in gloss matte design at 500 times is indicated as "×" (unqualified).

### (V-groove bending processability)

The decorative member in which the decorative sheet was bonded to medium density fiberboard (MDF) was used for checking the V-cut processing suitability (presence or absence of bending whitening).

As a result, a case where no whitening occurred is indicated as "o" (qualified); a case where a little whitening occurred is indicated as "△" (qualified); and a case where whitening occurred is indicated as "×" (unqualified).

The evaluation results are shown in Table 1.

**[Table 1]**

| Item | Ex. 1 | Comp. Ex. 1 | Comp. Ex. 2 | Ref. Ex. 1 |
|---|---|---|---|---|
| Surface protective layer | UV resin | UV resin | UV resin +GM printing | Thermosetting resin |
| Transparent thermoplastic resin layer | Petrochemical PP | Petrochemical PP | Petrochemical PP | Petrochemical PP |
| Additive | Nano-sized nucleating agent | None | None | None |
| Infrared irradiation | Y | Y | N | N |
| Design properties (GM matching) | ○ | ○ | ○ | - |
| Pencil hardness | ⊚ | ○ | ○ | Δ |
| Hoffman scratch test | 1400 | 800 | 800 | 600 |
| Sliding property | ○ | ○ | × | ○ |
| V-groove bending suitability | ○ | Δ | Δ | ○ |

As shown in Table 1, it was found that the decorative sheet of Example 1 could obtain the same design properties as the case where the gloss matte printing was carried out. In addition, it was found that, by adding the nucleating material to the transparent thermoplastic resin layer 6, the pencil hardness, the Hoffman scratch test, and the bending processability were further improved as compared with the case where the nucleating material was not added.

The first disclosure can be configured, for example, as follows.
(1) A method for producing a decorative sheet having an embossed shape in register with a picture pattern, the method including:
   depositing, on one surface of a colored resin layer, a picture pattern layer having the picture pattern, a transparent resin layer containing a nano-sized nucleating agent, and a surface protective layer in this order;
   forming a pattern layer using a colorless or light-colored ink and a material having light absorptivity with respect to light having a predetermined wavelength, which is higher than light absorptivity of the colored resin layer, by disposing, on the other surface of the colored resin layer, a region having light absorptivity in a state of being in register with the picture pattern;
   performing irradiation with irradiation light in which a power of light having the predetermined wavelength is larger than a power of light having other wavelengths, after forming the pattern layer; and
   pressing the surface protective layer with an embossing plate for forming the embossed shape, after performing the irradiation with the irradiation light.
(2) The method for producing a decorative sheet according to (1),
   in which the material having light absorptivity is a material having light absorptivity with respect to infrared rays.
(3) The method for producing a decorative sheet according to (1) or (2),
   in which the material having light absorptivity is at least one inorganic material of tin-doped indium oxide, antimony-doped tin oxide, lanthanum hexaboride, and cesium-doped tungsten oxide.
(4) The method for producing a decorative sheet according to any one of (1) to (3),
   in which the transparent resin layer is formed by using a crystalline polypropylene resin to which the nano-sized nucleating agent is added.
(5) A decorative sheet including:
   a colored resin layer;
   a picture pattern layer;
   a transparent resin layer;
   a surface protective layer; and
   a pattern layer,
   in which the picture pattern layer, the transparent resin layer, and the surface protective layer are deposited on one surface of the colored resin layer in this order,
   the pattern layer is deposited on the other surface of the colored resin layer, and is disposed to have a region having light absorptivity with respect to light having a predetermined wavelength, which is higher than light absorptivity of the colored resin layer, in a state of being in register with a picture pattern of the picture pattern layer,
   the transparent resin layer contains a nano-sized nucleating agent,
   the region having light absorptivity is formed from a material that contains a colorless or light-colored ink and a material having light absorptivity, and
   an embossed part is formed in the surface protective layer at a position overlapping the region having light absorptivity in a plan view.
(6) The decorative sheet according to (5),
   in which the transparent resin layer contains a crystalline polypropylene resin and the nano-sized nucleating agent.
(7) A decorative member including:
   a substrate; and
   the decorative sheet according to (5) or (6), which is provided on at least one surface side of the substrate,
   in which the substrate is any one of a wooden substrate, a resin substrate, a non-combustible substrate, or a metal substrate.

### <Second disclosure>

### [Technical Field]

A second disclosure of the present invention relates to a decorative sheet and a method for producing a decorative sheet.

### [Background Art]

In the related art, a decorative sheet in which design properties are improved by exhibiting a gloss matte expression has been proposed. As a method of exhibiting the gloss matte expression, for example, a method of exhibiting the gloss matte expression by providing a high-gloss region including a lustrous ink layer and a low-gloss region not including the lustrous ink layer on one surface of a base material has been proposed (for example, see PTL 1).

### [Citation List]

### [Patent Literature]

PTL 1: JP 2018-126949 A

### [Summary of Invention]

### [Technical Problem]

Meanwhile, in the decorative sheet, a texture of a surface is likely to be flat as compared with the genuine material of real wood, stone, or the like. In real wood or stone, there is a difference in unevenness and a difference in texture depending on the location due to a difference in material, structure, and the like of the surface. In a portion where the texture is different, a color tone is often different, but in the decorative sheet, the expression is not made.

In addition, it is desired to further improve design properties, and thus, a method of further accurately bringing the picture pattern into register with the gloss matte expression is desired.

The second disclosure of the present invention has been made in view of the above-described points, and an object thereof is to provide a method for producing a decorative sheet and a decorative sheet, in which a texture close to the genuine material is exhibited and excellent design properties are provided.

### [Solution to Problem]

A decorative sheet according to one aspect of the second disclosure includes a colored resin layer, a picture pattern layer, a transparent resin layer, a surface protective layer, and a gloss matte-expressing pattern part, in which the picture pattern layer, the transparent resin layer, and the surface protective layer are deposited on one surface of the colored resin layer in this order, the gloss matte-expressing pattern part is disposed on a surface of the surface protective layer opposite to the transparent resin layer in a state of being in register with a picture pattern of the picture pattern layer, and consists of a predetermined material having light absorptivity with respect to light having a predetermined wavelength, which is higher than light absorptivity of the surface protective layer, and an embossed part is formed in the surface protective layer at a portion overlapping the gloss matte-expressing pattern part.

In addition, a method for producing a decorative sheet according to another aspect of the second disclosure includes: depositing a transparent resin layer and a surface protective layer; printing a picture pattern layer on a surface of the transparent resin layer opposite to the surface protective layer, and printing, on a surface of the surface protective layer opposite to the transparent resin layer, a gloss matte-expressing pattern part in a state of being in register with a picture pattern of the picture pattern layer, the gloss matte-expressing pattern part consisting of a predetermined material having light absorptivity with respect to light having a predetermined wavelength, which is higher than light absorptivity of the surface protective layer; forming a colored resin layer on a surface of the picture pattern layer opposite to the transparent resin layer; irradiating the surface of the surface protective layer including the gloss matte-expressing pattern part with irradiation light in which a power of light having the predetermined wavelength is larger than a power of light having other wavelengths; and pressing the surface of the surface protective layer including the gloss matte-expressing pattern part with an embossing plate, after irradiating the surface of the surface protective layer including the gloss matte-expressing pattern part with the irradiation light, in which the printing is performed by a double-sided printing machine to print the picture pattern layer and the gloss matte-expressing pattern part in a state in which the picture pattern of the picture pattern layer is in register with the gloss matte-expressing pattern part.

### [Advantageous Effects of Invention]

According to the aspect of the second disclosure, it is possible to provide a decorative sheet having a texture close to the genuine material and having excellent design properties.

### [Description of Embodiments]

Hereinafter, an embodiment of the second disclosure will be described with reference to the drawings.

Here, the drawings are schematic, and a relationship between a thickness and a planar dimension, a ratio of a thickness of each layer, and the like are different from actual ones. In addition, the embodiments shown below exemplify configurations for implementing the technical idea of the second disclosure, and the technical idea of the second disclosure is not intended to limit materials, shapes, structures, and the like of constituent components to the following embodiments. The technical idea of the second disclosure can be variously modified within the technical scope defined by the claims described in CLAIMS.

As illustrated in FIG. 2-1, a decorative sheet 110 according to the second disclosure is formed by depositing, on one surface of a colored thermoplastic resin layer (colored resin layer) 101, a picture pattern layer 102, a transparent thermoplastic resin layer (transparent resin layer) 103, and a surface protective layer 104 in this order. A gloss matte-expressing pattern part 105 is provided at a position of a surface of the surface protective layer 104 opposite to the transparent thermoplastic resin layer 103 in register with a picture pattern of the picture pattern layer 102. An embossed part 104a formed into an uneven shape is formed in a portion of the surface protective layer 104 overlapping the gloss matte-expressing pattern part 105. In addition, a primer layer 106 is provided on a surface of the colored thermoplastic resin layer 101 opposite to the picture pattern layer 102.

### [Colored thermoplastic resin layer]

Examples of the colored thermoplastic resin layer 101 serving as a substrate include polyvinyl chloride, polyethylene terephthalate, polybutylene terephthalate, polyamide, polyethylene, polypropylene, polycarbonate, polyethylene naphthalate, an ethylene-vinyl acetate copolymer, an ethylene-acrylic acid copolymer, an ethylene-acrylic acid ester copolymer, an ionomer, an acrylic acid ester, and a methacrylic acid ester. Among the above, a polyolefin-based resin can be preferably used from the viewpoint of environmental compatibility, processability, and cost. The grade or formulation of the resin can be selected in consideration of the ease of sheeting, printability, and suitability for bending.

As the colored thermoplastic resin layer 101, a hue can be appropriately selected as a base color of the picture pattern layer 102. The colored thermoplastic resin layer 101 can be colored, for example, by performing mixing, kneading, or the like with a coloring agent such as a pigment when sheeting a thermoplastic resin. Alternatively, the colored thermoplastic resin layer 101 can be provided as a solid ink layer by using a coating or printing technique.

### [Picture pattern layer]

The picture pattern layer 102 is a printed layer in which a picture pattern design is printed to impart design properties to the decorative sheet 110. As a method of forming the picture pattern layer 102, a known printing technique can be adopted. The printing technique is not particularly limited, but from the viewpoint of productivity and quality of a picture pattern, a gravure printing technique is preferable. In addition, for example, when the colored thermoplastic resin layer 101 can be prepared in a rolled state, printing for forming the picture pattern layer 102 can be performed by using a roll-to-roll printing device. In addition to the above, examples of the printing technique include an offset printing technique, a screen printing technique, a flexographic printing technique, an electrostatic printing technique, an ink jet printing technique, and a transfer printing technique from a transfer sheet. When such a printing technique is adopted, the picture pattern design of the picture pattern layer 102 can be formed by multicolor printing using ordinary process colors of yellow, red, blue, and black, and can also be formed by multicolor printing or the like using spot colors, which is carried out by preparing individual color plates constituting the picture pattern design.

In addition, the picture pattern design of the picture pattern layer 102 may be any picture pattern design in consideration of design properties for flooring materials or fittings. For example, in order to evoke the image of a stone floor such as marble, the picture pattern design can be a marble grain or the like. In addition, for example, as a wood-based picture pattern, various wood-grain picture patterns and cork picture patterns can be used as the picture pattern design. Furthermore, for example, in addition to picture pattern designs of natural materials, an artificial picture pattern design using these as a motif and an artificial picture pattern design such as a geometric pattern can also be used. In addition to the above, examples of the picture pattern design include a wood grain pattern composed of springwood regions and latewood regions and vessel portions in an annual ring cross section, a leather (leather grain) pattern, stone grain patterns and sand grain patterns on surfaces of stone materials such as marble, granite, and sandstone, tile patterns, brick patterns, fabric patterns, geometric figures, letters, symbols, abstract patterns, flower and plant patterns, landscapes, and characters.

A printing ink is a mixture of a solvent and solid contents such as a coloring agent and a binder resin.

Examples of the solvent include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, n-propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; and inorganic solvents such as water. The solvent may be used alone or in combination of two or more kinds thereof.

In addition, examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocotton), and a cellulose acetate resin. Examples of the chlorine-based resin include polyvinyl chloride-based resins such as polyvinyl chloride, chlorinated polyethylene, polyvinylidene chloride, ethylene-vinyl chloride copolymer, vinyl chloride-vinyl acetate copolymer, and vinyl chloride-vinyl acetate-(meth)acrylic copolymer; and polychloropropylene and chlorinated polypropylene. Here, (meth)acrylic refers to acrylic or methacrylic. The binder resin may be used alone or in combination of two or more kinds thereof.

In addition, examples of the coloring agent include inorganic pigments such as carbon black, iron black, titanium white (titanium oxide), antimony white, chrome yellow, titanium yellow, iron oxide red, cadmium red, ultramarine, and cobalt blue; and organic pigments such as quinacridone red, isoindolinone yellow, and phthalocyanine blue. The coloring agent may be used alone or in combination of two or more kinds thereof.

Here, the solvent contained in the printing ink eventually volatilizes. Therefore, the picture pattern layer 102 is mainly formed of solid contents such as the coloring agent and the binder resin.

In addition, the printing ink may contain a stabilizer, a plasticizer, a catalyst, a curing agent, and the like as other components. As the printing ink, an ink suitable for the printing technique may be adopted. In particular, it is preferable to select the printing ink in consideration of adhesiveness to the colored thermoplastic resin layer 101, printability, and weather resistance as flooring materials or fittings. A thickness of the picture pattern layer 102 can be appropriately adjusted in consideration of decorative properties required for the picture pattern layer 102, three-dimensional formability of the decorative sheet 110, and the like. The thickness of the picture pattern layer 102 is usually 1 µm or more and 1 mm or less, preferably 2 µm or more and 0.1 mm or less, and more preferably 2 µm or more and 50 µm or less.

In order to improve adhesiveness between the picture pattern layer 102 and the transparent thermoplastic resin layer 103, an adhesive layer (not illustrated) may be provided on a surface of the picture pattern layer 102 in contact with the transparent thermoplastic resin layer 103. By firmly adhering these layers, bending processability of following a curved surface or a right-angle surface can be imparted to the decorative sheet 110. A resin used in the adhesive layer (not illustrated) is not particularly limited. For example, a two-component curable urethane-based resin can be adopted. In addition, the transparent thermoplastic resin layer 103 may be adhered to the picture pattern layer 102 by using a urethane-based adhesive as an adhesive resin. For example, a coating device or a gravure printing device can be adopted for applying the resin used in the adhesive layer (not illustrated).

In addition, in order to suitably impart a design effect such as a sense of depth and brightness in the decorative sheet 110, a lustrous layer (not illustrated) may be provided between the picture pattern layer 102 and the transparent thermoplastic resin layer 103. The lustrous layer (not illustrated) preferably contains a lustrous pigment and a binder resin. Examples of the lustrous pigment include a pearl pigment and a metal pigment. In particular, the pearl pigment is preferable because the lustrous layer can suppress a decrease in light transmittance and thus does not impair visibility of the picture pattern layer 102.

The pearl pigment is a pigment capable of imparting a pearlescent luster. Examples thereof include a pigment in which a surface of a base particle is coated with a metal oxide. The base particle is preferably a flake-like particle such as mica. Examples of the metal oxide include oxides of metals such as titanium, iron, zirconium, silicon, aluminum, and cerium. The metal oxide may be used alone or in combination of two or more kinds thereof. Specific examples thereof include titanium mica, iron oxide-coated mica, iron oxide-coated titanium mica, Prussian blue-coated titanium mica, Prussian blue-iron oxide-coated titanium mica, chromium oxide-coated titanium mica, carmine-coated titanium mica, organic pigment-coated titanium mica, titanium oxide-coated mica, and titanium oxide-coated synthetic mica as oxide-coated mica; glass powder coated with titanium oxide, glass powder coated with iron oxide, and the like as oxide-coated glass powder; aluminum powder coated with titanium oxide and the like as oxide-coated metal particles; scale-like foil pieces of basic lead carbonate, lead hydrogen arsenate, bismuth oxychloride, and the like; and fish scale powder, shell pieces, and pearl pieces.

In addition, examples of the metal pigment include pigments composed of metals such as aluminum, brass, stainless steel, tin, zinc, copper, nickel, gold powder, and silver, and alloys of these metals. The metal pigment may be used alone or in combination of two or more kinds thereof.

From the viewpoint of imparting an excellent design effect, for example, when the lustrous layer is formed by gravure printing, an average particle diameter of the lustrous pigment is preferably 40 µm or less, and more preferably 30 µm or less. From the same viewpoint, a ratio of [average particle diameter of lustrous pigment/thickness of lustrous layer] is preferably 0.01 or more and 15 or less, and more preferably 0.5 or more and 10 or less. In the present specification, the "average particle diameter" is a value that can be obtained as a mass average value D50 in particle size distribution measurement by a laser light diffraction method.

In addition, examples of the binder resin include a thermoplastic resin and a cured substance of a curable resin composition, and from the viewpoint of durability, a cured substance of a curable resin composition is preferable. Examples of the cured substance of the curable resin composition include a cured substance of a thermosetting resin composition and a cured substance of an ionizing radiation-curable resin composition. From the viewpoint of interlayer adhesiveness, a cured substance of a thermosetting resin composition is preferable.

Examples of the thermosetting resin composition used in the lustrous layer include a polyester resin composition, an epoxy resin composition, a polyurethane resin composition, an amino alkyd resin composition, a melamine resin composition, a guanamine resin composition, a urea resin composition, and a thermosetting acrylic resin composition. Each of these thermosetting resin compositions contains monomers and/or prepolymers constituting each resin, a curing agent to be added as necessary, and the like. As the ionizing radiation-curable resin composition used in the lustrous layer, the same composition as an ionizing radiation-curable resin composition of the surface protective layer 104, which will be described later, can be used.

A contained amount of the lustrous pigment in the lustrous layer is preferably 10 parts by mass or more and 90 parts by mass or less, and more preferably 50 parts by mass or more and 80 parts by mass or less with respect to 100 parts by mass of the binder resin. By setting the contained amount of the lustrous pigment to 10 parts by mass or more, luster can be sufficiently imparted; and by setting the contained amount of the lustrous pigment to 90 parts by mass or less, it is possible to suppress impairment of the visibility of the picture pattern layer 102, which will be described later. From the same viewpoint, a thickness of the lustrous layer is preferably 1 µm or more and 30 µm or less, and more preferably 5 µm or more and 20 µm or less.

The lustrous layer can form any pattern depending on the design to be imparted. Examples thereof include wood grain patterns, leather patterns, stone grain patterns, sand grain patterns, tile-laying patterns, brick-laying patterns, fabric patterns, geometric figures, letter patterns, symbols, abstract patterns, flower-and-plant patterns, landscapes, and character figures. In addition, the pattern is preferably gradated in order to further enhance the design effect. The gradation may be formed from a size of halftone dots or a thickness of halftone dots, but it is preferable to form the gradation from sparseness and denseness of halftone dots (that is, to form the gradation from a density of halftone dots with halftone dots having a uniform size).

The lustrous layer can be formed by a general printing means such as gravure printing using a coating liquid containing the lustrous pigment and the binder resin. When the gradation of the lustrous layer is formed by the sparseness and denseness of the halftone dots, halftone dots of a printing plate may be formed by a frequency modulation (FM) screen.

### [Transparent thermoplastic resin layer]

The transparent thermoplastic resin layer 103 is a resin layer that protects the picture pattern layer 102 and imparts favorable surface properties so that, in terms of design, the decorative sheet 110 has a sense of thickness and depth and has improved weather resistance and abrasion resistance. As a material for the transparent thermoplastic resin layer 103, for example, a vinyl chloride resin, an acrylic resin, or a polyolefin-based resin (a polypropylene resin or a polyethylene resin) can be used. In particular, a polyolefin-based resin is preferable in consideration of environmental compatibility, processability, and cost. In addition, the grade or formulation of the resin can be selected in consideration of environmental compatibility, processability, and cost, the ease of sheeting, printability, and suitability for bending. As for the suitability for bending, it is important to make a selection in consideration of whether whitening or cracking occurs in a bent portion.

As a method of forming the transparent thermoplastic resin layer 103, a laminating technique can be adopted. In addition, for example, a method of forming the transparent thermoplastic resin layer 103 as a film and dry-laminating the film using an adhesive can be adopted.

### [Surface protective layer]

The surface protective layer 104 is a layer for imparting surface properties such as abrasion resistance to the decorative sheet 110. In addition, the surface protective layer 104 is also a layer for adjusting gloss of the surface of the decorative sheet 110. The surface protective layer 104 may be a single layer or a multilayer. For example, as the surface protective layer 104, two layers of a first surface protective layer (not illustrated) and a second surface protective layer (not illustrated) may be provided on the transparent thermoplastic resin layer 103 in this order. When the surface protective layer 104 consisting of the first surface protective layer (not illustrated) and the second surface protective layer (not illustrated) is provided, each layer may be coated and the resulting coating film may be cured, according to the type of a curable resin, using a known coating device, a thermal drying device, or an ionizing radiation irradiation device.

The surface protective layer 104 contains a curable resin as a main component. That is, it is preferable that the resin component of the surface protective layer 104 is substantially composed of a curable resin. The term "substantially" refers to, for example, 80 parts by mass or more when the entire resin is set to 100 parts by mass. The surface protective layer 104 may contain a weathering agent, a plasticizer, a stabilizer, a filler, a dispersant, a dye, a coloring agent such as a pigment, a solvent, or the like as necessary.

As a material for the surface protective layer 104, for example, an ionizing radiation-curable resin or a two-component curable urethane-based resin can be adopted. The ionizing radiation-curable resin is not particularly limited. For example, a transparent resin containing, as a main component, a prepolymer (including an oligomer) and/or a monomer that contains, in a molecule, a radically polymerizable double bond capable of polymerization and crosslinking reaction by irradiation with ionizing radiation, such as irradiation with infrared rays, ultraviolet rays, or electron beams, can be adopted. These prepolymers or monomers can be used alone or in combination of two or more thereof. Specific examples of the prepolymer or monomer include a compound having, in a molecule, a radically polymerizable unsaturated group such as a (meth)acryloyl group and a (meth)acryloyloxy group, or a cationically polymerizable functional group such as an epoxy group. In addition, a polyene/thiol-based prepolymer using a combination of a polyene and a polythiol is also preferable. Here, the (meth)acryloyl group refers to an acryloyl group or a methacryloyl group.

Examples of the prepolymer having a radically polymerizable unsaturated group include polyester (meth)acrylate, urethane (meth)acrylate, epoxy (meth)acrylate, melamine (meth)acrylate, triazine (meth)acrylate, and silicone (meth)acrylate. A molecular weight of these compounds is preferably approximately 250 to 100,000.

In addition, examples of the monomer having a radically polymerizable unsaturated group include, as a monofunctional monomer, methyl (meth)acrylate, 2-ethylhexyl (meth)acrylate, and phenoxyethyl (meth)acrylate. In addition, examples thereof include, as a polyfunctional monomer, diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth)acrylate.

In addition, examples of the prepolymer having a cationically polymerizable functional group include a prepolymer of an epoxy-based resin such as a bisphenol-type epoxy resin and a novolac-type epoxy compound, and a prepolymer of a vinyl ether-based resin such as a fatty acid-based vinyl ether and an aromatic-based vinyl ether.

In addition, examples of the polyene-based prepolymer include prepolymers in which allyl alcohol is added to both ends of a polyurethane formed from a diol and a diisocyanate. In addition, examples of the thiol-based prepolymer include polythiols such as trimethylolpropane trithioglycolate and pentaerythritol tetrathioglycolate.

As the ionizing radiation, for example, electromagnetic waves or charged particles having energy capable of causing a molecule in the ionizing radiation-curable resin (composition) to undergo a curing reaction can be adopted. Examples of the curing reaction include a crosslinking curing reaction. In addition, as an ultraviolet light source, for example, a light source such as an ultra-high pressure mercury lamp, a high pressure mercury lamp, a low pressure mercury lamp, a carbon arc lamp, a black light, and a metal halide lamp can be adopted. A wavelength of the ultraviolet rays is, for example, preferably 190 nm or more and 380 nm or less. In addition, as an electron beam source, for example, an electron beam accelerator such as a Cockcroft-Walton type, a Van de Graaff type, a resonant transformer type, an insulated core transformer type, a linear type, a dynamitron type, and a high-frequency type can be adopted. In particular, it is preferable that an electron having an energy of 100 keV or more and 1,000 keV or less (more preferably an electron having an energy of 100 keV or more and 300 keV or less) can be emitted.

The two-component curable urethane-based resin is not particularly limited. For example, a two-component curable urethane-based resin containing a polyol component having an OH group as a main agent and an isocyanate component as a curing agent component can be adopted. Examples of the polyol component having an OH group include acrylic polyol, polyester polyol, polyether polyol, and epoxy polyol. In addition, examples of the isocyanate component include tolylene diisocyanate, hexamethylene diisocyanate, and metaxylylene diisocyanate.

### [Gloss matte-expressing pattern part]

The gloss matte-expressing pattern part 105 is formed from a material having light absorptivity with respect to light having a predetermined wavelength, and is formed from, for example, a material having infrared-absorbing property by using a colorless transparent ink or an ink of a pale color that is relatively close to transparent. As the material having infrared-absorbing property, an existing material having infrared-absorbing property, such as tin-doped indium oxide (ITO), antimony-doped tin oxide (ATO), lanthanum hexaboride (LaB6), cesium-doped tungsten oxide, and a phthalocyanine-based material, can be used. Since the gloss matte-expressing pattern part 105 is formed by using the colorless transparent ink or the ink of a pale color that is relatively close to transparent, the picture pattern of the picture pattern layer 102 in a portion overlapping the gloss matte-expressing pattern part 105 can be visible as viewed from the surface protective layer 104 side.

The gloss matte-expressing pattern part 105 is disposed at a position in register with the picture pattern of the picture pattern layer 102. For example, when the picture pattern layer 102 has a wood grain pattern, the gloss matte-expressing pattern part 105 is formed at a position overlapping the wood-grain board vessel groove of the picture pattern layer 102 in a plan view. The term "in register with" as used herein means that the gloss matte-expressing pattern part 105 and the picture pattern of the picture pattern layer 102 are formed to substantially match each other in a plan view.

A thickness of the gloss matte-expressing pattern part 105 may be a thickness at which the gloss matte-expressing pattern part 105, the surface protective layer 104, and the transparent thermoplastic resin layer 103 can be softened to a degree that the uneven shape can be sufficiently formed from the gloss matte-expressing pattern part 105 through the surface protective layer 104 to the transparent thermoplastic resin layer 103 during an embossing process described later.

As a method of forming the gloss matte-expressing pattern part 105, a known printing technique can be adopted, but from the viewpoint of bringing the gloss matte-expressing pattern part 105 into register with the picture pattern of the picture pattern layer 102, it is preferable to use a double-sided printing machine capable of printing the picture pattern layer 102 and the gloss matte-expressing pattern part 105 on the transparent thermoplastic resin layer 103 and the surface protective layer 104, and to continuously perform printing in one printing machine. By using the double-sided printing machine in this way, thermal shrinkage of the colored thermoplastic resin layer 101 can be minimized, and for example, printing positions of the picture pattern layer 102 and the gloss matte-expressing pattern part 105 can be aligned with high accuracy as compared with a case where the picture pattern layer 102 and the gloss matte-expressing pattern part 105 are individually printed by a printing machine for printing the picture pattern layer 102 and a printing machine for printing the gloss matte-expressing pattern part 105; and as a result, the picture pattern of the picture pattern layer 102 and the gloss matte-expressing pattern part 105 can be more accurately brought into register with each other. As the double-sided printing machine, a sheet-fed double-sided printing machine or a roll-fed double-sided printing machine can be used, so that the present disclosure can be applied to both sheet paper and roll paper.

### [Light having predetermined wavelength]

As described above, the gloss matte-expressing pattern part 105 is formed from a material having light absorptivity with respect to light having a predetermined wavelength. Examples of the light having a predetermined wavelength include infrared rays, ultraviolet rays, visible rays, electron beams, X-rays, and ion beams.

### [Embossed part]

The embossed part 104a having an uneven design (uneven shape) is formed on the surface of the surface protective layer 104 in order to impart intended design properties. The embossed part 104a is formed by forming the uneven shape from the gloss matte-expressing pattern part 105 through the surface protective layer 104 to the transparent thermoplastic resin layer 103. Examples of the uneven design include vessel grooves of a wood-grain board, surface irregularities of a stone slab (for example, a cleaved surface of granite), a cloth surface texture, a pear-skin finish, a sand-grain pattern, a hairline finish, and a pattern of numerous linear grooves. The embossed part 104a is provided such that the uneven design is in register with the picture pattern of the picture pattern layer 102.

As a method of forming the uneven design, for example, an embossing process can be adopted. A method of the embossing process is not particularly limited. For example, a known single sheet embossing machine or a rotary embossing machine can be adopted. A region where the embossed part 104a is formed is a matte region and a region where the embossed part 104a is not formed is a gloss region, and the gloss matte expression can be exhibited by the matte region and the gloss region.

### [Primer layer]

The primer layer 106 is a layer serving as a base layer, and is a layer for improving adhesiveness and corrosion resistance with a substrate (not illustrated) to which the decorative sheet 110 is attached. The primer layer 106 is provided on the surface of the colored thermoplastic resin layer 101 opposite to the picture pattern layer 102.

The primer layer 106 is formed by using, for example, a polyester-based resin, an organic additive, a pigment, and the like. A rust preventive pigment may be blended in the primer layer 106 for the purpose of improving the corrosion resistance. A thickness of the primer layer 106 is, for example, in a range of 1 µm or more and 10 µm or less.

### [Method for producing decorative sheet]

Next, an example of the method for producing the decorative sheet 110 according to the present embodiment will be described with reference to FIG. 2-2.

First, the transparent thermoplastic resin layer 103 is formed. For example, a transparent resin film having a thickness of 80 µm is formed by using polypropylene (PP) (FIG. 2-2A).

Next, the surface protective layer 104 containing an acrylic resin composition as a main component is deposited on one surface of the transparent thermoplastic resin layer 103 (FIG. 2-2B).

Subsequently, the picture pattern layer 102 is printed on a surface of the transparent thermoplastic resin layer 103 opposite to the surface protective layer 104 using, for example, a urethane-based printing ink, and then the gloss matte-expressing pattern part 105 is printed on a surface of the surface protective layer 104 opposite to the transparent thermoplastic resin layer 103 (FIG. 2-2C). In this case, by successively printing the picture pattern layer 102 and the gloss matte-expressing pattern part 105 using the double-sided printing machine, the picture pattern of the picture pattern layer 102 and the gloss matte-expressing pattern part 105 can be more accurately brought into register with each other.

Subsequently, the transparent thermoplastic resin layer 103 is adhered to a surface of the picture pattern layer 102 opposite to the transparent thermoplastic resin layer 103 by using a urethane-based adhesive as an adhesive resin, and a colored resin film as the colored thermoplastic resin layer 101 and the picture pattern layer 102 are bonded to each other using a dry lamination method (FIG. 2-2D). The colored resin film is formed by using, for example, polyethylene (PE) having a thickness of 55 µm.

Next, the surface of the surface protective layer 104 including the gloss matte-expressing pattern part 105 (that is, a surface of the surface protective layer 104 opposite to the transparent thermoplastic resin layer 103) is irradiated with infrared rays from the surface protective layer 104 side (FIG. 2-2E), and after the infrared irradiation, the surface of the surface protective layer 104 including the gloss matte-expressing pattern part 105 (that is, the surface of the surface protective layer 104 opposite to the transparent thermoplastic resin layer 103) is pressed with an embossing plate such as an embossing roll (FIG. 2-2F). As a result, the embossed part 104a is formed in a region overlapping the gloss matte-expressing pattern part 105 in a plan view, and thus the decorative sheet 110 is formed.

Here, the gloss matte-expressing pattern part 105 is formed from a material having an infrared-absorbing characteristic. Therefore, when the surface of the surface protective layer 104 including the gloss matte-expressing pattern part 105 is irradiated with infrared rays, in a portion of the surface protective layer 104 overlapping the gloss matte-expressing pattern part 105 in a plan view, the surface protective layer 104 and the transparent thermoplastic resin layer 103 are more likely to be softened than in a portion that does not overlap with the gloss matte-expressing pattern part 105. That is, in the surface protective layer 104 and the transparent thermoplastic resin layer 103 after the infrared irradiation, there are a portion that is likely to be softened and a portion that is difficult to be softened.

Therefore, when the surface protective layer 104 including the gloss matte-expressing pattern part 105 is pressed with the embossing plate in this state, the softened portion is likely to form an unevenness, and the portion that is difficult to be softened is unlikely to form an unevenness. That is, the unevenness is likely to be formed in the softened portion of the surface protective layer 104 and the transparent thermoplastic resin layer 103, that is, a portion overlapping the gloss matte-expressing pattern part 105 in a plan view. As a result, the embossed part 104a having an uneven shape in register with the gloss matte-expressing pattern part 105 is likely to be formed only at a position where the surface protective layer 104 and the transparent thermoplastic resin layer 103 overlap the gloss matte-expressing pattern part 105 in a plan view. Since the gloss matte-expressing pattern part 105 is provided at a position in register with the picture pattern of the picture pattern layer 102, the embossed part 104a can be formed at a position in register with the picture pattern layer 102, that is, the embossed part 104a in register with the picture pattern of the picture pattern layer 102 can be easily formed without performing a high-accuracy positioning operation.

### [Effects of embodiments of second disclosure]

(1) In the decorative sheet 110, the embossing plate is pressed after the infrared irradiation, so that the portion overlapping the gloss matte-expressing pattern part 105 in a plan view can be strongly subjected to the embossing process. That is, the embossed part 104a can be easily formed at a desired position without performing high-accuracy positioning or the like of the region to be pressed with the embossing plate.

Since the gloss matte-expressing pattern part 105 is provided in register with the picture pattern of the picture pattern layer 102, the uneven shape in register with the picture pattern of the picture pattern layer 102 can be formed, that is, a gloss matte expression in register with the picture pattern can be easily exhibited.

As a result, it is possible to easily obtain a decorative sheet having excellent design properties.

(2) The gloss matte-expressing pattern part 105 is provided at a position of the surface protective layer 104 overlapping the picture pattern of the picture pattern layer 102 as viewed from the surface protective layer 104 side, and the surface protective layer 104 including the gloss matte-expressing pattern part 105 is irradiated with infrared rays. Therefore, for example, a heat absorption rate of the gloss matte-expressing pattern part 105 is higher than a case where the gloss matte-expressing pattern part 105 is provided between the picture pattern layer 102 and the transparent thermoplastic resin layer 103 or at a similar position. As a result, even when the infrared irradiation is performed under the same conditions, the uneven shape is more clearly formed in the portion of the gloss matte-expressing pattern part 105 when the gloss matte-expressing pattern part 105 is provided on the surface, and it is possible to realize a stronger gloss matte expression and improve gloss matte design properties. That is, the gloss matte expression can be realized with a smaller amount of infrared irradiation.

(3) As the gloss matte-expressing pattern part 105, a transparent ink or a light-colored ink is used. Therefore, even when the gloss matte-expressing pattern part 105 is provided on the outermost layer, influence on the color tone of the picture pattern layer 102 by providing the gloss matte-expressing pattern part 105 can be suppressed.

(4) Since the uneven shape is provided on the decorative sheet 110 itself to exhibit the gloss matte expression, it is possible to suppress occurrence of gloss matte pattern peeling or the like. Therefore, for example, a gloss matte expression in register can be achieved in flooring materials and the like.

(5) Since the picture pattern layer 102 and the gloss matte-expressing pattern part 105 are printed in one printing machine, for example, using the double-sided printing machine, the picture pattern layer 102 and the gloss matte-expressing pattern part 105 can be more accurately brought into register with each other as compared with a case where the picture pattern layer 102 and the gloss matte-expressing pattern part 105 are printed by separate printing machines; and as a result, the gloss matte design properties can be improved.

### [Modification example of second disclosure]

(1) In the above-described embodiment of the second disclosure, a case has been described in which the material having an infrared-absorbing characteristic is used in the gloss matte-expressing pattern part 105, and the transparent thermoplastic resin layer 103 and the surface protective layer 104 are partially softened by performing the infrared irradiation, but the second disclosure is not limited thereto. As the material for the gloss matte-expressing pattern part 105, a material containing any ink that has a component having light absorptivity with respect to light having a predetermined wavelength, other than infrared rays, may be used, and a light source for emitting the light having the predetermined wavelength may be used instead of the infrared rays for partially softening the surface protective layer 104 and the transparent thermoplastic resin layer 103.
(2) In addition, as illustrated in FIG. 2-3, the decorative sheet 110 according to the above-described embodiment may be bonded to a substrate 121 that is a substrate for a decorative material to form a decorative member 120. In the decorative member 120, the decorative sheet 110 may be provided on at least one surface side of the substrate 121, or may be provided on both surfaces thereof.

### [Substrate]

As the substrate 121, a wooden substrate or a metal substrate can be used. As the wooden substrate, for example, wood veneer, plywood, laminated wood, particleboard, medium-density fiberboard, or hardboard can be adopted. In addition, as the metal substrate, a steel plate or an aluminum plate can be adopted. In addition, the substrate 121 may be a resin such as a plastic resin or a composite material thereof. That is, the substrate 121 may be a resin substrate. In addition, the substrate 121 may be, for example, a non-combustible steel plate or a non-combustible substrate formed of a non-combustible material prescribed in Notification No. 1400 of the Ministry of Construction.

As described above, the decorative member 120 includes the substrate 121 and the decorative sheet 110 provided on at least one surface side of the substrate 121. In addition, as the substrate 121, any one of the wooden substrate, the resin substrate, the non-combustible substrate, or the metal substrate can be used.

### [Examples]

The decorative sheet according to the second disclosure was evaluated by evaluating evaluation sheets as Examples and Comparative Examples.

The evaluation sheets were produced by the following procedure.

### (Example 2-1)

A transparent resin film including polypropylene (PP) having a thickness of 80 µm was formed as a transparent thermoplastic resin layer.

Next, an infrared-absorbing ink as a gloss matte-expressing pattern part was solid-printed on one surface of the transparent resin film using a printing plate in which image density levels were varied. A urethane-based printing ink was used as the infrared-absorbing ink.

Next, a picture pattern layer was printed on the other surface of the transparent resin film using a urethane-based printing ink.

Next, for the transparent resin film after the infrared-absorbing ink and the picture pattern layer were printed, the picture pattern layer was coated with a urethane-based adhesive, and the colored resin film as the colored thermoplastic resin layer was dry-laminated, and an after-embossing process was carried out. Specifically, the colored resin film including polyethylene (PE) having a thickness of 55 µm was dry-laminated, and then heated with an infrared heater, and an embossing roll was pressed against the surface on the infrared-absorbing ink side to carry out the embossing process. As a result, an evaluation sheet of Example 1 was obtained. The embossing process was carried out under conditions of a paper surface temperature of 125°C and a nip pressure of 850 kg, and an embossed pattern was formed by pressing with a pear-skin-textured embossing plate having a plate depth of 60 um.

### (Comparative Example 2-1)

A transparent resin film was formed as a transparent thermoplastic resin layer.

Next, a picture pattern layer was printed on one surface of the transparent resin film, and an infrared-absorbing ink was solid-printed on the printed picture pattern layer by the printing plate used in the decorative sheet of Example 2-1.

Next, for the transparent resin film after the infrared-absorbing ink and the picture pattern layer were printed, the adhesive was applied onto the surface on the infrared-absorbing ink side, and a colored resin film was dry-laminated, and an after-embossing process was carried out. Specifically, the dry-laminated transparent resin film was heated with an infrared heater, and then an embossing roll was pressed against the surface on the transparent resin film side to carry out the embossing process. As a result, an evaluation sheet of Comparative Example 2-1 was obtained. The configuration of each layer was the same as the configuration of each layer in Example 2-1.

### (Comparative Example 2-2)

A transparent resin film was formed as a transparent thermoplastic resin layer.

Next, a picture pattern layer was printed on one surface of the transparent resin film.

Next, for the transparent resin film after the picture pattern layer was printed, an adhesive was applied onto the picture pattern layer, and a colored resin film was dry-laminated.

Next, an infrared-absorbing ink was solid-printed on the surface of the colored resin film opposite to the picture pattern layer by the printing plate used in Example 2-1.

Thereafter, an after-embossing process was carried out. Specifically, the transparent resin film on which the infrared-absorbing ink was solid-printed was heated with an infrared heater, and then an embossing roll was pressed against the surface on the transparent resin film side to carry out the embossing process. As a result, an evaluation sheet of Comparative Example 2-2 was obtained. The configuration of each layer was the same as the configuration of each layer in Example 2-1.

### [Evaluation method]

### [Color difference measurement]

For each evaluation sheet, a hue in a state just before carrying out the after-embossing process was measured with a color difference meter, and a color difference ΔE with a standard plate was calculated. As the color difference meter, a color difference meter CR-400 manufactured by Konica Minolta, Inc. was used. The color difference was measured for each printing region of the infrared-absorbing ink at each image density.

As Reference Example 2-1, the color difference was measured for only the transparent resin film as a base material.

### [Infrared transmittance measurement]

For each evaluation sheet, an infrared transmittance at a wavelength of 2,000 nm in a state just before carrying out the after-embossing process was measured. As an ultraviolet-visible spectrophotometer, UV-3600 manufactured by Shimadzu Corporation was used. The infrared transmittance was measured for each printing region of the infrared-absorbing ink at each image density.

As Reference Example 2-1, the infrared transmittance was measured for only the transparent resin film as a base material.

### [Glossiness measurement]

For each evaluation sheet, glossiness was measured at a measurement angle of 85° after the after-embossing process, and it was checked whether or not gloss matte expression was exhibited. The glossiness was measured using micro-TRI-gloss manufactured by BYK. In addition, as Reference Example 2-1, the glossiness was measured for only the transparent resin film as a base material. In addition, a difference between the measured glossiness of each evaluation sheet and the glossiness of the base material as the reference example was calculated as a difference in glossiness.

### [Gloss matte design properties]

Gloss matte design properties were subjectively evaluated. The evaluation standards are as follows.
⊚: it was confirmed that the gloss matte expression was stably exhibited even in consideration of the variation in the production of the decorative sheet.
∘: it was confirmed that the gloss matte expression was exhibited.
×: a degree of the gloss matte expression was weak and not visible.

### [Evaluation results]

The measurement results and the evaluation results for each evaluation sheet are shown in Table 2.

The measured values or the evaluation results in Table 2 represent the measured values of the solid printing portion.

In addition, as Reference Example 2-1, the color difference, the infrared transmittance, and the glossiness were measured for the transparent resin film on which the infrared-absorbing ink was not printed.

**[Table 2]**

| | Ex. 2-1 | Comp. Ex. 2-1 | Comp. Ex. 2-2 | Ref. Ex. 2-1 |
|---|---|---|---|---|
| | Light-colored infrared-absorbing ink (outermost layer) | Light-colored infrared-absorbing ink (picture pattern layer) | Light-colored infrared-absorbing ink (back surface) | Only base material |
| Color difference (ΔE) | 6.9 | 6.9 | 5.1 | 4.5 |
| Infrared transmittance (%) | 8.02 | 8.43 | 8.25 | 61.67 |
| Glossiness | 2.8 | 3.5 | 3.6 | 8.7 |
| Difference in glossiness | 5.9 | 5.2 | 5.1 | |
| GM design properties | ⊚ | ○ | ○ | |

The color difference with the standard plate was the same between Example 2-1 and Comparative Example 2-1, and the color difference of Comparative Example 2-2 was smaller than the color difference of Example 2-1. It was found that the possibility of the influence on the color tone of the picture pattern layer by providing the infrared-absorbing ink was low.

In the evaluation sheet of Example 2-1, since the infrared-absorbing ink was provided on the outermost layer, the infrared transmittance was lower than that of Comparative Example 2-1 in which the infrared-absorbing ink was provided between the picture pattern layer and the transparent resin film, and Comparative Example 2-2 in which the infrared-absorbing ink was provided on the surface of the colored resin film on the side opposite to the picture pattern layer. Therefore, it was found that, as the heat absorption efficiency increased, more distinct embossing process could be carried out, the glossiness in the printing region of the infrared-absorbing ink decreased, and as a result, the difference in glossiness between the region where the infrared-absorbing ink was not printed and the printing region of the infrared-absorbing ink increased, thereby improving the gloss matte design properties.

### <Third disclosure>

### [Technical Field]

A third disclosure of the present invention relates to a decorative sheet and a method for producing a decorative sheet.

### [Background Art]

In the related art, a decorative sheet in which design properties are improved by exhibiting a gloss matte expression has been proposed. As a method of exhibiting the gloss matte expression, for example, a method of exhibiting the gloss matte expression by providing a high-gloss region including a lustrous ink layer and a low-gloss region not including the lustrous ink layer on one surface of a base material (for example, see PTL 1), and a method of exhibiting the gloss matte expression by providing unevenness on a surface of the base material have been proposed.

### [Citation List]

### [Patent Literature]

PTL 1: JP 2018-126949 A

### [Summary of Invention]

### [Technical Problem]

As a method of improving design properties by bringing the picture pattern into register with the gloss matte expression, for example, it is considered to dispose the picture pattern and the low-gloss region to accurately overlap each other in a top view. Furthermore, it is expected to further improve the design properties by exhibiting the gloss matte expression suitable for the picture pattern.

An object of the third disclosure of the present invention is to provide a decorative sheet having excellent design properties and a method for producing the decorative sheet.

### [Solution to Problem]

A decorative sheet according to one aspect of the third disclosure is a decorative sheet having an uneven shape on an outermost layer, and exhibiting a gloss matte expression by using a region where the uneven shape is formed in the outermost layer and a region where the uneven shape is not formed in the outermost layer, in which, in the region where the uneven shape is formed and the region where the uneven shape is not formed, a difference value ΔGM(Sa) of an arithmetic mean height Sa between the regions satisfies ΔGM(Sa) ≥ 1.6, and a difference value ΔGM(Sz) of a maximum height Sz between the regions satisfies ΔGM(Sz) ≥ 5.4.

In addition, a method for producing a decorative sheet according to another aspect of the third disclosure is a method for producing a decorative sheet that has, on an outermost layer, an uneven shape in register with a picture pattern layer, and exhibits a gloss matte expression by using a region where the uneven shape is formed in the outermost layer and a region where the uneven shape is not formed in the outermost layer, the method including: depositing, on one surface of a colored resin layer, the picture pattern layer, a transparent resin layer, and a surface protective layer as the outermost layer in this order, forming, on the other surface of the colored resin layer, a pattern layer using a predetermined material having light absorptivity with respect to light having a predetermined wavelength, which is higher than light absorptivity of the colored resin layer, in a state of being in register with a picture pattern of the picture pattern layer, performing irradiation with irradiation light in which a power of light having the predetermined wavelength is larger than a power of light having other wavelengths, and pressing the surface protective layer with an embossing plate to form the uneven shape; and determining an image density of the predetermined material in accordance with a degree of a target gloss matte expression. The degree of the gloss matte expression referred to here means a degree of the difference in gloss.

### [Advantageous Effects of Invention]

According to the aspect of the third disclosure, it is possible to provide a decorative sheet capable of easily and effectively exhibiting a high-designability gloss matte expression.

### [Description of Embodiments]

Hereinafter, an embodiment of the third disclosure of the present technology will be described with reference to the drawings.

Here, the drawings are schematic, and a relationship between a thickness and a planar dimension, a ratio of a thickness of each layer, and the like are different from actual ones. In addition, the embodiments shown below exemplify configurations for implementing the technical idea of the third disclosure, and the technical idea of the third disclosure is not intended to limit materials, shapes, structures, and the like of constituent components to the following embodiments. The technical idea of the third disclosure can be variously modified within the technical scope defined by the claims described in CLAIMS.

For example, as illustrated in FIG. 3-1, a decorative sheet 201 is formed by depositing a colored thermoplastic resin layer (colored resin layer) 202, a picture pattern layer 205, a transparent thermoplastic resin layer (transparent resin layer) 206, and a surface protective layer 207 in this order, in which an embossed part (uneven shape) 207a is formed in the surface protective layer 207. In addition, on a surface of the colored thermoplastic resin layer 202 opposite to the picture pattern layer 205, a pattern layer 208a including a gloss matte-expressing pattern part 203, and a primer layer 208 are formed.

### [Colored thermoplastic resin layer]

Examples of the colored thermoplastic resin layer 202 serving as a substrate include polyvinyl chloride, polyethylene terephthalate, polybutylene terephthalate, polyamide, polyethylene, polypropylene, polycarbonate, polyethylene naphthalate, an ethylene-vinyl acetate copolymer, an ethylene-acrylic acid copolymer, an ethylene-acrylic acid ester copolymer, an ionomer, an acrylic acid ester, and a methacrylic acid ester. Among the above, a polyolefin-based resin can be preferably used from the viewpoint of environmental compatibility, processability, and cost. The grade or formulation of the resin can be selected in consideration of the ease of sheeting, printability, and suitability for bending.

As the colored thermoplastic resin layer 202, a hue can be appropriately selected as a base color of the picture pattern layer 205. The colored thermoplastic resin layer 202 can be colored, for example, by mixing and kneading a coloring agent such as a pigment when sheeting a thermoplastic resin. Alternatively, a colored layer can be provided as a solid ink layer before providing the gloss matte-expressing pattern part 203 by a coating technique or a printing technique.

### [Picture pattern layer]

The picture pattern layer 205 is a printed layer in which a picture pattern design is printed to impart design properties to the decorative sheet 201. As a method of forming the picture pattern layer 205, a known printing technique can be adopted. The printing technique is not particularly limited, but from the viewpoint of productivity and quality of a picture pattern, a gravure printing technique is preferable. In addition, for example, when the colored thermoplastic resin layer 202 can be prepared in a rolled state, printing for forming the picture pattern layer 205 can be performed by using a roll-to-roll printing device. In addition to the above, examples of the printing technique include an offset printing technique, a screen printing technique, a flexographic printing technique, an electrostatic printing technique, an ink jet printing technique, and a transfer printing technique from a transfer sheet. When such a printing technique is adopted, the picture pattern design of the picture pattern layer 205 can be formed by multicolor printing using ordinary process colors of yellow, red, blue, and black, and can also be formed by multicolor printing or the like using spot colors, which is carried out by preparing individual color plates constituting the picture pattern design.

In addition, the picture pattern design of the picture pattern layer 205 may be any picture pattern design in consideration of design properties for flooring materials or fittings. For example, in order to evoke the image of a stone floor such as marble, the picture pattern design can be a marble grain or the like. In addition, for example, as a wood-based picture pattern, various wood-grain picture patterns and cork picture patterns can be used as the picture pattern design. Furthermore, for example, in addition to picture pattern designs of natural materials, an artificial picture pattern design using these as a motif and an artificial picture pattern design such as a geometric pattern can also be used. In addition to the above, examples of the picture pattern design include a wood grain pattern composed of springwood regions and latewood regions and vessel portions in an annual ring cross section, a leather (leather grain) pattern, stone grain patterns and sand grain patterns on surfaces of stone materials such as marble, granite, and sandstone, tile patterns, brick patterns, fabric patterns, geometric figures, letters, symbols, abstract patterns, flower and plant patterns, landscapes, and characters.

A printing ink is a mixture of a solvent and solid contents such as a coloring agent and a binder resin.

Examples of the solvent include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, n-propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; and inorganic solvents such as water. The solvent may be used alone or in combination of two or more kinds thereof.

In addition, examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocotton), and a cellulose acetate resin. Examples of the chlorine-based resin include polyvinyl chloride-based resins such as polyvinyl chloride, chlorinated polyethylene, polyvinylidene chloride, ethylene-vinyl chloride copolymer, vinyl chloride-vinyl acetate copolymer, and vinyl chloride-vinyl acetate-(meth)acrylic copolymer; and polychloropropylene and chlorinated polypropylene. Here, (meth)acrylic refers to acrylic or methacrylic. The binder resin may be used alone or in combination of two or more kinds thereof.

In addition, examples of the coloring agent include inorganic pigments such as carbon black, iron black, titanium white (titanium oxide), antimony white, chrome yellow, titanium yellow, iron oxide red, cadmium red, ultramarine, and cobalt blue; and organic pigments such as quinacridone red, isoindolinone yellow, and phthalocyanine blue. The coloring agent may be used alone or in combination of two or more kinds thereof.

Here, the solvent contained in the printing ink eventually volatilizes. Therefore, the picture pattern layer 5 is mainly formed of solid contents such as the coloring agent and the binder resin.

In addition, the printing ink may contain a stabilizer, a plasticizer, a catalyst, a curing agent, and the like as other components. As the printing ink, an ink suitable for the printing technique may be adopted. In particular, it is preferable to select the printing ink in consideration of adhesiveness to the colored thermoplastic resin layer 202, printability, and weather resistance as flooring materials or fittings. A thickness of the picture pattern layer 205 can be appropriately adjusted in consideration of decorative properties required for the picture pattern layer 205, three-dimensional formability of the decorative sheet 201, and the like. The thickness of the picture pattern layer 205 is usually 1 µm or more and 1 mm or less, preferably 2 µm or more and 0.1 mm or less, and more preferably 2 µm or more and 50 µm or less.

In order to improve adhesiveness between the picture pattern layer 205 and the transparent thermoplastic resin layer 206, an adhesive layer (not illustrated) may be provided on a surface of the picture pattern layer 205 in contact with the transparent thermoplastic resin layer 206. By firmly adhering these layers, bending processability of following a curved surface or a right-angle surface can be imparted to the decorative sheet 201. A resin used in the adhesive layer (not illustrated) is not particularly limited. For example, a two-component curable urethane-based resin can be adopted. In addition, the transparent thermoplastic resin layer 206 may be adhered to the picture pattern layer 205 by using a urethane-based adhesive as an adhesive resin. For example, a coating device or a gravure printing device can be adopted for applying the resin used in the adhesive layer (not illustrated).

In addition, in order to suitably impart a design effect such as a sense of depth and brightness in the decorative sheet 201, a lustrous layer (not illustrated) may be provided between the picture pattern layer 205 and the transparent thermoplastic resin layer 206. The lustrous layer (not illustrated) preferably contains a lustrous pigment and a binder resin. Examples of the lustrous pigment include a pearl pigment and a metal pigment. In particular, the pearl pigment is preferable because the lustrous layer can suppress a decrease in light transmittance and thus does not impair visibility of the picture pattern layer 205.

The pearl pigment is a pigment capable of imparting a pearlescent luster. Examples thereof include a pigment in which a surface of a base particle is coated with a metal oxide. The base particle is preferably a flake-like particle such as mica. Examples of the metal oxide include oxides of metals such as titanium, iron, zirconium, silicon, aluminum, and cerium. The metal oxide may be used alone or in combination of two or more kinds thereof. Specific examples thereof include titanium mica, iron oxide-coated mica, iron oxide-coated titanium mica, Prussian blue-coated titanium mica, Prussian blue-iron oxide-coated titanium mica, chromium oxide-coated titanium mica, carmine-coated titanium mica, organic pigment-coated titanium mica, titanium oxide-coated mica, and titanium oxide-coated synthetic mica as oxide-coated mica; glass powder coated with titanium oxide, glass powder coated with iron oxide, and the like as oxide-coated glass powder; aluminum powder coated with titanium oxide and the like as oxide-coated metal particles; scale-like foil pieces of basic lead carbonate, lead hydrogen arsenate, bismuth oxychloride, and the like; and fish scale powder, shell pieces, and pearl pieces.

In addition, examples of the metal pigment include pigments composed of metals such as aluminum, brass, stainless steel, tin, zinc, copper, nickel, gold powder, and silver, and alloys of these metals. The metal pigment may be used alone or in combination of two or more kinds thereof.

From the viewpoint of imparting an excellent design effect, for example, when the lustrous layer is formed by gravure printing, an average particle diameter of the lustrous pigment is preferably 40 µm or less, and more preferably 30 µm or less. From the same viewpoint, a ratio of [average particle diameter of lustrous pigment/thickness of lustrous layer] is preferably 0.01 or more and 15 or less, and more preferably 0.5 or more and 10 or less. In the present specification, the "average particle diameter" is a value that can be obtained as a mass average value D50 in particle size distribution measurement by a laser light diffraction method.

In addition, examples of the binder resin include a thermoplastic resin and a cured substance of a curable resin composition, and from the viewpoint of durability, a cured substance of a curable resin composition is preferable. Examples of the cured substance of the curable resin composition include a cured substance of a thermosetting resin composition and a cured substance of an ionizing radiation-curable resin composition. From the viewpoint of interlayer adhesiveness, a cured substance of a thermosetting resin composition is preferable.

Examples of the thermosetting resin composition used in the lustrous layer include a polyester resin composition, an epoxy resin composition, a polyurethane resin composition, an amino alkyd resin composition, a melamine resin composition, a guanamine resin composition, a urea resin composition, and a thermosetting acrylic resin composition. Each of these thermosetting resin compositions contains monomers and/or prepolymers constituting each resin, a curing agent to be added as necessary, and the like. As the ionizing radiation-curable resin composition used in the lustrous layer, the same composition as an ionizing radiation-curable resin composition of the surface protective layer 7, which will be described later, can be used.

A contained amount of the lustrous pigment in the lustrous layer is preferably 10 parts by mass or more and 90 parts by mass or less, and more preferably 50 parts by mass or more and 80 parts by mass or less with respect to 100 parts by mass of the binder resin. By setting the contained amount of the lustrous pigment to 10 parts by mass or more, luster can be sufficiently imparted; and by setting the contained amount of the lustrous pigment to 90 parts by mass or less, it is possible to suppress impairment of the visibility of the picture pattern layer, which will be described later. From the same viewpoint, a thickness of the lustrous layer is preferably 1 µm or more and 30 µm or less, and more preferably 5 µm or more and 20 µm or less.

The lustrous layer can form any pattern depending on the design to be imparted. Examples thereof include wood grain patterns, leather patterns, stone grain patterns, sand grain patterns, tile-laying patterns, brick-laying patterns, fabric patterns, geometric figures, letter patterns, symbols, abstract patterns, flower-and-plant patterns, landscapes, and character figures. In addition, the pattern is preferably gradated in order to further enhance the design effect. The gradation may be formed from a size of halftone dots or a thickness of halftone dots, but it is preferable to form the gradation from sparseness and denseness of halftone dots (that is, to form the gradation from a density of halftone dots with halftone dots having a uniform size).

The lustrous layer can be formed by a general printing means such as gravure printing using a coating liquid containing the lustrous pigment and the binder resin. When the gradation of the lustrous layer is formed by the sparseness and denseness of the halftone dots, halftone dots of a printing plate may be formed by a frequency modulation (FM) screen.

### [Transparent thermoplastic resin layer]

The transparent thermoplastic resin layer 206 is a resin layer that protects the picture pattern layer 205 and imparts favorable surface properties so that, in terms of design, the decorative sheet 201 has a sense of thickness and depth and has improved weather resistance and abrasion resistance. As a material for the transparent thermoplastic resin layer 206, for example, a vinyl chloride resin, an acrylic resin, or a polyolefin-based resin (a polypropylene resin or a polyethylene resin) can be used. In particular, a polyolefin-based resin is preferable in consideration of environmental compatibility, processability, and cost. In addition, the grade or formulation of the resin can be selected in consideration of environmental compatibility, processability, and cost, the ease of sheeting, printability, and suitability for bending. As for the suitability for bending, it is important to make a selection in consideration of whether whitening or cracking occurs in a bent portion.

As a method of forming the transparent thermoplastic resin layer 206, a laminating technique can be adopted. In addition, for example, when the transparent thermoplastic resin layer 206 and the adhesive layer (not illustrated) are formed at the same time, a method of simultaneously extruding both layers by coextrusion can be adopted.

### [Surface protective layer]

The surface protective layer 207 is a layer for imparting surface properties such as abrasion resistance to the decorative sheet 1. In addition, the surface protective layer 207 is also a layer for adjusting gloss of the surface of the decorative sheet 201. The surface protective layer 207 may be a single layer or a multilayer. For example, as the surface protective layer 207, two layers of a first surface protective layer (not illustrated) and a second surface protective layer (not illustrated) may be provided on the transparent thermoplastic resin layer 206 in this order. When the surface protective layer 207 consisting of the first surface protective layer (not illustrated) and the second surface protective layer (not illustrated) is provided, each layer may be coated and the resulting coating film may be cured, according to the type of a curable resin, using a known coating device, a thermal drying device, or an ionizing radiation irradiation device.

The surface protective layer 207 contains a curable resin as a main component. That is, it is preferable that the resin component of the surface protective layer 207 is substantially composed of a curable resin. The term "substantially" refers to, for example, 80 parts by mass or more when the entire resin is set to 100 parts by mass. The surface protective layer 207 may contain a weathering agent, a plasticizer, a stabilizer, a filler, a dispersant, a dye, a coloring agent such as a pigment, a solvent, or the like as necessary.

As a material for the surface protective layer 207, for example, an ionizing radiation-curable resin or a two-component curable urethane-based resin can be adopted. The ionizing radiation-curable resin is not particularly limited. For example, a transparent resin containing, as a main component, a prepolymer (including an oligomer) and/or a monomer that contains, in a molecule, a radically polymerizable double bond capable of polymerization and crosslinking reaction by irradiation with ionizing radiation, such as irradiation with infrared rays, ultraviolet rays, or electron beams, can be adopted. These prepolymers or monomers can be used alone or in combination of two or more thereof. Specific examples of the prepolymer or monomer include a compound having, in a molecule, a radically polymerizable unsaturated group such as a (meth)acryloyl group and a (meth)acryloyloxy group, or a cationically polymerizable functional group such as an epoxy group. In addition, a polyene/thiol-based prepolymer using a combination of a polyene and a polythiol is also preferable. Here, the (meth)acryloyl group refers to an acryloyl group or a methacryloyl group.

Examples of the prepolymer having a radically polymerizable unsaturated group include polyester (meth)acrylate, urethane (meth)acrylate, epoxy (meth)acrylate, melamine (meth)acrylate, triazine (meth)acrylate, and silicone (meth)acrylate. A molecular weight of these compounds is preferably approximately 250 to 100,000.

In addition, examples of the monomer having a radically polymerizable unsaturated group include, as a monofunctional monomer, methyl (meth)acrylate, 2-ethylhexyl (meth)acrylate, and phenoxyethyl (meth)acrylate. In addition, examples thereof include, as a polyfunctional monomer, diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth) acrylate.

In addition, examples of the prepolymer having a cationically polymerizable functional group include a prepolymer of an epoxy-based resin such as a bisphenol-type epoxy resin and a novolac-type epoxy compound, and a prepolymer of a vinyl ether-based resin such as a fatty acid-based vinyl ether and an aromatic-based vinyl ether.

In addition, examples of the polyene-based prepolymer include prepolymers in which allyl alcohol is added to both ends of a polyurethane formed from a diol and a diisocyanate. In addition, examples of the thiol-based prepolymer include polythiols such as trimethylolpropane trithioglycolate and pentaerythritol tetrathioglycolate.

As the ionizing radiation, for example, electromagnetic waves or charged particles having energy capable of causing a molecule in the ionizing radiation-curable resin (composition) to undergo a curing reaction can be adopted. Examples of the curing reaction include a crosslinking curing reaction. In addition, as an ultraviolet light source, for example, a light source such as an ultra-high pressure mercury lamp, a high pressure mercury lamp, a low pressure mercury lamp, a carbon arc lamp, a black light, and a metal halide lamp can be adopted. A wavelength of the ultraviolet rays is, for example, preferably 190 nm or more and 380 nm or less. In addition, as an electron beam source, for example, an electron beam accelerator such as a Cockcroft-Walton type, a Van de Graaff type, a resonant transformer type, an insulated core transformer type, a linear type, a dynamitron type, and a high-frequency type can be adopted. In particular, it is preferable that an electron having an energy of 100 keV or more and 1,000 keV or less (more preferably an electron having an energy of 100 keV or more and 300 keV or less) can be emitted.

The two-component curable urethane-based resin is not particularly limited. For example, a two-component curable urethane-based resin containing a polyol component having an OH group as a main agent and an isocyanate component as a curing agent component can be adopted. Examples of the polyol component having an OH group include acrylic polyol, polyester polyol, polyether polyol, and epoxy polyol. In addition, examples of the isocyanate component include tolylene diisocyanate, hexamethylene diisocyanate, and metaxylylene diisocyanate.

### [Embossed part]

The embossed part 207a having an uneven design (uneven shape) is formed on the surface of the surface protective layer 207 in order to impart intended design properties. Examples of the uneven design include vessel grooves of a wood-grain board, surface irregularities of a stone slab (for example, a cleaved surface of granite), a cloth surface texture, a pear-skin finish, a sand-grain pattern, a hairline finish, and a pattern of numerous linear grooves. The embossed part 207a is provided such that the uneven design is in register with the picture pattern of the picture pattern layer 205.

As a method of forming the uneven design, for example, an embossing process can be adopted. A method of the embossing process is not particularly limited. For example, a known single sheet embossing machine or a rotary embossing machine can be adopted. A region where the embossed part 207a is formed is a matte region and a region where the embossed part 207a is not formed is a gloss region, and the gloss matte expression can be exhibited by the matte region and the gloss region.

In order to exhibit sufficient gloss matte expression, a surface roughness of the region of the embossed part 207a in which the uneven shape is formed on the surface satisfies the following. That is, the uneven shape of the embossed part 207a and a region 207b (hereinafter, also referred to as a non-embossed region) of the surface protective layer 207 in which the uneven shape (embossed part 207a) is not formed are formed such that a difference value ΔGM(Sa) of an arithmetic mean height Sa of these surfaces satisfies ΔGM(Sa) ≥ 1.6 and a difference value ΔGM(Sz) of a maximum height Sz of these surfaces satisfies ΔGM(Sz) ≥ 5.4. It is more preferable that the uneven shape of the embossed part 207a and the non-embossed region 207b of the surface protective layer 207 are formed such that the difference value ΔGM(Sa) of an arithmetic mean height Sa of these surfaces satisfies ΔGM(Sa) > 1.8 and a difference value ΔGM(Sz) of a maximum height Sz of these surfaces satisfies ΔGM(Sz) > 9.4.

### [Gloss matte-expressing pattern part]

The gloss matte-expressing pattern part 203 is formed from a material having light absorptivity with respect to light having a predetermined wavelength, and is formed of, for example, a material having infrared-absorbing property. The gloss matte-expressing pattern part 203 is formed from a material containing a black ink containing carbon black, and is formed of, for example, a urethane-based printing ink. The gloss matte-expressing pattern part 203 is disposed at a position in register with the picture pattern of the picture pattern layer 205. For example, when the picture pattern layer 205 has a wood grain pattern, the gloss matte-expressing pattern part 203 is formed at a position overlapping the wood-grain board vessel groove of the picture pattern layer 205 in a plan view. The term "in register with" as used herein means that the gloss matte-expressing pattern part 203 and the picture pattern of the picture pattern layer 205 are formed to substantially match each other in a plan view.

A thickness of the gloss matte-expressing pattern part 203 may be a thickness at which the transparent thermoplastic resin layer 206 and the surface protective layer 207 can be softened to a degree that an uneven shape can be sufficiently formed in the surface protective layer 207 during the embossing process described later. In addition, in order to exhibit sufficient gloss matte expression, it is preferable that a difference in glossiness between a portion where the gloss matte-expressing pattern part 203 is formed and a portion where the gloss matte-expressing pattern part 203 is not formed in a plan view is 5 or more.

In addition, in order to exhibit sufficient gloss matte expression, as described above, the surface roughness of the embossed part 207a and the surface roughness of the non-embossed region 207b need to satisfy the difference value ΔGM(Sa) of the arithmetic mean height Sa, which is ΔGM(Sa) ≥ 1.6, and the difference value ΔGM(Sz) of the maximum height Sz, which is ΔGM(Sz) ≥ 5.4, and thus it is preferable that a black image density (image density) of the gloss matte-expressing pattern part 203 is 20% or more. In addition, since the surface roughness of the embossed part 207a changes according to the black image density of the gloss matte-expressing pattern part 203, and the degree of the gloss matte expression to be exhibited according to the difference value in the surface roughness between the embossed part 207a and the non-embossed region 207b changes, the black image density of the gloss matte-expressing pattern part 203 is determined to exhibit the target degree of the gloss matte expression, and the gloss matte-expressing pattern part 203 is formed at the determined black image density, whereby the target degree of the gloss matte expression can be exhibited.

The gloss matte-expressing pattern part 203 is not limited to the material containing the black ink, and a material containing any ink containing a component having light absorptivity with respect to light having a predetermined wavelength may be used; and in this case, the transparent thermoplastic resin layer 206 and the surface protective layer 207 may be partially softened by irradiating the material with light having a predetermined wavelength, instead of infrared irradiation described later.

### [Light having predetermined wavelength]

As described above, the gloss matte-expressing pattern part 203 is formed from a material having light absorptivity with respect to light having a predetermined wavelength. Examples of the light having a predetermined wavelength include infrared rays, ultraviolet rays, visible rays, electron beams, X-rays, and ion beams.

### [Pattern layer]

The pattern layer 208a is formed on a surface of the colored thermoplastic resin layer 202 opposite to the picture pattern layer 205. The pattern layer 208a is composed of, for example, only the gloss matte-expressing pattern part 203 formed from the material having light absorptivity with respect to infrared rays.

### [Primer layer]

The primer layer 208 is a layer serving as a base layer, and is a layer for improving adhesiveness and corrosion resistance with a substrate (not illustrated) to which the decorative sheet 201 is attached. The primer layer 208 is provided on the surface of the pattern layer 208a opposite to the colored thermoplastic resin layer 202.

The primer layer 208 is formed by using, for example, a polyester-based resin, an organic additive, a pigment, and the like. A rust preventive pigment may be blended in the primer layer 208 for the purpose of improving the corrosion resistance. A thickness of the primer layer 208 is, for example, in a range of 1 µm or more and 10 µm or less.

### [Method for producing decorative sheet]

Next, an example of the method for producing the decorative sheet according to the present embodiment will be described with reference to FIG. 3-2.

First, the colored thermoplastic resin layer 202 is formed. For example, the colored thermoplastic resin layer 202 is formed using a polybutylene terephthalate (PBT) resin at a thickness of 50 µm (FIG. 3-2A).

Next, the picture pattern layer 205 is printed on the colored thermoplastic resin layer 202 using, for example, a urethane-based printing ink, and a polypropylene (PP) having a thickness of 38 µm is further deposited as the transparent thermoplastic resin layer 206 on the picture pattern layer 205. The surface protective layer 207 containing an acrylic resin composition as a main component is deposited on the transparent thermoplastic resin layer 206.

Next, the gloss matte-expressing pattern part 203 is formed on the surface of the colored thermoplastic resin layer 202 opposite to the picture pattern layer 205 to form the pattern layer 208a. For example, the gloss matte-expressing pattern part 203 is formed at a predetermined position in register with the picture pattern of the picture pattern layer 205 using a urethane-based black ink containing carbon black (FIG. 3-2B). In this case, the gloss matte-expressing pattern part 203 is produced with a black image density at which sufficient gloss matte expression can be exhibited, which is set in advance. The black image density is set to a value set in advance as an ink image density at which the surface roughness of the embossed part 207a and the surface roughness of the non-embossed region 207b of the generated decorative sheet can satisfy the difference value ΔGM(Sa) of the arithmetic mean height Sa, which is ΔGM(Sa) ≥ 1.6, and the difference value ΔGM(Sz) of the maximum height Sz, which is ΔGM(Sz) ≥ 5.4.

Subsequently, the primer layer 208 containing, for example, a polyester-based resin is deposited on the colored thermoplastic resin layer 202 including the gloss matte-expressing pattern part 203 to fill a gap between the gloss matte-expressing pattern parts 203, thereby covering an upper surface thereof (FIG. 3-2C).

Subsequently, the entire deposited body in which these layers have been deposited is irradiated with infrared rays as irradiation light in which a power of light having the predetermined wavelength is larger than a power of light having other wavelengths (FIG. 3-2D), and an embossing plate such as an embossing roll is pressed against the surface of the surface protective layer 207 immediately after the infrared irradiation (FIG. 3-2E). As a result, the embossed part 207a is formed in a region overlapping the gloss matte-expressing pattern part 203 in a plan view, and thus the decorative sheet 201 is formed.

Here, the gloss matte-expressing pattern part 203 is formed from a black ink having an infrared-absorbing characteristic. Therefore, when the deposited body is irradiated with infrared rays, in a portion of the surface protective layer 207 overlapping the gloss matte-expressing pattern part 203 in a plan view, the transparent thermoplastic resin layer 206 and the surface protective layer 207 are more likely to be softened than in a portion that does not overlap with the gloss matte-expressing pattern part 203. That is, in the transparent thermoplastic resin layer 206 and the surface protective layer 207 after the infrared irradiation, there are a portion that is likely to be softened and a portion that is difficult to be softened. Therefore, when the transparent thermoplastic resin layer 206 and the surface protective layer 207 are pressed with the embossing plate in this state, the softened portion is likely to form an unevenness, and the portion that is difficult to be softened is unlikely to form an unevenness. That is, the unevenness is likely to be formed in the softened portion of the transparent thermoplastic resin layer 206 and the surface protective layer 207, that is, a portion overlapping the gloss matte-expressing pattern part 203 in a plan view. As a result, the embossed part 207a having an uneven shape in register with the gloss matte-expressing pattern part 203 is likely to be formed only at a position where the transparent thermoplastic resin layer 206 and the surface protective layer 207 overlap the gloss matte-expressing pattern part 203 in a plan view.

In this manner, the embossed part 207a can be formed at a position in register with the picture pattern layer 205, that is, the embossed part 207a in register with the picture pattern layer 205 can be easily formed without performing a high-accuracy positioning operation.

In this case, since the black image density of the gloss matte-expressing pattern part 203 is set to a value at which sufficient gloss matte expression can be exhibited, which is determined in advance, the surface roughness of the embossed part 207a and the surface roughness of the non-embossed region 207b of the produced decorative sheet satisfy the difference value ΔGM(Sa) of the arithmetic mean height Sa, which is ΔGM(Sa) ≥ 1.6, and the difference value ΔGM(Sz) of the maximum height Sz, which is ΔGM(Sz) ≥ 5.4; and as a result, sufficient gloss matte expression is exhibited.

On the other hand, when exhibiting the target degree of the gloss matte expression, first, the target degree of the gloss matte expression of the decorative sheet to be produced is determined, and the black image density of the gloss matte-expressing pattern part required to obtain the target degree of the gloss matte expression is determined. For example, correspondence information between the degree of the gloss matte expression and the black image density of the gloss matte-expressing pattern part is acquired in advance by detecting a relationship between the black image density of the gloss matte-expressing pattern part and the degree of the gloss matte expression obtained when the gloss matte-expressing pattern part is formed at the black image density. Based on the correspondence information, the black image density of the gloss matte-expressing pattern part 203 required to obtain the target degree of the gloss matte expression is specified.

Next, the decorative sheet is produced in the same manner as described above using the gloss matte-expressing pattern part 203 having the specified black image density.

In this case, since the black image density of the gloss matte-expressing pattern part 203 is set to the value at which the target degree of the gloss matte expression is exhibited, when the infrared irradiation is performed, the transparent thermoplastic resin layer 206 and the surface protective layer 207 are softened to a degree corresponding to the black image density, and as a result, a surface profile of the embossed part 207a has a surface roughness corresponding to the black image density. Therefore, the surface roughness of the obtained embossed part 207a and the surface roughness of the non-embossed region 207b satisfy the difference value ΔGM(Sa) of the arithmetic mean height Sa, which is ΔGM(Sa) ≥ 1.6, and the difference value ΔGM(Sz) of the maximum height Sz, which is ΔGM(Sz) ≥ 5.4, and further, the surface roughness at which the target degree of the gloss matte expression can be exhibited is obtained. As a result, the target degree of the gloss matte expression is exhibited.

A timing at which the transparent thermoplastic resin layer 206 and the surface protective layer 207 are pressed with the embossing plate after the infrared irradiation is not limited to immediately after the infrared irradiation, and may be any timing at which the surfaces of the transparent thermoplastic resin layer 206 and the surface protective layer 207 are pressed with the embossing plate to selectively form an uneven shape in a portion softened by the infrared irradiation.

In addition, other steps may be included between the step of forming the surface protective layer 207 and the step of performing the infrared irradiation; and the infrared irradiation need only be performed in a state in which the transparent thermoplastic resin layer 206 and the surface protective layer 207 are formed.

### [Effects of embodiments of third disclosure]

(1) In the decorative sheet 201, the embossing plate is pressed against the deposited body in which the layers have been deposited, after the infrared irradiation, so that the portion overlapping the gloss matte-expressing pattern part 203 in a plan view can be strongly subjected to the embossing process. That is, the embossed part can be easily formed at a desired position without performing high-accuracy positioning or the like of the region to be pressed with the embossing plate. As a result, it is possible to easily obtain a decorative sheet having excellent design properties.
(2) Since the gloss matte-expressing pattern part 203 is provided in a lower layer of the colored thermoplastic resin layer 202, the visibility of the gloss matte-expressing pattern part 203 is low when the decorative sheet 201 is viewed from the surface protective layer 207 side. As a result, although the black ink having a high black image density and having an infrared-absorbing characteristic is used in the gloss matte-expressing pattern part 203, the visibility of the gloss matte-expressing pattern part 203 can be suppressed when the decorative sheet 201 is viewed from the surface protective layer 207 side. Therefore, even when a dark-colored pattern is not used as the picture pattern layer 205, the visibility of the gloss matte-expressing pattern part 203 containing the black ink can be suppressed. As a result, it is possible to adopt a light-colored pattern as the picture pattern layer 205, and it is possible to significantly suppress the restriction on the pattern expression by the picture pattern layer 205 caused by providing the gloss matte-expressing pattern part 203.
   In addition, the colored thermoplastic resin layer 202 and the picture pattern layer 205, and further, the transparent thermoplastic resin layer 206 and the surface protective layer 207 are deposited on the pattern layer 208a including the gloss matte-expressing pattern part 203 that is formed by using the black ink having a high black image density and having an infrared-absorbing characteristic, and the embossed part 207a is formed at a position overlapping the gloss matte-expressing pattern part 203 in a plan view of the surface protective layer 207. Therefore, the visibility of the gloss matte-expressing pattern part 203 that is formed by using the black ink can be reduced, and the influence of the useful gloss matte-expressing pattern part 203 in the production process of the decorative sheet 201 on the appearance of the decorative sheet 201 can be suppressed. As a result, it is possible to obtain the decorative sheet 201 having high design properties in which the picture pattern of the picture pattern layer 205 and the embossed part 207a are brought into register with each other.
(3) Since the gloss matte-expressing pattern part 203 is provided in register with the picture pattern of the picture pattern layer 205, an uneven portion in register with the picture pattern of the picture pattern layer 205 can be formed, that is, a gloss matte expression in register with the picture pattern can be easily exhibited.
(4) Since the surface roughness of the embossed part 207a and the surface roughness of the non-embossed region 207b satisfy the difference value ΔGM(Sa) of the arithmetic mean height Sa, which is ΔGM(Sa) ≥ 1.6, and the difference value ΔGM(Sz) of the maximum height Sz, which is ΔGM(Sz) ≥ 5.4, the gloss matte expression can be effectively exhibited.
(5) Since the degree of the gloss matte expression can be changed according to the black image density of the gloss matte-expressing pattern part 203, the target degree of the gloss matte expression can be exhibited. In addition, by changing the black image density of the gloss matte-expressing pattern part 203, a gloss matte expression with different degrees can be exhibited. Therefore, the gloss matte expression with different degrees can be easily exhibited by changing only the black image density with the same configuration, and the variation in the degree of the gloss matte expression can be increased. Accordingly, for example, it is possible to respond to the request for the degree of the gloss matte expression in a fine manner.
   In addition, in a single decorative sheet, by changing the black image density of the gloss matte-expressing pattern part 203 partially, for example, at a portion of the picture pattern, instead of making the black image density uniform over the entire surface, the gloss matte expression with different degrees can be exhibited in the single decorative sheet, and thus the design properties of the decorative sheet 201 can be further improved.
(6) Since the gloss matte expression is exhibited by providing the unevenness, it is possible to suppress occurrence of gloss matte pattern peeling or the like. Therefore, for example, a gloss matte expression in register can be achieved in flooring materials and the like.

### Examples

Hereinafter, Example and Comparative Example of the decorative sheet according to the third disclosure will be described.

The third disclosure is not limited to the following examples.

### (Example)

A decorative sheet to be evaluated as Example was produced.

Specifically, first, as a substrate, that is, as the colored thermoplastic resin layer 202, a polybutylene terephthalate resin having a thickness of 50 µm was used, and the gloss matte-expressing pattern part 203 was printed on a back surface of the colored thermoplastic resin layer 202. For the gloss matte-expressing pattern part 203, a black ink was solid-printed on the back surface of the colored thermoplastic resin layer 202 using a printing plate in which black image density levels were varied. The black image density was set to seven types of 0%, 20%, 40%, 60%, 70%, 80%, and 90%. As a result, the printing regions of the gloss matte-expressing pattern part 203, in which the black image density was each of 0%, 20%, 40%, 60%, 70%, 80%, and 90%, were formed on the back surface of the colored thermoplastic resin layer 202.

A surface of a printing base material (the colored thermoplastic resin layer 202 on which the black ink was printed) was laminated with polypropylene (PP) having a thickness of 38 µm as the transparent thermoplastic resin layer 206, and then an after-embossing process was carried out. That is, the sheet on which the transparent thermoplastic resin layer 206 was laminated was heated with an infrared heater, and then an embossing roll was pressed to form the embossed part 207a. In this case, the embossing process was carried out under conditions of a paper surface temperature of 135°C and a nip pressure of 850 kg to form a pear-skin pattern such that a depth of embossing was 60 µm.

### [Evaluation method]

### [Surface roughness measurement]

A surface roughness was measured for each black image density (0%, 20%, 40%, 60%, 70%, 80%, and 90%) of the decorative sheet for evaluation. The surface roughness was measured using a 3D measuring laser microscope LEXT OLS4100 (manufactured by Olympus Corporation). As an indicator of the surface roughness, an arithmetic mean height Sa and a maximum height Sz were measured, and a difference value ΔGM(Sa) between the arithmetic mean height Sa at a position where the black image density was 0% and the arithmetic mean height Sa at a position where the black image density was each of 20%, 40%, 60%, 70%, 80%, and 90%, and a difference value ΔGM(Sz) between the maximum height Sz at a position where the black image density was 0% and the maximum height Sz at a position where the black image density was each of 20%, 40%, 60%, 70%, 80%, and 90% were calculated.

### [Glossiness measurement]

For the decorative sheet for evaluation, glossiness was measured at a measurement angle of 85°, and it was checked whether or not gloss matte expression was exhibited. Specifically, a gloss value was measured for each black image density, and a difference value between the gloss value at a position where the black image density was 0% and the gloss value at a position where the black image density was each of 20%, 40%, 60%, 70%, 80%, and 90% was obtained. The glossiness was measured using a micro-tri-gloss meter (manufactured by BYK Chemie Japan K.K.).

### [Gloss matte design properties]

Gloss matte design properties were subjectively evaluated for each black image density (20%, 40%, 60%, 70%, 80%, and 90%). The evaluation standards are as follows.
⊚: the difference in gloss value from the gloss value at a position where the black image density was 0% was more than 3, and it was confirmed that the gloss matte expression was stably exhibited even in consideration of the variation in the production of the decorative sheet.
○: the difference in gloss value from the gloss value at a position where the black image density was 0% was 3 or less, but it was confirmed that the gloss matte expression was exhibited.
×: a degree of the gloss matte expression was weak and not visible.

### [Evaluation results]

The measurement results and the evaluation results of the decorative sheet for evaluation are shown in Table 3. In Table 3, the arithmetic mean height Sa and the maximum height Sz of the decorative sheet for evaluation are rounded in the measurement results.

**[Table 3]**

| | Gloss portion | Matte portion | | | | | |
|---|---|---|---|---|---|---|---|
| Black image density | No black | 20 | 40 | 60 | 70 | 80 | 90 |
| Gloss value | 8.3 | 5.9 | 3.5 | 3.4 | 3.3 | 3.3 | 3.3 |
| Difference in gloss value | 0.0 | 2.4 | 4.8 | 4.9 | 5.0 | 5.0 | 5.0 |
| Sa | 1.4 | 3.0 | 6.0 | 3.2 | 4.7 | 3.9 | 3.7 |
| ΔGM (Sa) | - | 1.6 | 4.6 | 1.8 | 3.3 | 2.5 | 2.3 |
| Sz | 79.9 | 85.3 | 134.2 | 89.4 | 112.5 | 89.3 | 90.4 |
| ΔGM (Sz) | - | 5.4 | 54.3 | 9.5 | 32.6 | 9.4 | 10.5 |
| GM design properties (Sensory evaluation) | - | ○ | ⊚ | ⊚ | ⊚ | ⊚ | ⊚ |

As shown in Table 3, when the black image density was 20% or more, it was found that the difference value of the arithmetic mean height Sa of the decorative sheet for evaluation satisfied ΔGM(Sa) ≥ 1.6, the difference value of the maximum height Sz satisfied ΔGM(Sz) ≥ 5.4, and thus the gloss matte phenomenon was exhibited. In addition, when the black image density was 40% or more, the difference in gloss value was approximately 5.0, and the gloss matte phenomenon was stably exhibited; and in a case where the black image density was 20%, the difference in gloss value was slightly smaller at approximately 2.4, but it was found that the gloss matte phenomenon was exhibited.

Furthermore, in a range in which the black image density was 20% to 60%, it was found that the difference in gloss value increased as the black image density increased, and the degree of the gloss matte phenomenon was further increased. That is, it was found that, as the black image density was higher, the degree of the gloss matte phenomenon increased.

### <Fourth disclosure>

### [Technical Field]

A fourth disclosure of the present invention relates to an ink for forming a gloss matte-expressing pattern part and a method for producing a decorative sheet.

### [Background Art]

In the related art, a decorative material in which a decorative sheet is bonded to a wooden substrate such as plywood, medium density fiberboard (MDF), and particleboard, a resin substrate, an inorganic non-combustible substrate, a metal substrate, or the like is widely used (for example, see PTL 1). In addition, as a design of the decorative sheet, a surface of wood, stone, or the like is often imitated.

### [Citation List]

### [Patent Literature]

PTL 1: JP 5045180 B

### [Summary of Invention]

### [Technical Problem]

Meanwhile, in the decorative sheet, a texture of a surface is likely to be flat as compared with the genuine material of real wood, stone, or the like. In real wood or stone, there is a difference in unevenness and a difference in texture depending on the location due to a difference in material, structure, and the like of the surface. In a portion where the texture is different, color tone also often differs, but such differences are not expressed in the decorative sheet, and the more expensive genuine material is superior in terms of design.

The fourth disclosure of the present invention has been made in view of the above-described points, and an object thereof is to provide an ink for forming a gloss matte-expressing pattern part, which is used in a production step of a decorative sheet having a texture close to a surface texture of wood, stone, or the like used in building materials and having excellent design properties, and to provide a method for producing the decorative sheet.

### [Solution to Problem]

According to one aspect of the fourth disclosure, there is provided an ink for forming a gloss matte-expressing pattern part, which is used in a method for producing a decorative sheet, the method including depositing a colored resin layer, a picture pattern layer, a transparent resin layer, and a surface protective layer in this order, forming, on the other surface of the colored resin layer, a gloss matte-expressing pattern part at a position in register with a picture pattern of the picture pattern layer, performing irradiation with light having a wavelength in a range of 800 nm or more and 2,500 nm or less, in which a power of the light is larger than a power of light having other wavelengths, after depositing and forming the gloss matte-expressing pattern part, and pressing the surface protective layer with an embossing plate to form an embossed part after performing the irradiation with the light, where the ink has a characteristic of absorbing the light having a wavelength in a range of 800 nm or more and 2,500 nm or less more strongly than the light having other wavelengths.

In addition, according to another aspect of the fourth disclosure, there is provided a method for producing a decorative sheet, the method including: depositing a colored resin layer, a picture pattern layer, a transparent resin layer, and a surface protective layer in this order; forming, on the other surface of the colored resin layer, a gloss matte-expressing pattern part at a position in register with a picture pattern of the picture pattern layer using a material having a characteristic of absorbing light having a wavelength in a range of 800 nm or more and 2,500 nm or less more strongly than light having other wavelengths; performing irradiation with the light having a wavelength in a range of 800 nm or more and 2,500 nm or less, in which a power of the light is larger than a power of the light having other wavelengths, after depositing and forming the gloss matte-expressing pattern part; and pressing the surface protective layer with an embossing plate to form an embossed part after performing the irradiation with the light.

### [Advantageous Effects of Invention in Fourth Disclosure]

According to an embodiment of the fourth disclosure, it is possible to easily obtain a decorative sheet having a texture close to a surface texture of wood, stone, or the like used in building materials, and having excellent design properties.

### [Description of Embodiments]

Hereinafter, an embodiment of the fourth disclosure of the present technology will be described with reference to the drawings.

Here, the drawings are schematic, and a relationship between a thickness and a planar dimension, a ratio of a thickness of each layer, and the like are different from actual ones. As long as it falls within the scope of the fourth disclosure, it is not necessary that the layers are deposited in the order shown in the drawings. In addition, a layer not shown in the drawings may be added. In addition, the embodiments shown below exemplify configurations for implementing the technical idea of the fourth disclosure, and the technical idea of the fourth disclosure is not intended to limit materials, shapes, structures, and the like of constituent components to the following embodiments. The technical idea of the fourth disclosure can be variously modified within the technical scope defined by the claims described in CLAIMS.

In addition, directions of "left and right" and "up and down" used in the following description are merely defined for convenience of description, and are not intended to limit the technical idea of the present disclosure. Therefore, for example, the terms "left and right" and "up and down" are to be read as being interchangeable by rotating the paper surface by 90 degrees, and it is needless to say that "left" and "right" are reversed by rotating the paper surface by 180 degrees.

### [Configuration of decorative sheet]

For example, as illustrated in FIG. 4-1, a decorative sheet 301 according to the embodiment of the fourth disclosure is formed by depositing a colored thermoplastic resin layer (colored resin layer) 302, a picture pattern layer 303, a transparent thermoplastic resin layer (transparent resin layer) 304, and a surface protective layer 305 in this order, in which an embossed part (embossed shape) 305a is formed in the surface protective layer 305. In addition, a gloss matte-expressing pattern part 306 is formed on a surface of the colored thermoplastic resin layer 302 opposite to the picture pattern layer 303, and a primer layer 307 is formed to cover the gloss matte-expressing pattern part 306 and the colored thermoplastic resin layer 302.

### [Colored thermoplastic resin layer]

Examples of the colored thermoplastic resin layer 302 include polyvinyl chloride, polyethylene terephthalate, polybutylene terephthalate, polyamide, polyethylene, polypropylene, polycarbonate, polyethylene naphthalate, an ethylene-vinyl acetate copolymer, an ethylene-acrylic acid copolymer, an ethylene-acrylic acid ester copolymer, an ionomer, an acrylic acid ester, and a methacrylic acid ester. Among the above, a polyolefin-based resin can be preferably used from the viewpoint of environmental compatibility, processability, and cost. The grade or formulation of the resin can be selected in consideration of the ease of sheeting, printability, and suitability for bending.

As the colored thermoplastic resin layer 302, a hue can be appropriately selected as a base color of the picture pattern layer 303. The colored thermoplastic resin layer 302 can be colored, for example, by mixing or kneading a coloring agent such as a pigment when sheeting a thermoplastic resin. Alternatively, a colored thermoplastic resin layer can be provided as a solid ink layer before providing the gloss matte-expressing pattern part 306 by a coating technique or a printing technique.

A thickness of the colored thermoplastic resin layer 302 may be a thickness generally used as the thickness of the colored thermoplastic resin layer 302 in decorative sheets (50 µm or more and 70 µm or less), and is, for example, approximately 50 um.

### [Picture pattern layer]

The picture pattern layer 303 is a printed layer in which a picture pattern design is printed to impart design properties to the decorative sheet 301. As a method of forming the picture pattern layer 303, a known printing technique can be adopted. The printing technique is not particularly limited, but from the viewpoint of productivity and quality of a picture pattern, a gravure printing technique is preferable. In addition, for example, when the colored thermoplastic resin layer 302 can be prepared in a rolled state, printing for forming the picture pattern layer 303 can be performed by using a roll-to-roll printing device. In addition to the above, examples of the printing technique include an offset printing technique, a screen printing technique, a flexographic printing technique, an electrostatic printing technique, an ink jet printing technique, and a transfer printing technique from a transfer sheet. When such a printing technique is adopted, the picture pattern design of the picture pattern layer 303 can be formed by multicolor printing using ordinary process colors of yellow, red, blue, and black, and can also be formed by multicolor printing or the like using spot colors, which is carried out by preparing individual color plates constituting the picture pattern design.

In addition, the picture pattern design of the picture pattern layer 303 may be any picture pattern design in consideration of design properties for flooring materials or fittings. For example, in order to evoke the image of a stone floor such as marble, the picture pattern design can be a marble grain or the like. In addition, for example, as a wood-based picture pattern, various wood-grain picture patterns and cork picture patterns can be used as the picture pattern design. Furthermore, for example, in addition to picture pattern designs of natural materials, an artificial picture pattern design using these as a motif and an artificial picture pattern design such as a geometric pattern can also be used. In addition to the above, examples of the picture pattern design include a wood grain pattern composed of springwood regions and latewood regions and vessel portions in an annual ring cross section, a leather (leather grain) pattern, stone grain patterns and sand grain patterns on surfaces of stone materials such as marble, granite, and sandstone, tile patterns, brick patterns, fabric patterns, geometric figures, letters, symbols, abstract patterns, flower and plant patterns, landscapes, and characters.

A printing ink is a mixture of a solvent and solid contents such as a coloring agent and a binder resin.

Examples of the solvent include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, n-propyl alcohol, isopropyl alcohol, isobutyl alcohol, ethylene glycol, and propylene glycol; ketone-based organic solvents such as acetone, methyl ethyl ketone, methyl isobutyl ketone, and cyclohexanone; ether-based organic solvents such as diethyl ether, dioxane, and tetrahydrofuran; chlorine-based organic solvents such as dichloromethane, carbon tetrachloride, trichloroethylene, and tetrachloroethylene; and inorganic solvents such as water. The solvent may be used alone or in combination of two or more kinds thereof.

In addition, examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocotton), and a cellulose acetate resin. Examples of the chlorine-based resin include polyvinyl chloride-based resins such as polyvinyl chloride, chlorinated polyethylene, polyvinylidene chloride, ethylene-vinyl chloride copolymer, vinyl chloride-vinyl acetate copolymer, and vinyl chloride-vinyl acetate-(meth)acrylic copolymer; and polychloropropylene and chlorinated polypropylene. Here, (meth)acrylic refers to acrylic or methacrylic. The binder resin may be used alone or in combination of two or more kinds thereof.

In addition, examples of the coloring agent include inorganic pigments such as carbon black, iron black, titanium white (titanium oxide), antimony white, chrome yellow, titanium yellow, iron oxide red, cadmium red, ultramarine, and cobalt blue; and organic pigments such as quinacridone red, isoindolinone yellow, and phthalocyanine blue. The coloring agent may be used alone or in combination of two or more kinds thereof.

Here, the solvent contained in the printing ink eventually volatilizes. Therefore, the picture pattern layer 303 is mainly formed of solid contents such as the coloring agent and the binder resin.

In addition, the printing ink may contain a stabilizer, a plasticizer, a catalyst, a curing agent, and the like as other components. As the printing ink, an ink suitable for the printing technique may be adopted. In particular, it is preferable to select the printing ink in consideration of adhesiveness to the colored thermoplastic resin layer 302, printability, and weather resistance as flooring materials or fittings. A thickness of the picture pattern layer 303 can be appropriately adjusted in consideration of decorative properties required for the picture pattern layer 303, three-dimensional formability of the decorative sheet 1, and the like. The thickness of the picture pattern layer 303 is usually 1 µm or more and 1 mm or less, preferably 2 µm or more and 0.1 mm or less, and more preferably 2 µm or more and 50 µm or less.

In order to improve adhesiveness between the picture pattern layer 303 and the transparent thermoplastic resin layer 304, an adhesive layer (not illustrated) may be provided on a surface of the picture pattern layer 303 in contact with the transparent thermoplastic resin layer 304. By firmly adhering these layers, bending processability of following a curved surface or a right-angle surface can be imparted to the decorative sheet 301. A resin used in the adhesive layer (not illustrated) is not particularly limited. For example, a two-component curable urethane-based resin can be adopted. In addition, the transparent thermoplastic resin layer 304 may be adhered to the picture pattern layer 303 by using a urethane-based adhesive as an adhesive resin. For example, a coating device or a gravure printing device can be adopted for applying the resin used in the adhesive layer (not illustrated).

In addition, in order to suitably impart a design effect such as a sense of depth and brightness in the decorative sheet 301, a lustrous layer (not illustrated) may be provided between the picture pattern layer 303 and the transparent thermoplastic resin layer 304. The lustrous layer (not illustrated) preferably contains a lustrous pigment and a binder resin. Examples of the lustrous pigment include a pearl pigment and a metal pigment. In particular, the pearl pigment is preferable because the lustrous layer can suppress a decrease in light transmittance and thus does not impair visibility of the picture pattern layer 303.

The pearl pigment is a pigment capable of imparting a pearlescent luster. Examples thereof include a pigment in which a surface of a base particle is coated with a metal oxide. The base particle is preferably a flake-like particle such as mica. Examples of the metal oxide include oxides of metals such as titanium, iron, zirconium, silicon, aluminum, and cerium. The metal oxide may be used alone or in combination of two or more kinds thereof. Specific examples thereof include titanium mica, iron oxide-coated mica, iron oxide-coated titanium mica, Prussian blue-coated titanium mica, Prussian blue-iron oxide-coated titanium mica, chromium oxide-coated titanium mica, carmine-coated titanium mica, organic pigment-coated titanium mica, titanium oxide-coated mica, and titanium oxide-coated synthetic mica as oxide-coated mica; glass powder coated with titanium oxide, glass powder coated with iron oxide, and the like as oxide-coated glass powder; aluminum powder coated with titanium oxide and the like as oxide-coated metal particles; scale-like foil pieces of basic lead carbonate, lead hydrogen arsenate, bismuth oxychloride, and the like; and fish scale powder, shell pieces, and pearl pieces.

In addition, examples of the metal pigment include pigments composed of metals such as aluminum, brass, stainless steel, tin, zinc, copper, nickel, gold powder, and silver, and alloys of these metals. The metal pigment may be used alone or in combination of two or more kinds thereof.

From the viewpoint of imparting an excellent design effect, for example, when the lustrous layer is formed by gravure printing, an average particle diameter of the lustrous pigment is preferably 40 µm or less, and more preferably 30 µm or less. From the same viewpoint, a ratio of [average particle diameter of lustrous pigment/thickness of lustrous layer] is preferably 0.01 or more and 15 or less, and more preferably 0.5 or more and 10 or less. In the present specification, the "average particle diameter" is a value that can be obtained as a mass average value D50 in particle size distribution measurement by a laser light diffraction method.

In addition, examples of the binder resin include a thermoplastic resin and a cured substance of a curable resin composition, and from the viewpoint of durability, a cured substance of a curable resin composition is preferable. Examples of the cured substance of the curable resin composition include a cured substance of a thermosetting resin composition and a cured substance of an ionizing radiation-curable resin composition. From the viewpoint of interlayer adhesiveness, a cured substance of a thermosetting resin composition is preferable.

Examples of the thermosetting resin composition used in the lustrous layer include a polyester resin composition, an epoxy resin composition, a polyurethane resin composition, an amino alkyd resin composition, a melamine resin composition, a guanamine resin composition, a urea resin composition, and a thermosetting acrylic resin composition. Each of these thermosetting resin compositions contains monomers and/or prepolymers constituting each resin, a curing agent to be added as necessary, and the like. As the ionizing radiation-curable resin composition used in the lustrous layer, the same composition as an ionizing radiation-curable resin composition of the surface protective layer 305, which will be described later, can be used.

A contained amount of the lustrous pigment in the lustrous layer is preferably 10 parts by mass or more and 90 parts by mass or less, and more preferably 50 parts by mass or more and 80 parts by mass or less with respect to 100 parts by mass of the binder resin. By setting the contained amount of the lustrous pigment to 10 parts by mass or more, luster can be sufficiently imparted; and by setting the contained amount of the lustrous pigment to 90 parts by mass or less, it is possible to suppress impairment of the visibility of the picture pattern layer 303. From the same viewpoint, a thickness of the lustrous layer is preferably 1 µm or more and 30 µm or less, and more preferably 5 µm or more and 20 µm or less.

The lustrous layer can form any pattern depending on the design to be imparted. Examples thereof include wood grain patterns, leather patterns, stone grain patterns, sand grain patterns, tile-laying patterns, brick-laying patterns, fabric patterns, geometric figures, letter patterns, symbols, abstract patterns, flower-and-plant patterns, landscapes, and character figures. In addition, the pattern is preferably gradated in order to further enhance the design effect. The gradation may be formed from a size of halftone dots or a thickness of halftone dots, but it is preferable to form the gradation from sparseness and denseness of halftone dots (that is, to form the gradation from a density of halftone dots with halftone dots having a uniform size).

The lustrous layer can be formed by a general printing means such as gravure printing using a coating liquid containing the lustrous pigment and the binder resin. When the gradation of the lustrous layer is formed by the sparseness and denseness of the halftone dots, halftone dots of a printing plate may be formed by a frequency modulation (FM) screen.

### [Transparent thermoplastic resin layer]

The transparent thermoplastic resin layer 304 is a resin layer that protects the picture pattern layer 303 and imparts favorable surface properties so that, in terms of design, the decorative sheet 301 has a sense of thickness and depth and has improved weather resistance and abrasion resistance. A material for the transparent thermoplastic resin layer 304 is not particularly limited, and for example, a vinyl chloride resin, an acrylic resin, or a polyolefin-based resin (a polypropylene resin or a polyethylene resin) can be used. In particular, a polyolefin-based resin is preferable from the viewpoint of environmental compatibility, processability, and cost. In addition, the grade or formulation of the resin can be selected in consideration of environmental compatibility, processability, and cost, the ease of sheeting, printability, and suitability for bending. As for the suitability for bending, it is important to make a selection in consideration of whether whitening or cracking occurs in a bent portion.

As a method of forming the transparent thermoplastic resin layer 304, a laminating technique can be adopted. In addition, for example, when the transparent thermoplastic resin layer 304 and the adhesive layer (not illustrated) are formed at the same time, a method of simultaneously extruding both layers by coextrusion can be adopted.

A thickness of the transparent thermoplastic resin layer 304 may be a thickness generally used as the thickness of the transparent thermoplastic resin layer 304 in decorative sheets (30 µm or more and 120 µm or less), and is, for example, approximately 80 µm.

### [Surface protective layer]

The surface protective layer 305 is a layer for imparting surface properties such as abrasion resistance to the decorative sheet 301. In addition, the surface protective layer 305 is also a layer for adjusting gloss of the surface of the decorative sheet 301. The surface protective layer 305 may be a single layer or a multilayer. For example, as the surface protective layer 305, two layers of a first surface protective layer (not illustrated) and a second surface protective layer (not illustrated) may be provided on the transparent thermoplastic resin layer 304 in this order. When the surface protective layer 305 consisting of the first surface protective layer (not illustrated) and the second surface protective layer (not illustrated) is provided, each layer may be coated and the resulting coating film may be cured, according to the type of a curable resin, using a known coating device, a thermal drying device, or an ionizing radiation irradiation device.

The surface protective layer 305 contains a curable resin as a main component. That is, it is preferable that the resin component of the surface protective layer 305 is substantially composed of a curable resin. The term "substantially" refers to, for example, 80 parts by mass or more when the entire resin is set to 100 parts by mass. The surface protective layer 305 may contain a weathering agent, a plasticizer, a stabilizer, a filler, a dispersant, a dye, a coloring agent such as a pigment, a solvent, or the like as necessary.

As a material for the surface protective layer 305, for example, an ionizing radiation-curable resin or a two-component curable urethane-based resin can be adopted. The ionizing radiation-curable resin is not particularly limited. For example, a transparent resin containing, as a main component, a prepolymer (including an oligomer) and/or a monomer that contains, in a molecule, a radically polymerizable double bond capable of polymerization and crosslinking reaction by irradiation with ionizing radiation, such as irradiation with infrared rays, ultraviolet rays, or electron beams, can be adopted. These prepolymers or monomers can be used alone or in combination of two or more thereof. Specific examples of the prepolymer or monomer include a compound having, in a molecule, a radically polymerizable unsaturated group such as a (meth)acryloyl group and a (meth)acryloyloxy group, or a cationically polymerizable functional group such as an epoxy group. In addition, a polyene/thiol-based prepolymer using a combination of a polyene and a polythiol is also preferable. Here, the (meth)acryloyl group refers to an acryloyl group or a methacryloyl group.

Examples of the prepolymer having a radically polymerizable unsaturated group include polyester (meth)acrylate, urethane (meth)acrylate, epoxy (meth)acrylate, melamine (meth)acrylate, triazine (meth)acrylate, and silicone (meth)acrylate. A molecular weight of these compounds is preferably approximately 250 to 100,000.

In addition, examples of the monomer having a radically polymerizable unsaturated group include, as a monofunctional monomer, methyl (meth)acrylate, 2-ethylhexyl (meth)acrylate, and phenoxyethyl (meth)acrylate. In addition, examples thereof include, as a polyfunctional monomer, diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, and dipentaerythritol hexa(meth)acrylate.

In addition, examples of the prepolymer having a cationically polymerizable functional group include a prepolymer of an epoxy-based resin such as a bisphenol-type epoxy resin and a novolac-type epoxy compound, and a prepolymer of a vinyl ether-based resin such as a fatty acid-based vinyl ether and an aromatic-based vinyl ether.

In addition, examples of the polyene-based prepolymer include prepolymers in which allyl alcohol is added to both ends of a polyurethane formed from a diol and a diisocyanate. In addition, examples of the thiol-based prepolymer include polythiols such as trimethylolpropane trithioglycolate and pentaerythritol tetrathioglycolate.

As the ionizing radiation, for example, electromagnetic waves or charged particles having energy capable of causing a molecule in the ionizing radiation-curable resin (composition) to undergo a curing reaction can be adopted. Examples of the curing reaction include a crosslinking curing reaction. In addition, as an ultraviolet light source, for example, a light source such as an ultra-high pressure mercury lamp, a high pressure mercury lamp, a low pressure mercury lamp, a carbon arc lamp, a black light, and a metal halide lamp can be adopted. A wavelength of the ultraviolet rays is, for example, preferably 190 nm or more and 380 nm or less. In addition, as an electron beam source, for example, an electron beam accelerator such as a Cockcroft-Walton type, a Van de Graaff type, a resonant transformer type, an insulated core transformer type, a linear type, a dynamitron type, and a high-frequency type can be adopted. In particular, it is preferable that an electron having an energy of 100 keV or more and 1,000 keV or less (more preferably an electron having an energy of 100 keV or more and 300 keV or less) can be emitted.

The two-component curable urethane-based resin is not particularly limited. For example, a two-component curable urethane-based resin containing a polyol component having an OH group as a main agent and an isocyanate component as a curing agent component can be adopted. Examples of the polyol component having an OH group include acrylic polyol, polyester polyol, polyether polyol, and epoxy polyol. In addition, examples of the isocyanate component include tolylene diisocyanate, hexamethylene diisocyanate, and metaxylylene diisocyanate.

In addition, the surface protective layer 305 may be formed of the acrylic resin composition as a main component, or may be formed of both the ionizing radiation-curable resin and the acrylic resin composition or formed of the ionizing radiation-curable resin as a main component.

A thickness of the surface protective layer 305 may be a thickness generally used as the thickness of the surface protective layer 305 in decorative sheets.

### [Embossed part]

The embossed part 305a having an uneven design is formed on the surface of the surface protective layer 305 in order to impart intended design properties. Examples of the uneven design include vessel grooves of a wood-grain board, surface irregularities of a stone slab (for example, a cleaved surface of granite), a cloth surface texture, a pear-skin finish, a sand-grain pattern, a hairline finish, and a pattern of numerous linear grooves. The embossed part 305a is provided such that the uneven design is in register with the picture pattern of the picture pattern layer 303.

As a method of forming the uneven design, for example, an embossing process can be adopted. A method of the embossing process is not particularly limited. For example, a known single sheet embossing machine or a rotary embossing machine can be adopted. As a result, a favorable texture close to the genuine material of real wood or stone can be imparted to the decorative sheet 301.

### [Gloss matte-expressing pattern part]

The gloss matte-expressing pattern part 306 is formed by using an ink having a characteristic of absorbing all light in an infrared wavelength range, but absorbing light having a wavelength in a range of 800 nm or more and 2,500 nm or less more strongly than the light having other wavelengths. The ink contains, for example, a black ink containing carbon black, and is formed of a urethane-based printing ink. The ink for forming the gloss matte-expressing pattern part 306 may be a material having light absorptivity of absorbing all light in an infrared wavelength range, but absorbing light having a wavelength in a range of 800 nm or more and 2,500 nm or less more strongly than the light having other wavelengths, and may be, for example, at least one kind of inorganic material of tin-doped indium oxide, antimony-doped tin oxide, lanthanum hexaboride, or cesium-doped tungsten oxide.

The gloss matte-expressing pattern part 306 is disposed at a position in register with the pattern of the picture pattern layer 303 on the surface of the colored thermoplastic resin layer 302 opposite to the picture pattern layer 303. For example, when the picture pattern layer 303 has a wood grain pattern, the gloss matte-expressing pattern part 306 is formed at a position overlapping the wood-grain board vessel groove of the picture pattern layer 303 in a plan view. The term "in register with" as used herein means that the gloss matte-expressing pattern part 306 and the picture pattern of the picture pattern layer 303 are formed at a position overlapping each other in a plan view.

A thickness of the gloss matte-expressing pattern part 306 may be a thickness at which the transparent thermoplastic resin layer 304 and the surface protective layer 305 can be softened to a degree that an uneven shape can be sufficiently formed in the surface protective layer 305 during the embossing process described later. Specifically, the thickness of the gloss matte-expressing pattern part 306 is 1 µm or more and 1 mm or less, preferably 1 µm or more and 0.1 mm or less, and more preferably 1 µm or more and 50 µm or less.

In order to obtain a sufficient gloss matte effect, it is preferable that a difference in glossiness between a portion where the gloss matte-expressing pattern part 306 is formed and a portion where the gloss matte-expressing pattern part 306 is not formed in a plan view is 3 or more, that is, it is preferable that an image density level is 60% or more.

By forming the gloss matte-expressing pattern part 306 using the ink having a characteristic of absorbing all light in an infrared wavelength range, but absorbing light having a wavelength in a range of 800 nm or more and 2,500 nm or less more strongly than the light having other wavelengths, in a state in which the gloss matte-expressing pattern part 306, the colored thermoplastic resin layer 302, the picture pattern layer 303, the transparent thermoplastic resin layer 304, and the surface protective layer 305 are deposited, an infrared transmittance with respect to light having the same wavelength in a range of 800 nm or more and 2,500 nm or less is smaller in a portion overlapping the gloss matte-expressing pattern part 306 in a plan view than in a portion that does not overlap the gloss matte-expressing pattern part 306; and more specifically, an infrared transmittance of the portion overlapping the gloss matte-expressing pattern part 306 in a plan view with respect to light having a wavelength of 2,500 nm is 23.6% or less, an infrared transmittance with respect to light having a wavelength of 2,000 nm is 16.5% or less, and an infrared transmittance with respect to light having a wavelength of 800 nm is 1.4% or less. Therefore, the portion overlapping the gloss matte-expressing pattern part 306 in a plan view can more selectively absorb the light in a range of 800 nm or more and 2,500 nm or less than the portion that does not overlap the gloss matte-expressing pattern part 306.

### [Primer layer]

The primer layer 307 is a layer serving as a base layer, and is a layer for improving adhesiveness and corrosion resistance with a substrate (not illustrated) to which the decorative sheet 301 is attached. The primer layer 307 is formed on the surface of the colored thermoplastic resin layer 302 opposite to the picture pattern layer 303 to cover the gloss matte-expressing pattern part 306.

The primer layer 307 is formed by using, for example, a polyester-based resin, an organic additive, a pigment, and the like. A rust preventive pigment may be blended in the primer layer 307 for the purpose of improving the corrosion resistance. A thickness of the primer layer 307 is, for example, in a range of 1 µm or more and 10 µm or less.

### [Method for producing decorative sheet]

Next, an example of the method for producing the decorative sheet according to the present embodiment will be described with reference to FIG. 4-2.

First, the colored thermoplastic resin layer 302 is formed. For example, the colored thermoplastic resin layer 302 is formed by using a polyethylene (PE) resin at a thickness of 55 µm (FIG. 4-2A).

Next, the picture pattern layer 303 is printed on one surface of the colored thermoplastic resin layer 302 using, for example, a urethane-based printing ink.

Next, the gloss matte-expressing pattern part 306 is formed on the surface of the colored thermoplastic resin layer 302 opposite to the picture pattern layer 303. For example, the gloss matte-expressing pattern part 306 is formed at a predetermined position in register with the picture pattern of the picture pattern layer 303 using a urethane-based printing ink that contains a black ink containing carbon black (FIG. 4-2B).

Next, the primer layer 307 containing, for example, a polyester-based resin is formed on the colored thermoplastic resin layer 302 including the gloss matte-expressing pattern part 306 to fill a gap between the gloss matte-expressing pattern parts 306, thereby covering an upper surface thereof (FIG. 4-2C).

Next, a polypropylene (PP) resin having a thickness of 90 µm is deposited as the transparent thermoplastic resin layer 304 on the surface of the picture pattern layer 303 opposite to the colored thermoplastic resin layer 302. The surface protective layer 305 containing an acrylic resin composition and a UV resin as main components is deposited on the transparent thermoplastic resin layer 304. As a result, the picture pattern layer 303, the transparent thermoplastic resin layer 304, and the surface protective layer 305 are deposited in this order on one surface of the colored thermoplastic resin layer 302 (FIG. 4-2D).

An adhesive layer formed of an adhesive resin containing a urethane-based adhesive may be provided between the picture pattern layer 303 and the transparent thermoplastic resin layer 304.

Subsequently, the entire deposited body illustrated in FIG. 4-2D, in which these layers are deposited, is irradiated with light having a wavelength in a range of 800 nm or more and 2,500 nm or less, in which a power of the light is larger than a power of light having other wavelengths, from the surface protective layer 305 side (FIG. 4-2E), and an embossing plate such as an embossing roll is pressed against the surface of the surface protective layer 305 immediately after the light irradiation (FIG. 4-2F). As a result, the embossed part 305a is formed, and the decorative sheet 301 is formed.

Here, the gloss matte-expressing pattern part 306 is formed from a black ink having a characteristic of absorbing all light in an infrared wavelength range, but absorbing light having a wavelength in a range of 800 nm or more and 2,500 nm or less more strongly than light having other wavelengths. Therefore, when the deposited body is irradiated with light having a wavelength in a range of 800 nm or more and 2,500 nm or less, in which the power of the light is larger than the power of light having other wavelengths, in a portion of the surface protective layer 305 overlapping the gloss matte-expressing pattern part 306 in a plan view, the transparent thermoplastic resin layer 304 and the surface protective layer 305 are more likely to be softened than in a portion that does not overlap with the gloss matte-expressing pattern part 306. That is, in the transparent thermoplastic resin layer 304 and the surface protective layer 305 after the infrared irradiation, there are a portion that is likely to be softened and a portion that is difficult to be softened. Therefore, when the surface protective layer 305 is pressed with the embossing plate in this state, the softened portion is likely to form an unevenness, and the portion that is difficult to be softened is unlikely to form an unevenness. Accordingly, the unevenness is likely to be formed in the softened portion of the transparent thermoplastic resin layer 304 and the surface protective layer 305, that is, a portion overlapping the gloss matte-expressing pattern part 306 in a plan view. As a result, the embossed part 305a having an uneven shape in register with the gloss matte-expressing pattern part 306 is likely to be formed only at a position where the transparent thermoplastic resin layer 304 and the surface protective layer 305 overlap the gloss matte-expressing pattern part 306 in a plan view.

In this manner, the embossed part 305a can be formed at a position in register with the picture pattern layer 303, that is, the embossed part 305a in register with the picture pattern layer 303 can be easily formed without performing a high-accuracy positioning operation. In this way, since there are a region where the embossed part 305a is formed and a region where the embossed part 305a is not formed on the surface protective layer 305, the gloss matte is exhibited.

It is considered that the thermal energy retained by the gloss matte-expressing pattern part 306 by the infrared irradiation is affected by the infrared transmittance or the reflectivity of each layer constituting the deposited body, but the thermal energy retained by the other layers is uniform regardless of the region where the gloss matte-expressing pattern part 306 is formed and the region where the gloss matte-expressing pattern part 306 is not formed. In addition, the thermal energy retained by each layer by the infrared irradiation is extremely small as compared with the absorption energy in the gloss matte-expressing pattern part 306, which is negligible. Therefore, the influence of the infrared transmittance or the reflectivity of the other layers on the expression of the gloss matte can be regarded as negligible, and it can be regarded that the gloss matte is exhibited by the relative difference in the thermal energy retained by the region where the gloss matte-expressing pattern part 306 is formed and the thermal energy retained by the region where the gloss matte-expressing pattern part 306 is not formed.

A timing at which the transparent thermoplastic resin layer 304 and the surface protective layer 305 are pressed with the embossing plate after the infrared irradiation is not limited to immediately after the infrared irradiation, and may be any timing at which the surfaces of the transparent thermoplastic resin layer 304 and the surface protective layer 305 are pressed with the embossing plate to selectively form an uneven shape in a portion softened by the infrared irradiation.

In addition, other steps may be included between the step of forming the surface protective layer 305 and the step of performing the infrared irradiation; and the infrared irradiation need only be performed in a state in which the transparent thermoplastic resin layer 304 and the surface protective layer 305 are formed.

### [Effects of embodiments of fourth disclosure]

(1) With the decorative sheet 1 according to the embodiment of the fourth disclosure, the gloss matte-expressing pattern part 306 is formed from a black ink having a characteristic of absorbing all light in an infrared wavelength range, but absorbing light having a wavelength in a range of 800 nm or more and 2,500 nm or less more strongly than light having other wavelengths. Therefore, in a stage in which the gloss matte-expressing pattern part 306, the colored thermoplastic resin layer 302, the picture pattern layer 303, the transparent thermoplastic resin layer 304, and the surface protective layer 305 are deposited, when the deposited body is irradiated with light having a wavelength in a range of 800 nm or more and 2,500 nm or less, in which the power of the light is larger than the power of light having other wavelengths, since the gloss matte-expressing pattern part 306 absorbs the light, a portion overlapping the gloss matte-expressing pattern part 306 in a plan view is more softened than a portion that does not overlap the gloss matte-expressing pattern part 306.

Therefore, after irradiating with the light, the embossing plate is pressed such that the portion overlapping the gloss matte-expressing pattern part 306 in a plan view can be strongly subjected to the embossing process. That is, the embossed part can be easily formed at a desired position without performing high-accuracy positioning or the like of the region to be pressed with the embossing plate. As a result, it is possible to easily obtain a decorative sheet having excellent design properties.

For example, in the picture pattern layer 303 having a wood grain pattern, by forming the gloss matte-expressing pattern part 306 at a position overlapping the wood-grain board vessel groove in a plan view, a tactile sensation in register with the vessel portion of the wood grain as viewed by the eye, that is, a tactile sensation at a position matching the vessel portion can be obtained, and thus the design properties can be further improved.

Since the gloss matte-expressing pattern part 306 has a characteristic of absorbing all light in an infrared wavelength range, but absorbing light having a wavelength in a range of 800 nm or more and 2,500 nm or less more strongly than light having other wavelengths, it is sufficient to irradiate with at least the light having a wavelength of 800 nm or more and 2,500 nm or less, in which the power of the light is larger than the power of light having other wavelengths, and light having a wavelength less than 800 nm or more than 2,500 nm is not required, so that it is possible to suppress irradiation with unnecessary light having a wavelength. That is, it is possible to suppress waste of energy. In particular, since the infrared transmittance of the portion overlapping the gloss matte-expressing pattern part 306 in a plan view with respect to light having a wavelength of 2,500 nm is 23.6% or less, the infrared transmittance with respect to light having a wavelength of 2,000 nm is 16.5% or less, and the infrared transmittance with respect to light having a wavelength of 800 nm is 1.4% or less, the surface protective layer 305 and the transparent thermoplastic resin layer 304 of the portion overlapping the gloss matte-expressing pattern part 306 in a plan view in the deposited body in which the gloss matte-expressing pattern part 306, the colored thermoplastic resin layer 302, the picture pattern layer 303, the transparent thermoplastic resin layer 304, and the surface protective layer 305 are deposited can be more selectively softened, and thus an embossed part having a sufficient depth can be formed.

(2) Since the gloss matte-expressing pattern part 306 is provided in a lower layer of the colored thermoplastic resin layer 302, the visibility of the gloss matte-expressing pattern part 306 is low when the decorative sheet 301 is viewed from the surface protective layer 305 side. As a result, although the black ink having a high density and having an infrared-absorbing characteristic is used in the gloss matte-expressing pattern part 306, the visibility of the gloss matte-expressing pattern part 306 can be suppressed when the decorative sheet 301 is viewed from the surface protective layer 305 side. Therefore, even when a dark-colored pattern is not used as the picture pattern layer 303, the visibility of the gloss matte-expressing pattern part 306 containing the black ink can be suppressed; and as a result, it is possible to adopt a light-colored pattern as the picture pattern layer 303, and it is possible to suppress the restriction on the pattern expression by the picture pattern layer 303 caused by providing the gloss matte-expressing pattern part 306.

(3) The colored thermoplastic resin layer 302 and the picture pattern layer 303, and further, the transparent thermoplastic resin layer 304 and the surface protective layer 305 are deposited on the upper layer of the gloss matte-expressing pattern part 306 using the black ink having a high density and having an infrared-absorbing characteristic, and the embossed part 305a is formed at a position overlapping the gloss matte-expressing pattern part 306 in a plan view of the surface protective layer 305. Therefore, the visibility of the gloss matte-expressing pattern part 306 using the black ink can be reduced, and the influence on the appearance of the decorative sheet 301 of the gloss matte-expressing pattern part 306 that is useful in the manufacturing process of the decorative sheet 301 can be suppressed, so that a decorative sheet 301 having high design properties, in which the picture pattern of the picture pattern layer 303 and the embossed part 305a are in register with each other, can be obtained.

(4) Since the gloss matte-expressing pattern part 306 is provided in register with the picture pattern of the picture pattern layer 303, an uneven portion in register with the picture pattern of the picture pattern layer 303 can be formed, that is, a gloss matte effect in register with the picture pattern can be easily exhibited.

(5) Since the gloss matte expression is performed by providing the unevenness, it is possible to suppress occurrence of gloss matte pattern peeling or the like. Therefore, for example, a gloss matte expression in register can be achieved in flooring materials and the like.

### [Modification example of fourth disclosure]

(1) In the above-described embodiment of the fourth disclosure, a case has been described in which the material containing the black ink is used in the gloss matte-expressing pattern part 306, and the transparent thermoplastic resin layer 304 and the surface protective layer 305 are partially softened by performing the infrared irradiation, but the fourth disclosure is not limited thereto. As the material for the gloss matte-expressing pattern part 306, a material having a characteristic of absorbing light having a wavelength in a range of 800 nm or more and 2,500 nm or less more strongly than light having other wavelengths can be used as the material for the gloss matte-expressing pattern part 306, and the same action and effect as a case of using the black ink can be obtained.
(2) In the above-described embodiment of the fourth disclosure, the gloss matte-expressing pattern part 306 and the primer layer 307 are formed on the other surface of the colored thermoplastic resin layer 302 after the picture pattern layer 303 is deposited on one surface of the colored thermoplastic resin layer 302, and then the transparent thermoplastic resin layer 304 and the surface protective layer 305 are formed on the surface of the picture pattern layer 303 opposite to the colored thermoplastic resin layer 302, but the fourth disclosure is not limited thereto. For example, a step of continuously forming the picture pattern layer 303, the transparent thermoplastic resin layer 304, and the surface protective layer 305 on one surface of the colored thermoplastic resin layer 302 may be performed.
(3) In addition, as illustrated in FIG. 4-3, the decorative sheet 301 according to the above-described embodiment of the fourth disclosure may be bonded to a substrate 309 that is a substrate for a decorative member to form a decorative member 310. In the decorative member 310, the decorative sheet 301 may be provided on at least one surface side of the substrate 309, or may be provided on both surfaces thereof.

### [Substrate]

As the substrate 309, any one of the wooden substrate, the resin substrate, the non-combustible substrate, or the metal substrate can be used. As the wooden substrate, for example, wood veneer, plywood, laminated wood, particleboard, medium-density fiberboard, or hardboard can be adopted. As the resin substrate, for example, a resin such as a plastic resin or a composite material thereof can be adopted. As the non-combustible substrate, for example, a substrate composed of a non-combustible steel plate or a non-combustible substrate formed of a non-combustible material prescribed in Notification No. 1400 of the Ministry of Construction can be adopted. In addition, as the metal substrate, a steel plate or an aluminum plate can be adopted. In addition, the substrate 309 may be a resin such as a plastic resin or a composite material thereof. That is, the substrate 309 may be a resin substrate.

As described above, the decorative member 310 includes the substrate 309 and the decorative sheet 1 provided on at least one surface side of the substrate 309. In addition, as the substrate 309, any one of the wooden substrate, the resin substrate, the non-combustible substrate, or the metal substrate can be used.

As described above, since the decorative sheet 301 includes the primer layer 307, adhesiveness with the substrate 309 can be secured, and thus it is possible to suppress the peeling of the decorative member 310 between the decorative sheet 301 side and the substrate 309 side. In addition, since heat is applied when forming the embossed part 305a, a surface strength of the decorative sheet 301 can be improved, and by using the decorative sheet 301, it is possible to obtain the decorative member 310 having excellent bending processability while ensuring the surface strength.

### [Examples]

The fourth disclosure will be described in more detail with Examples and Comparative Examples. The fourth disclosure is not limited to the following examples.

### (Production of decorative sheets of Examples and Comparative Examples)

### (Example 4-1)

The picture pattern layer 303 was formed by printing a wood grain pattern on one surface of the colored thermoplastic resin layer 302 including a PE layer having a thickness of 55 µm using a urethane-based printing ink.

Next, the gloss matte-expressing pattern part 306 was printed on the other surface of the colored thermoplastic resin layer 302 using a urethane-based printing ink containing a black ink having carbon black as an infrared absorption material. The black ink has a characteristic of absorbing light having a wavelength in a range of 800 nm or more and 2,500 nm or less more strongly than light having other wavelengths.

Next, the transparent thermoplastic resin layer 304 having a thickness of 90 µm was formed by depositing the PP resin by extrusion lamination on the surface of the colored thermoplastic resin layer 302, on which the picture pattern layer 303 was formed.

The surface protective layer 305 was formed on the transparent thermoplastic resin layer 304 using a resin containing an acrylic resin composition and a UV resin as main components, and then an after-embossing step was performed. Specifically, the after-embossing step was performed on the deposited body in which the picture pattern layer, the transparent thermoplastic resin layer, and the surface protective layer were formed on the other surface of the colored thermoplastic resin layer in which the gloss matte-expressing pattern part was formed on one surface, thereby obtaining a decorative sheet in register with the picture pattern of the picture pattern layer. That is, the deposited body was heated with an infrared heater, and then the embossing roll was pressed to form the embossed part 305a, thereby obtaining the decorative sheet of Example 4-1 having the embossed part 305a in register with the picture pattern of the picture pattern layer 303, as illustrated in FIG. 4-1. As irradiation light using the infrared heater, infrared light rich in a short wavelength, that is, infrared light having a large amount of components having a wavelength in a range of 800 nm or more and 2,500 nm or less and having a power stronger than a power of light having other wavelengths was used.

### (Example 4-2)

A decorative sheet of Example 4-2 was obtained by the same procedure as in Example 4-1, except that, in the decorative sheet of Example 4-1, infrared light consisting of the entire wavelength of infrared light, that is, light in a range of 800 nm or more and 1 mm or less was used as the irradiation light using the infrared heater.

### (Example 4-3)

A decorative sheet of Example 4-3 was obtained in the same manner as in Example 4-1, except that, in the decorative sheet of Example 4-1, a urethane-based printing ink using tin-doped indium oxide as an infrared absorption material was used for forming the gloss matte-expressing pattern part 306, instead of the urethane-based printing ink containing the black ink containing carbon black as an infrared absorption material.

### (Example 4-4)

A decorative sheet of Example 4-4 was obtained in the same manner as in Example 4-1, except that, in the decorative sheet of Example 4-1, a urethane-based printing ink using antimony-doped tin oxide as an infrared absorption material was used for forming the gloss matte-expressing pattern part 306, instead of the urethane-based printing ink containing the black ink containing carbon black as an infrared absorption material.

### (Example 4-5)

A decorative sheet of Example 4-5 was obtained in the same manner as in Example 4-1, except that, in the decorative sheet of Example 4-1, a urethane-based printing ink using lanthanum hexaboride as an infrared absorption material was used for forming the gloss matte-expressing pattern part 306, instead of the urethane-based printing ink containing the black ink containing carbon black as an infrared absorption material.

### (Example 4-6)

A decorative sheet of Example 4-6 was obtained in the same manner as in Example 4-1, except that, in the decorative sheet of Example 4-1, a urethane-based printing ink using cesium-doped tungsten oxide as an infrared absorption material was used for forming the gloss matte-expressing pattern part 306, instead of the urethane-based printing ink containing the black ink containing carbon black as an infrared absorption material.

### (Comparative Example 4-1)

A decorative sheet of Comparative Example 4-1 was obtained by the same procedure as in Example 4-1, except that, in the decorative sheet of Example 4-1, the gloss matte-expressing pattern part was printed using a mixed color ink of yellow, red, and blue ink, having a higher infrared transmittance than the black ink containing a urethane-based ink.

### (Comparative Example 4-2)

A decorative sheet of Comparative Example 4-2 was obtained by the same procedure as in Example 4-2, except that, in the decorative sheet of Example 4-2, the gloss matte-expressing pattern part was printed using a mixed color ink of yellow, red, and blue ink, having a higher infrared transmittance than the black ink containing a urethane-based ink.

### [Evaluation]

Each of the decorative sheets of Examples 4-1 to 4-6 and Comparative Examples 4-1 and 4-2 was evaluated by measuring an infrared transmittance, measuring glossiness, and evaluating gloss matte design properties. The evaluation methods are as follows.

### (Measurement of infrared transmittance)

The infrared transmittance was measured in a stage in which the gloss matte-expressing pattern part was printed on one surface of the colored thermoplastic resin layer and the picture pattern layer was printed on the other surface. The infrared transmittance was measured using an ultraviolet-visible-near infrared spectrophotometer (UV-3600, manufactured by Shimadzu Corporation). The infrared transmittance of light having a wavelength of 800 nm, 2,000 nm, and 2,500 nm was measured for each of the decorative sheets of Examples 4-1 and 4-2 and Comparative Examples 4-1 and 4-2.

### (Measurement of glossiness)

In a stage in which the embossed part was formed, a 85° glossiness was measured, and the glossiness of the region of the surface protective layer overlapping the gloss matte-expressing pattern part in a plan view and the glossiness of the region not overlapping the gloss matte-expressing pattern part in a plan view were measured. The 85° glossiness was measured using a specular gloss meter (micro-TRI-gloss manufactured by BYK) .

### (Gloss matte (GM) design properties)

A difference in glossiness between the glossiness of the region of the surface protective layer overlapping the gloss matte-expressing pattern part in a plan view and the glossiness of the region not overlapping the gloss matte-expressing pattern part in a plan view was evaluated based on whether or not it was larger than "3" for which the gloss matte expression was possible.

⊚: the difference in glossiness was larger than "3", and the gloss matte was stably exhibited even in consideration of the variation in the production.
∘: the difference in glossiness was larger than "3", and the gloss matte was visible.
△: the difference in glossiness was smaller than "3", but the gloss matte expression was visible.
×: the gloss matte expression was not visible.

The measurement results and the evaluation results are shown in Table 4.

**[Table 4]**

| | | Ex. 4-1 | Ex. 4-2 | Ex. 4-3 | Ex. 4-4 | Ex. 4-5 | Ex. 4-6 | Comp. Ex. 4-1 | Comp. Ex. 4-2 |
|---|---|---|---|---|---|---|---|---|---|
| Infrared transmittance (%) | 800 nm | 1.41 | 1.41 | 1.41 | 1.41 | 1.41 | 1.41 | 22.06 | 22.06 |
| | 2000 nm | 16.48 | 16.48 | 16.48 | 16.48 | 16.48 | 16.48 | 64.49 | 64.49 |
| | 2500 nm | 23.59 | 23.59 | 23.59 | 23.59 | 23.59 | 23.59 | 71.81 | 71.81 |
| Irradiation wavelength | | 800 nm to 2500 nm | 800 nm to 1 mm | 800 nm to 2500 nm | 800 nm to 2500 nm | 800 nm to 2500 nm | 800 nm to 2500 nm | 800 nm to 2500 nm | 800 nm to 1 mm |
| Glossiness*¹ | | 5.5 | 7.2 | 5.5 | 5.5 | 5.5 | 5.5 | 16.4 | 16.4 |
| Difference in glossiness*² | | 10.8 | 9.0 | 10.8 | 10.8 | 10.8 | 10.8 | 0.0 | 0.0 |
| GM design properties | | ⊚ | ○ | ⊚ | ⊚ | ⊚ | ⊚ | × | × |

| | | | | | | | | | |
|---|---|---|---|---|---|---|---|---|---|
| *1 Glossiness of the region of the surface protective layer that overlaps with the gloss matte-expressing pattern part *2 Difference in glossiness between the surface protective layer in the region overlapping the gloss matte-expressing pattern part and the region not overlapping the gloss matte-expressing pattern part | | | | | | | | | |

As shown in Table 4, when the black ink having a characteristic of absorbing light having a wavelength in a range of 800 nm or more and 2,500 nm or less more strongly than light having other wavelengths was used as the infrared absorption material (Examples 4-1 and 4-2), it was found that the infrared transmittance with respect to light having a wavelength of 2,500 nm was 23.6%, the infrared transmittance with respect to light having a wavelength of 2,000 nm was 16.5%, and the infrared transmittance with respect to light having a wavelength of 800 nm was 1.4%, and thus favorable gloss matte design properties could be obtained. In addition, it was found that the difference in glossiness was larger when the irradiation wavelength was 800 nm to 2,500 nm than when the irradiation wavelength was 800 nm to 1 mm over the entire range of infrared light. Similarly, in any case of using each of tin-doped indium oxide, antimony-doped tin oxide, lanthanum hexaboride, and cesium-doped tungsten oxide as the infrared absorption material having a characteristic of absorbing light having a wavelength in a range of 800 nm or more and 2,500 nm or less more strongly than light having other wavelengths (Examples 3 to 6), it was found that the same results as in Example 1 could be obtained, and the favorable gloss matte design properties could be obtained.

On the other hand, when an ink having a higher infrared transmittance than the black ink was used (Comparative Examples 4-1 and 4-2), it was found that the infrared transmittance with respect to light having a wavelength of 2,500 nm was 71.8%, the infrared transmittance with respect to light having a wavelength of 2,000 nm was 64.5%, and the infrared transmittance with respect to light having a wavelength of 800 nm was 22.1%, and the difference in glossiness was not sufficient even when the infrared transmittance was larger than in Examples 4-1 and 4-2 and the irradiation wavelength was 800 nm to 2,500 nm, and the gloss matte expression was not obtained in any of Comparative Examples 4-1 and 4-2.

### Reference Signs List

- 1:: decorative sheet
- 2:: colored thermoplastic resin layer
- 3:: gloss matte-expressing pattern part
- 5:: picture pattern layer
- 6:: transparent thermoplastic resin layer
- 7:: surface protective layer
- 7a:: embossed part
- 8:: primer layer
- 8a:: pattern layer
- 10:: decorative member
- 101:: colored thermoplastic resin layer
- 102:: picture pattern layer
- 103:: transparent thermoplastic resin layer
- 104:: surface protective layer
- 104a:: embossed part
- 105:: gloss matte-expressing pattern part
- 106:: primer layer
- 110:: decorative sheet
- 120:: decorative member
- 121:: substrate
- 201:: decorative sheet
- 202:: colored thermoplastic resin layer
- 203:: gloss matte-expressing pattern part
- 205:: picture pattern layer
- 206:: transparent thermoplastic resin layer
- 207:: surface protective layer
- 207a:: embossed part
- 207b:: non-embossed region
- 208:: primer layer
- 208a:: pattern layer
- 301:: decorative sheet
- 302:: colored thermoplastic resin layer
- 303:: picture pattern layer
- 304:: transparent thermoplastic resin layer
- 305:: surface protective layer
- 306:: gloss matte-expressing pattern part
- 307:: primer layer
- 309:: substrate
- 310:: decorative member

## Claims

1. A method for producing a decorative sheet having an embossed shape in register with a picture pattern, the method comprising:
depositing, on one surface of a colored resin layer, a picture pattern layer having the picture pattern, a transparent resin layer containing a nano-sized nucleating agent, and a surface protective layer in this order;
forming a pattern layer using a colorless or light-colored ink and a material having light absorptivity with respect to light having a predetermined wavelength, which is higher than light absorptivity of the colored resin layer, by disposing, on the other surface of the colored resin layer, a region having light absorptivity in a state of being in register with the picture pattern;
performing irradiation with irradiation light in which a power of light having the predetermined wavelength is larger than a power of light having other wavelengths, after forming the pattern layer; and
pressing the surface protective layer with an embossing plate for forming the embossed shape, after performing the irradiation with the irradiation light.

2. The method for producing a decorative sheet according to claim 1, wherein the material having light absorptivity is a material having light absorptivity with respect to infrared rays.

3. The method for producing a decorative sheet according to claim 1 or 2, wherein the material having light absorptivity is at least one inorganic material of tin-doped indium oxide, antimony-doped tin oxide, lanthanum hexaboride, and cesium-doped tungsten oxide.

4. The method for producing a decorative sheet according to claim 3, wherein the transparent resin layer is formed by using a crystalline polypropylene resin to which the nano-sized nucleating agent is added.

5. A decorative sheet comprising:
a colored resin layer;
a picture pattern layer;
a transparent resin layer;
a surface protective layer; and
a pattern layer,
wherein the picture pattern layer, the transparent resin layer, and the surface protective layer are deposited on one surface of the colored resin layer in this order,
the pattern layer is deposited on the other surface of the colored resin layer, and is disposed to have a region having light absorptivity with respect to light having a predetermined wavelength, which is higher than light absorptivity of the colored resin layer, in a state of being in register with a picture pattern of the picture pattern layer,
the transparent resin layer contains a nano-sized nucleating agent,
the region having light absorptivity is formed from a material that contains a colorless or light-colored ink and a material having light absorptivity, and
an embossed part is formed in the surface protective layer at a position overlapping the region having light absorptivity in a plan view.

6. The decorative sheet according to claim 5, wherein the transparent resin layer contains a crystalline polypropylene resin and the nano-sized nucleating agent.

7. A decorative member comprising:
a substrate; and
the decorative sheet according to claim 5 or 6, which is provided on at least one surface side of the substrate,
wherein the substrate is any one of a wooden substrate, a resin substrate, a non-combustible substrate, or a metal substrate.

8. A decorative sheet comprising:
a colored resin layer;
a picture pattern layer;
a transparent resin layer;
a surface protective layer; and
a gloss matte-expressing pattern part,
wherein the picture pattern layer, the transparent resin layer, and the surface protective layer are deposited on one surface of the colored resin layer in this order,
the gloss matte-expressing pattern part is disposed on a surface of the surface protective layer opposite to the transparent resin layer in a state of being in register with a picture pattern of the picture pattern layer, and consists of a predetermined material having light absorptivity with respect to light having a predetermined wavelength, which is higher than light absorptivity of the surface protective layer, and
an embossed part is formed in the surface protective layer at a portion overlapping the gloss matte-expressing pattern part.

9. The decorative sheet according to claim 8, wherein the predetermined material is colorless or light-colored.

10. A method for producing a decorative sheet, the method comprising:
depositing a transparent resin layer and a surface protective layer;
printing a picture pattern layer on a surface of the transparent resin layer opposite to the surface protective layer, and printing, on a surface of the surface protective layer opposite to the transparent resin layer, a gloss matte-expressing pattern part in a state of being in register with a picture pattern of the picture pattern layer, the gloss matte-expressing pattern part consisting of a predetermined material having light absorptivity with respect to light having a predetermined wavelength, which is higher than light absorptivity of the surface protective layer;
forming a colored resin layer on a surface of the picture pattern layer opposite to the transparent resin layer;
irradiating the surface of the surface protective layer including the gloss matte-expressing pattern part with irradiation light in which a power of light having the predetermined wavelength is larger than a power of light having other wavelengths; and
pressing the surface of the surface protective layer including the gloss matte-expressing pattern part with an embossing plate, after irradiating the surface of the surface protective layer including the gloss matte-expressing pattern part with the irradiation light,
wherein the printing is performed by a double-sided printing machine to print the picture pattern layer and the gloss matte-expressing pattern part in a state in which the picture pattern of the picture pattern layer is in register with the gloss matte-expressing pattern part.

11. A decorative sheet having an uneven shape on an outermost layer, and exhibiting a gloss matte expression by using a region where the uneven shape is formed in the outermost layer and a region where the uneven shape is not formed in the outermost layer, wherein a difference value ΔGM(Sa) of an arithmetic mean height Sa between the region where the uneven shape is formed and the region where the uneven shape is not formed satisfies ΔGM(Sa) ≥ 1.6, and a difference value ΔGM(Sz) of a maximum height Sz between the regions satisfies ΔGM(Sz) ≥ 5.4.

12. The decorative sheet according to claim 11, comprising:
a colored resin layer;
a picture pattern layer;
a transparent resin layer;
a surface protective layer as the outermost layer; and
a pattern layer,
wherein the picture pattern layer, the transparent resin layer, and the surface protective layer are deposited on one surface of the colored resin layer in this order,
the pattern layer is deposited on the other surface of the colored resin layer, and is disposed with a predetermined material having light absorptivity with respect to light having a predetermined wavelength, which is higher than light absorptivity of the colored resin layer, in a state of being in register with a picture pattern of the picture pattern layer, and
the uneven shape is formed in the surface protective layer at a position overlapping with a portion formed from the predetermined material in a plan view.

13. A method for producing a decorative sheet that has, on an outermost layer, an uneven shape in register with a picture pattern layer, and exhibits a gloss matte expression by using a region where the uneven shape is formed in the outermost layer and a region where the uneven shape is not formed in the outermost layer, the method comprising:
depositing, on one surface of a colored resin layer, the picture pattern layer, a transparent resin layer, and a surface protective layer as the outermost layer in this order,
forming, on the other surface of the colored resin layer, a pattern layer using a predetermined material having light absorptivity with respect to light having a predetermined wavelength, which is higher than light absorptivity of the colored resin layer, in a state of being in register with a picture pattern of the picture pattern layer, and
performing irradiation with irradiation light in which a power of light having the predetermined wavelength is larger than a power of light having other wavelengths, and then pressing the surface protective layer with an embossing plate to form the uneven shape; and
determining an image density of the predetermined material in accordance with a degree of a target gloss matte expression.

14. The method for producing a decorative sheet according to claim 13, wherein the image density is higher as the degree of the target gloss matte expression is stronger.

15. The method for producing a decorative sheet according to claim 13 or 14, wherein a region where the uneven shape is formed and a region where the uneven shape is not formed are formed in a state in which a difference value ΔGM(Sa) of an arithmetic mean height Sa between the regions satisfies ΔGM(Sa) ≥ 1.6 and a difference value ΔGM(Sz) of a maximum height Sz between the regions satisfies ΔGM(Sz) ≥ 5.4.

16. An ink for forming a gloss matte-expressing pattern part, which is used in a method for producing a decorative sheet, the method including depositing a colored resin layer, a picture pattern layer, a transparent resin layer, and a surface protective layer in this order, forming, on the other surface of the colored resin layer, a gloss matte-expressing pattern part at a position in register with a picture pattern of the picture pattern layer, performing irradiation with light having a wavelength in a range of 800 nm or more and 2,500 nm or less, in which a power of the light is larger than a power of light having other wavelengths, after depositing and forming the gloss matte-expressing pattern part, and pressing the surface protective layer with an embossing plate to form an embossed part after performing the irradiation with the light,
wherein the ink has a characteristic of absorbing the light having a wavelength in a range of 800 nm or more and 2,500 nm or less more strongly than the light having other wavelengths.

17. The ink for forming a gloss matte-expressing pattern part according to claim 16, the ink comprising:
a black ink containing carbon black.

18. The ink for forming a gloss matte-expressing pattern part according to claim 16, the ink comprising:
at least one inorganic material of tin-doped indium oxide, antimony-doped tin oxide, lanthanum hexaboride, and cesium-doped tungsten oxide.

19. A method for producing a decorative sheet, the method comprising:
depositing a colored resin layer, a picture pattern layer, a transparent resin layer, and a surface protective layer in this order;
forming, on the other surface of the colored resin layer, a gloss matte-expressing pattern part at a position in register with a picture pattern of the picture pattern layer using a material having a characteristic of absorbing light having a wavelength in a range of 800 nm or more and 2,500 nm or less more strongly than light having other wavelengths;
performing irradiation with the light having a wavelength in a range of 800 nm or more and 2,500 nm or less, in which a power of the light is larger than a power of the light having other wavelengths, after depositing and forming the gloss matte-expressing pattern part; and
pressing the surface protective layer with an embossing plate to form an embossed part after performing the irradiation with the light.
